# EUROPEAN PATENT APPLICATION

(11) **EP 4 207 837 A1**
(43) Date of publication of application: **05.07.2023**
(21) Application number: 21874187.4
(22) Date of filing: 03.09.2021
(51) Int. Cl.: H04W 4/80, H04R 1/10, H04W 76/10

(54) **BLUETOOTH SYSTEM, BLUETOOTH HEADSET, AND PASSWORD AUTHENTICATION METHOD**

(30) Priority: 30.09.2020 CN 202011063418
(71) Applicant: Huawei Technologies Co., Ltd., Shenzhen, Guangdong 518129 (CN)
(72) Inventor: NI, Guanjun, Shenzhen, Guangdong 518129 (CN); ZHU, Yuhong, Shenzhen, Guangdong 518129 (CN); SU, Jiongjin, Shenzhen, Guangdong 518129 (CN)
(74) Representative: Pfenning, Meinig & Partner mbB
(86) International application number: PCT/CN2021/116529
(87) International publication number: WO 2022/068526

(57) **Abstract**

This application provides a Bluetooth system, a Bluetooth headset, and a password verification method. The Bluetooth system includes a first electronic device and the Bluetooth headset. The Bluetooth headset is configured to: receive a first operation of a user, and enable a Bluetooth function of the Bluetooth headset; and send a broadcast message, where the broadcast message includes identification information of the Bluetooth headset. The first electronic device is configured to: display a first prompt box when detecting that signal quality of the broadcast message is greater than a preset value, where the first prompt box includes a first option, and the first option is used to prompt the user to connect the Bluetooth headset; and further display a second prompt box after being connected to the Bluetooth headset, where the second prompt box includes a second option, and the second option is used to prompt the user to set a password for the Bluetooth headset, so that the Bluetooth headset enables a password verification function. The technical solution provided in embodiments of this application can avoid, to some extent, a case in which the Bluetooth headset is used by another person at will after the Bluetooth headset is lost or obtained by the another person, and can ensure security and privacy of the Bluetooth headset.

## Description

This application claims priority to Chinese Patent Application No. 202011063418.9, filed with the China National Intellectual Property Administration on September 30, 2020 and entitled "BLUETOOTH SYSTEM, BLUETOOTH HEADSET, AND PASSWORD VERIFICATION METHOD", which is incorporated herein by reference in its entirety.

### TECHNICAL FIELD

This application relates to the field of Bluetooth technologies, and in particular, to a Bluetooth system, a Bluetooth headset, and a password verification method.

### BACKGROUND

After a Bluetooth headset establishes a Bluetooth connection to an electronic device (for example, a mobile phone), the Bluetooth headset can assist the electronic device in performing a specific function, for example, assist the electronic device in performing a voice call or audio playing. Currently, the Bluetooth headset generally has no capability for verifying use permission of the electronic device. Any electronic device can use all functions of the Bluetooth headset after establishing a Bluetooth connection to the Bluetooth headset. It may be understood that the Bluetooth headset may be used by another person at will after the Bluetooth headset is lost or obtained by the another person, and security and privacy of the Bluetooth headset cannot be ensured.

### SUMMARY

This application provides a Bluetooth system, a Bluetooth headset, and a password verification method, to resolve, to some extent, a problem that security and privacy of a Bluetooth headset cannot be ensured in the conventional technology.

According to a first aspect, this application provides a Bluetooth system, including a first electronic device and a Bluetooth headset.

The Bluetooth headset is configured to: receive a first operation of a user, and enable a Bluetooth function of the Bluetooth headset; and send a broadcast message, where the broadcast message includes identifier information of the Bluetooth headset.

The first electronic device is configured to: display a first prompt box when detecting that signal quality of the broadcast message is greater than a preset value, where the first prompt box includes a first option, and the first option is used to prompt the user to connect the Bluetooth headset; and further display a second prompt box after being connected to the Bluetooth headset, where the second prompt box includes a second option, and the second option is used to prompt the user to set a password for the Bluetooth headset.

After the first electronic device completes password setting for the Bluetooth headset, the Bluetooth headset enables a password verification function. The password verification function means that password verification needs to be performed after the Bluetooth headset establishes a Bluetooth connection to another electronic device, and all functions of the Bluetooth headset are available after verification succeeds, or some functions of the Bluetooth headset are unavailable after verification fails.

In the Bluetooth system provided in this embodiment, after establishing a Bluetooth connection to the Bluetooth headset, the first electronic device prompts and guides, in a pop-up prompt manner, the user to set the password for the Bluetooth headset, so as to enable the password verification function of the Bluetooth headset. After the password verification function is enabled, after another electronic device (for example, an untrusted second electronic device) establishes a Bluetooth connection to the Bluetooth headset, the another electronic device needs password verification to normally use the Bluetooth headset. Therefore, the Bluetooth system provided in this embodiment can avoid, to some extent, a case in which the Bluetooth headset is used by another person at will after the Bluetooth headset is lost or obtained by the another person, and can ensure security and privacy of the Bluetooth headset.

In some embodiments, the second option is used to prompt the user to set, for the Bluetooth headset, a password that is to be input on an electronic device side.

The first electronic device is further configured to send a first encryption instruction to the Bluetooth headset in response to an operation performed by the user on the second option. The first encryption instruction includes a password input by the user.

The Bluetooth headset is further configured to enable the password verification function in response to the first encryption instruction based on the password.

In the Bluetooth system provided in this embodiment, the first electronic device prompts and guides, in a pop-up prompt manner, the user to set, for the Bluetooth headset, the password that is to be input on the electronic device side. After the Bluetooth headset enables the password verification function, password verification of another electronic device is performed on the electronic device side. This facilitates a user operation.

In some embodiments, the second option is used to prompt the user to set, for the Bluetooth headset, a password that is to be input on a Bluetooth headset side.

The first electronic device is further configured to send a second encryption instruction to the Bluetooth headset in response to an operation performed by the user on the second option.

The Bluetooth headset is further configured to collect, in response to the second encryption instruction, a password input by the user, and enable the password verification function based on the password.

In the Bluetooth system provided in this embodiment, the first electronic device prompts and guides, in a pop-up prompt manner, the user to set, for the Bluetooth headset, the password that is to be input on the Bluetooth headset side. After the Bluetooth headset enables the password verification function, even if another electronic device has no password verification function, the Bluetooth headset can independently perform password verification, thereby further ensuring security and privacy of the Bluetooth headset.

In some embodiments, the first electronic device is further configured to display a third prompt box after completing password setting for the Bluetooth headset. The third prompt box includes a third option, and the third option is used to prompt the user to set, as a trusted device, an electronic device already paired with the Bluetooth headset. The trusted device does not need password verification after establishing a Bluetooth connection to the Bluetooth headset.

In the Bluetooth system provided in this embodiment, the first electronic device can prompt and guide the user to set the another electronic device already paired with the Bluetooth headset as the trusted device. After the setting succeeds, after establishing a connection to the Bluetooth headset, the paired electronic device can normally use the Bluetooth headset without password verification. This facilitates a user operation.

In some embodiments, the system further includes a second electronic device. The second electronic device is an untrusted device of the Bluetooth headset. The second electronic device is configured to display a fourth prompt box after establishing a Bluetooth connection to the Bluetooth headset. The fourth prompt box includes a fourth option, and the fourth option is used to prompt the user to perform password verification.

In this embodiment, the second electronic device can normally use the Bluetooth headset only after password verification succeeds. This ensures security and privacy of the Bluetooth headset to some extent.

In some embodiments, the second electronic device is further configured to display owner information when a quantity of password verification failures is greater than a preset value. The owner information includes an owner contact method.

In this embodiment, when the quantity of password verification failures is greater than the preset value, it indicates that a current user of the Bluetooth headset may not be an owner of the headset. In this case, the Bluetooth headset controls the first electronic device to display the preset owner information, so that the user returns the Bluetooth headset to the owner. This increases a possibility that the Bluetooth headset is returned after being lost.

In some embodiments, the Bluetooth headset is further configured to play owner information when a quantity of password verification failures is greater than a preset value. The owner information includes an owner contact method.

In this embodiment, when the quantity of password verification failures is greater than the preset value, it indicates that a current user of the Bluetooth headset may not be an owner of the headset. In this case, the Bluetooth headset plays the preset owner information, so that the user returns the Bluetooth headset to the owner. This increases a possibility that the Bluetooth headset is returned after being lost.

In some embodiments, when the second electronic device has no encryption capability, the Bluetooth headset collects a verification password input by the user, and performs password verification based on the verification password.

In this embodiment, after the Bluetooth headset enables the password verification function, even if the second electronic device has no password verification function, the Bluetooth headset can independently perform password verification, thereby further ensuring security and privacy of the Bluetooth headset.

In some embodiments, the password or the verification password is characters or biometric feature information of the user, and the biometric feature information includes fingerprint information, face information, iris information, a bone voiceprint, ear canal feature information, or voice information.

In some embodiments, the first electronic device is a mobile phone.

According to a second aspect, this application provides a Bluetooth system, including a first electronic device and a Bluetooth headset.

The first electronic device is configured to receive a second operation of a user, and send a first setting instruction to the Bluetooth headset.

The Bluetooth headset is configured to set, as a trusted device in response to the first setting instruction, another electronic device already paired with the Bluetooth headset.

After the Bluetooth headset enables a password verification function, the trusted device does not need password verification after establishing a Bluetooth connection to the Bluetooth headset. The password verification function means that password verification needs to be performed after the Bluetooth headset establishes a Bluetooth connection to an electronic device, and all functions of the Bluetooth headset are available after verification succeeds, or some functions of the Bluetooth headset are unavailable after verification fails.

In the Bluetooth system provided in this embodiment, the first electronic device can prompt and guide the user to set the another electronic device already paired with the Bluetooth headset as the trusted device. After the setting succeeds, after establishing a connection to the Bluetooth headset, the paired electronic device can normally use the Bluetooth headset without password verification. This facilitates a user operation.

In some embodiments, the first electronic device is further configured to:
display a third prompt box after completing password setting for the Bluetooth headset, where the third prompt box includes a third option, and the third option is used to prompt the user to set, as trusted devices, all electronic devices already paired with the Bluetooth headset; and
send the first setting instruction to the Bluetooth headset in response to an operation performed by the user on the third option, where the first setting instruction is used to instruct the Bluetooth headset to set all other paired electronic devices as trusted devices.

In this embodiment, the first electronic device prompts and guides, in a pop-up prompt manner, the user to set all the electronic devices already paired with the Bluetooth headset as trusted devices. This provides comparatively good user experience.

In some embodiments, the first electronic device is further configured to:
display a trusted device setting interface, where the trusted device setting interface includes a setting option of a second electronic device already paired with the Bluetooth headset, and the setting option is used to set whether the second electronic device is a trusted device; and
send the first setting instruction to the Bluetooth headset in response to an operation performed by the user on the setting option.

The Bluetooth headset is further configured to set the second electronic device as a trusted device in response to the first setting instruction.

In some embodiments, the first electronic device is further configured to send a second setting instruction to the Bluetooth headset in response to an operation performed by the user on the setting option.

The Bluetooth headset is further configured to set the second electronic device as an untrusted device in response to the second setting instruction. When the Bluetooth headset enables the password verification function, the untrusted device needs password verification after establishing a Bluetooth connection to the Bluetooth headset.

In the foregoing embodiment, the user may choose, in the trusted device setting interface, to change whether a target electronic device is a trusted device. This helps the user flexibly adjust a trusted device range of the Bluetooth headset.

According to a third aspect, this application provides a Bluetooth headset. The Bluetooth headset is connected to a second electronic device by using Bluetooth. The Bluetooth headset has enabled a password verification function. The second electronic device is an untrusted device of the Bluetooth headset. The password verification function means that password verification needs to be performed after the Bluetooth headset establishes a Bluetooth connection to an untrusted electronic device, and all functions of the Bluetooth headset are available after verification succeeds, or some functions of the Bluetooth headset are unavailable after verification fails.

The Bluetooth headset is configured to: play a password verification prompt speech when the second electronic device has no function of performing password verification on the Bluetooth headset, where the password verification prompt speech is used to prompt a user to input a password on a Bluetooth headset side; collect a verification password input by the user; and when the verification password is correct, confirm that password verification succeeds.

For the Bluetooth headset provided in this embodiment, even if an electronic device connected to the Bluetooth headset has no password verification function, the Bluetooth headset can independently perform password verification, thereby further ensuring security and privacy of the Bluetooth headset.

In some embodiments, the verification password is a speech or a bone voiceprint.

In some embodiments, the Bluetooth headset is further configured to play owner information when detecting that a quantity of password verification failures is greater than a preset value. The owner information includes an owner contact method.

In this embodiment, when the quantity of password verification failures is greater than the preset value, it indicates that a current user of the Bluetooth headset may not be an owner of the headset. In this case, the Bluetooth headset plays the preset owner information, so that the user returns the Bluetooth headset to the owner. This increases a possibility that the Bluetooth headset is returned after being lost.

According to a fourth aspect, this application provides a password verification method, applied to a Bluetooth headset. The Bluetooth headset is connected to a second electronic device by using Bluetooth. The Bluetooth headset has enabled a password verification function. The second electronic device is an untrusted device of the Bluetooth headset. The password verification function means that password verification needs to be performed after the Bluetooth headset establishes a Bluetooth connection to an untrusted electronic device, and all functions of the Bluetooth headset are available after verification succeeds, or some functions of the Bluetooth headset are unavailable after verification fails.

The method includes: playing, by the Bluetooth headset, a password verification prompt speech when the second electronic device has no function of performing password verification on the Bluetooth headset, where the password verification prompt speech is used to prompt a user to input a password on a Bluetooth headset side; collecting a verification password input by the user; and when the verification password is correct, confirming that password verification succeeds.

In some embodiments, the password is a speech or biometric feature information of the user, and the biometric feature information includes ear canal feature information or a bone voiceprint.

In some embodiments, owner information is played when it is detected that a quantity of password verification failures is greater than a preset value. The owner information includes an owner contact method.

According to a fifth aspect, this application provides a computer-readable storage medium. The computer-readable storage medium stores a computer program. When the computer program is executed by a processor, the password verification method according to the fourth aspect is implemented.

According to a sixth aspect, this application provides a chip, applied to a Bluetooth headset. The chip includes a memory and a processor. The processor executes a computer program stored in the memory, to control the Bluetooth headset to perform the password verification method according to the fourth aspect.

It can be understood that, for beneficial effects of the fourth aspect to the sixth aspect, refer to related descriptions in the third aspect. Details are not described herein again.

### BRIEF DESCRIPTION OF DRAWINGS

FIG. 1 is a schematic diagram of a structure of a Bluetooth headset according to an embodiment of this application;
FIG. 2(a) and FIG. 2(b) are a schematic diagram of a Bluetooth device connection process according to an embodiment of this application;
FIG. 3 is a schematic diagram of a Bluetooth device connection process according to another embodiment of this application;
FIG. 4(a) to FIG. 4(e) are a schematic diagram of a Bluetooth device connection process according to still another embodiment of this application;
FIG. 5 is a schematic diagram of a Bluetooth device connection method according to an embodiment of this application;
FIG. 6 is a schematic diagram of an application scenario of a Bluetooth headset according to an embodiment of this application;
FIG. 7 is a schematic diagram of an application scenario of a Bluetooth headset according to another embodiment of this application;
FIG. 8(a) to FIG. 8(c) are a schematic diagram of a Bluetooth device encryption process according to an embodiment of this application;
FIG. 9(a) and FIG. 9(b) are a schematic diagram of a Bluetooth device encryption process according to another embodiment of this application;
FIG. 10(a) to FIG. 10(e) are a schematic diagram of a Bluetooth device connection process according to still another embodiment of this application;
FIG. 11 is a flowchart of Bluetooth device encryption according to an embodiment of this application;
FIG. 12 is a flowchart of Bluetooth device encryption according to another embodiment of this application;
FIG. 13(a) to FIG. 13(c) are a schematic diagram of a Bluetooth device encryption process according to still another embodiment of this application;
FIG. 14 is a schematic diagram of a Bluetooth device encryption process according to still another embodiment of this application;
FIG. 15(a) and FIG. 15(b) are a flowchart of Bluetooth device encryption according to still another embodiment of this application;
FIG. 16(a) to FIG. 16(c) are a schematic diagram of a Bluetooth device encryption process according to still another embodiment of this application;
FIG. 17 is a flowchart of Bluetooth device encryption according to another embodiment of this application;
FIG. 18 is a flowchart of Bluetooth device encryption according to still another embodiment of this application;
FIG. 19(a) to FIG. 19(c) are a schematic diagram of a password verification process according to an embodiment of this application;
FIG. 20 is a schematic diagram of a password verification process according to another embodiment of this application;
FIG. 21(a) to FIG. 21(c) are a schematic diagram of a password verification process according to still another embodiment of this application;
FIG. 22 is a flowchart of a password verification method according to an embodiment of this application;
FIG. 23(a) and FIG. 23(b) are a schematic diagram of a password verification process according to still another embodiment of this application;
FIG. 24 is a schematic diagram of a password verification process according to still another embodiment of this application;
FIG. 25 is a flowchart of a password verification method according to another embodiment of this application;
FIG. 26 is a flowchart of a password verification method according to still another embodiment of this application;
FIG. 27(a) to FIG. 27(e) are a schematic diagram of a password changing process of a Bluetooth device according to an embodiment of this application;
FIG. 28 is a flowchart of a password changing method of a Bluetooth device according to an embodiment of this application;
FIG. 29(a) to FIG. 29(c) are a schematic diagram of a password changing process of a Bluetooth headset according to another embodiment of this application;
FIG. 30 is a flowchart of a password changing method of a Bluetooth device according to another embodiment of this application;
FIG. 31(a) to FIG. 31(d) are a schematic diagram of a password cancellation process of a Bluetooth device according to an embodiment of this application;
FIG. 32 is a flowchart of a password cancellation method of a Bluetooth device according to an embodiment of this application;
FIG. 33(a) to FIG. 33(d) are a schematic diagram of a password cancellation process of a Bluetooth device according to another embodiment of this application;
FIG. 34 is a flowchart of a password cancellation method of a Bluetooth device according to another embodiment of this application;
FIG. 35(a) to FIG. 35(c) are a schematic diagram of an owner information setting process according to an embodiment of this application;
FIG. 36 is a schematic diagram of an owner information notification scenario according to an embodiment of this application;
FIG. 37 is a schematic diagram of an owner information notification scenario according to another embodiment of this application;
FIG. 38(a) and FIG. 38(b) are a schematic diagram of a trusted device setting process according to an embodiment of this application;
FIG. 39(a) to FIG. 39(e) are a schematic diagram of a trusted device setting process according to another embodiment of this application;
FIG. 40 is a flowchart of trusted device setting according to an embodiment of this application;
FIG. 41 is a schematic diagram of a structure of a Bluetooth device control system according to an embodiment of this application;
FIG. 42(a) to FIG. 42(h) are a schematic diagram of a Bluetooth device encryption process according to still another embodiment of this application;
FIG. 43(a) to FIG. 43(c) are a schematic diagram of a Bluetooth device encryption process according to still another embodiment of this application;
FIG. 44(a) to FIG. 44(d) are a schematic diagram of a password changing process of a Bluetooth device according to still another embodiment of this application;
FIG. 45(a) to FIG. 45(c) are a schematic diagram of a password changing process of a Bluetooth device according to still another embodiment of this application;
FIG. 46(a) to FIG. 46(e) are a schematic diagram of a password cancellation process of a Bluetooth device according to still another embodiment of this application;
FIG. 47(a) to FIG. 47(c) are a schematic diagram of a password cancellation process of a Bluetooth device according to still another embodiment of this application;
FIG. 48(a) and FIG. 48(b) are a schematic diagram of an owner information setting process according to another embodiment of this application;
FIG. 49(a) to FIG. 49(d) are a schematic diagram of a connected device management process of a Bluetooth device according to an embodiment of this application; and
FIG. 50(a) to FIG. 50(d) are a schematic diagram of a trusted device setting process according to another embodiment of this application.

### DESCRIPTION OF EMBODIMENTS

With development of Bluetooth technologies, Bluetooth devices are more widely used in life. In the embodiments, Bluetooth devices include electronic devices that can perform short-range wireless communication by using a Bluetooth technology, such as a mobile phone, a tablet computer, a notebook computer, a desktop computer, a personal digital assistant (personal digital assistant, PDA), a Bluetooth headset, a smartwatch, and a smart speaker. A specific type of the Bluetooth device is not limited in the embodiments.

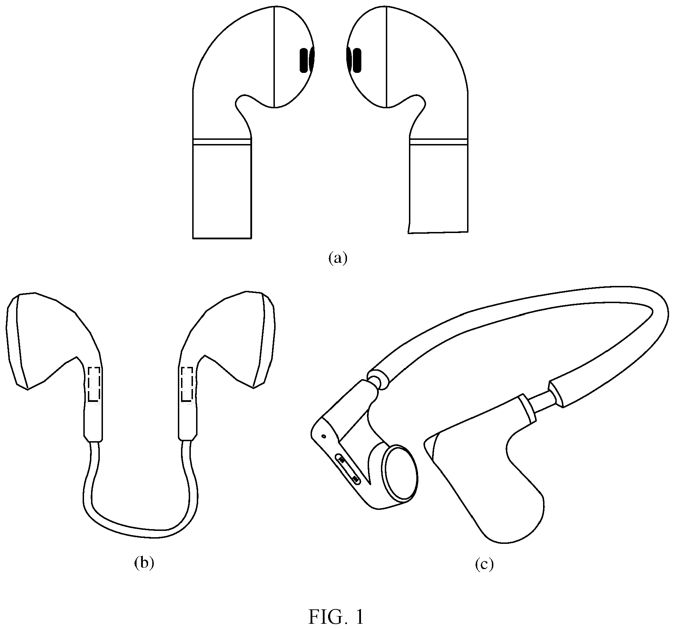

After establishing a Bluetooth connection, two Bluetooth devices can cooperate with each other in working. For example, after a mobile phone establishes a Bluetooth connection to a Bluetooth headset, the Bluetooth headset can assist the mobile phone in performing a voice call, audio playing, or the like. In the embodiments, the Bluetooth headset may be a true wireless stereo (true wireless stereo, TWS) headset (for example, a FreeBuds 3 Bluetooth headset shown in FIG. 1(a)), or may be a neck-mounted headset (for example, FIG. 1(b) or FIG. 1(c)). A specific type of the Bluetooth headset is not limited in the embodiments.

In the embodiments, two Bluetooth devices between which a Bluetooth connection is established are respectively referred to as a primary device and a secondary device. The primary device is usually a device that initiates a Bluetooth connection in response to a user operation, for example, a mobile phone, a tablet computer, a notebook computer, or a desktop computer. The secondary device is usually a connected Bluetooth device, for example, a Bluetooth headset, a smart speaker, or a smartwatch. For example, in a Bluetooth connection established between a mobile phone and a Bluetooth headset, the mobile phone is a primary device, and the Bluetooth headset is a secondary device.

A process of establishing a Bluetooth connection between a primary device and a secondary device is described below by using an example in which the primary device is a first electronic device (for example, a mobile phone A) and the secondary device is a Bluetooth headset (for example, FreeBuds 3).

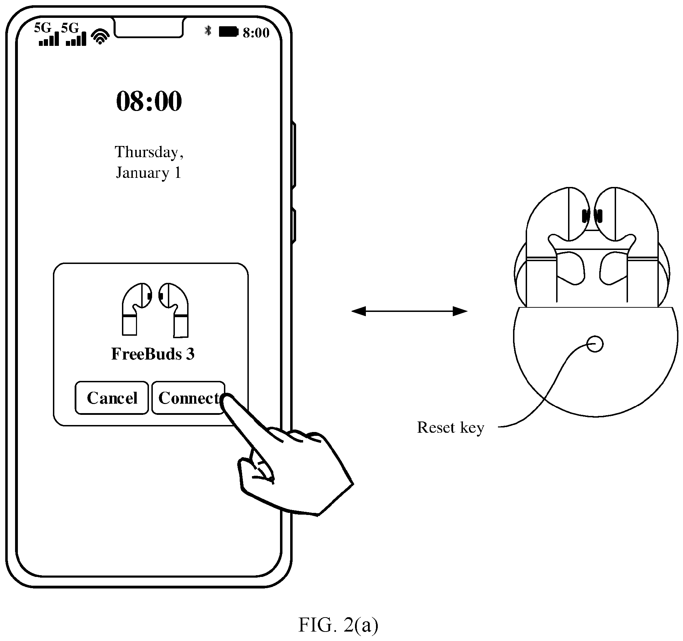

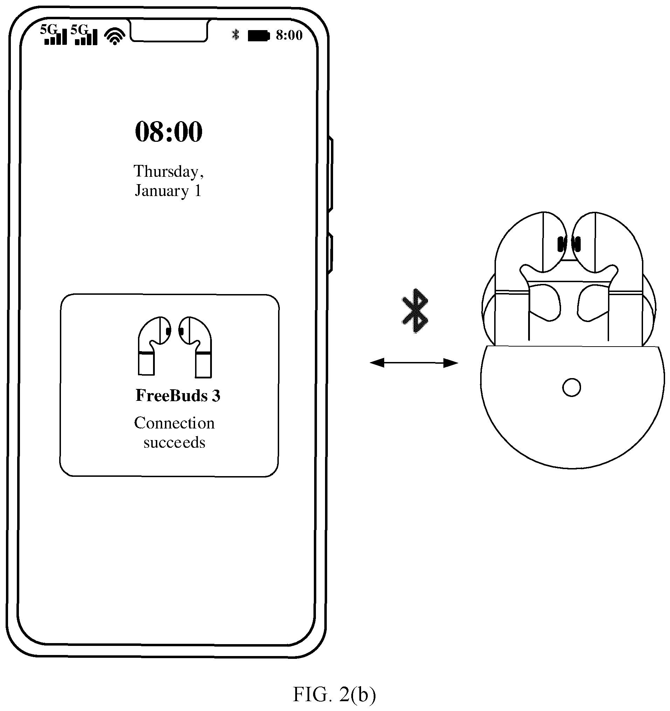

FIG. 2(a) and FIG. 2(b) are a schematic diagram of a Bluetooth device connection process according to an embodiment of this application, and relates to a process in which the mobile phone A establishes a Bluetooth connection to the Bluetooth headset by using an automatic pop-up box.

Refer to FIG. 2(a). After enabling a Bluetooth function based on a first operation (for example, an operation of opening an accommodation case of the Bluetooth headset) of a user, the Bluetooth headset enters a pairing mode and sends a broadcast message. The broadcast information includes identification information, for example, a headset address, of the Bluetooth headset. When the mobile phone A is connected to the Bluetooth headset for the first time, or the mobile phone A is connected to the Bluetooth headset for the first time after the mobile phone A deletes the Bluetooth headset from a paired device list, the mobile phone A displays, after obtaining the broadcast message through scanning, a first prompt box when detecting that signal quality of the broadcast message is greater than a preset value. For example, the first prompt box includes an icon of the Bluetooth headset, a name "FreeBuds 3", a "Cancel" option, and a first option (for example, a "Connect" option). After the mobile phone A detects that the user operates the "Connect" option, the mobile phone A starts to establish the Bluetooth connection to the Bluetooth headset.

It should be noted that, in this embodiment, that the user operates an option, an icon, or the like may be that the user taps, double-taps, touches and holds, or force-touches the option or the icon.

In addition, different Bluetooth headsets enter the pairing mode based on different first operations. For example, the FreeBuds 3 enters, within a specific time (for example, 30 seconds) after detecting that the headset accommodation case is opened, the pairing mode when a distance from the mobile phone is less than a preset distance, or enters the pairing mode after detecting that the user presses and holds (for example, for 2 seconds) a reset key on the headset accommodation case. Some other Bluetooth headsets may enter the pairing mode after detecting that the headset leaves the headset accommodation case, or enter the pairing mode after detecting that the user operates a pairing button, or an operation is performed on a Bluetooth application to control the Bluetooth headset to enter the pairing mode.

Refer to FIG. 2(b). After the Bluetooth connection between the mobile phone A and the Bluetooth headset is established, the mobile phone A may display another prompt box, to notify the user that the Bluetooth connection is successfully established. For example, the prompt box may include content such as an icon of the Bluetooth headset, a name (for example, FreeBuds 3) of the Bluetooth headset, and prompt information "Connection succeeds". In addition, the prompt box may further include a "Complete" option. After receiving an operation performed by the user on the "Complete" option, the mobile phone A may stop displaying the prompt box, and complete pairing.

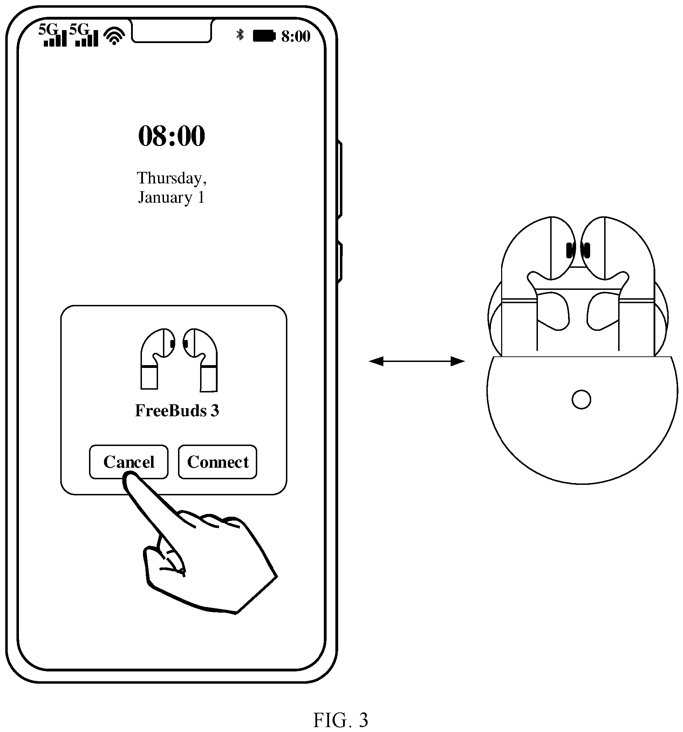

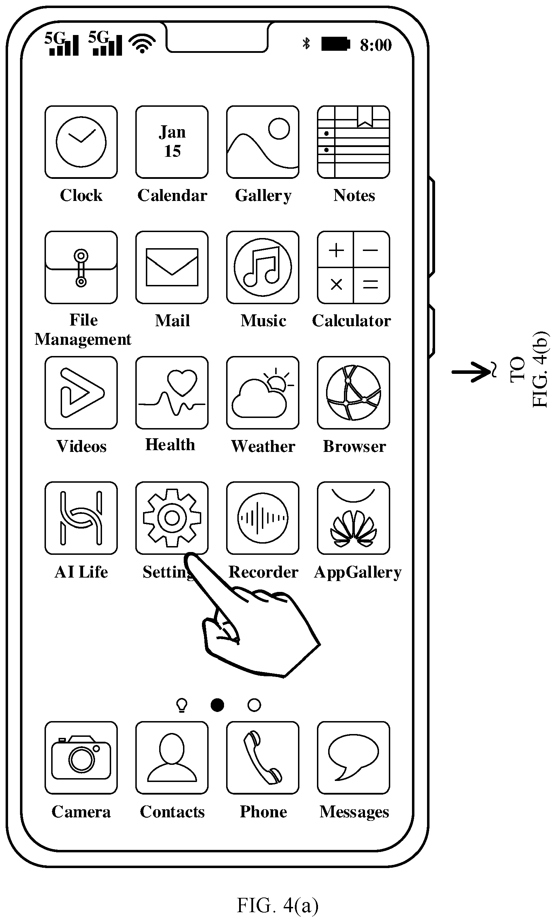

FIG. 3 is a schematic diagram of a Bluetooth device connection process according to another embodiment of this application. Refer to FIG. 3. After the mobile phone A detects that the user operates the "Cancel" option in the prompt box, the mobile phone A does not establish a Bluetooth connection to the Bluetooth headset this time. Subsequently, if the user needs to connect the mobile phone A to the Bluetooth headset, the user may reopen the accommodation case of the Bluetooth headset near the mobile phone A, and perform connection according to the Bluetooth connection process shown in FIG. 2(a) and FIG. 2(b). In addition, the user may alternatively reconnect the Bluetooth headset in a Bluetooth setting option of the mobile phone A, as shown in FIG. 4(a) to FIG. 4(e).

FIG. 4(a) to FIG. 4(e) are a schematic diagram of a Bluetooth device connection process according to still another embodiment of this application, and relates to a process in which the mobile phone A establishes a Bluetooth connection to the Bluetooth headset by using the Bluetooth setting option.

Refer to FIG. 4(a). Various application icons are displayed on a desktop of the mobile phone A, including a "Settings" icon. After the mobile phone A detects that the user operates the "Settings" icon, the mobile phone A displays a device setting interface.

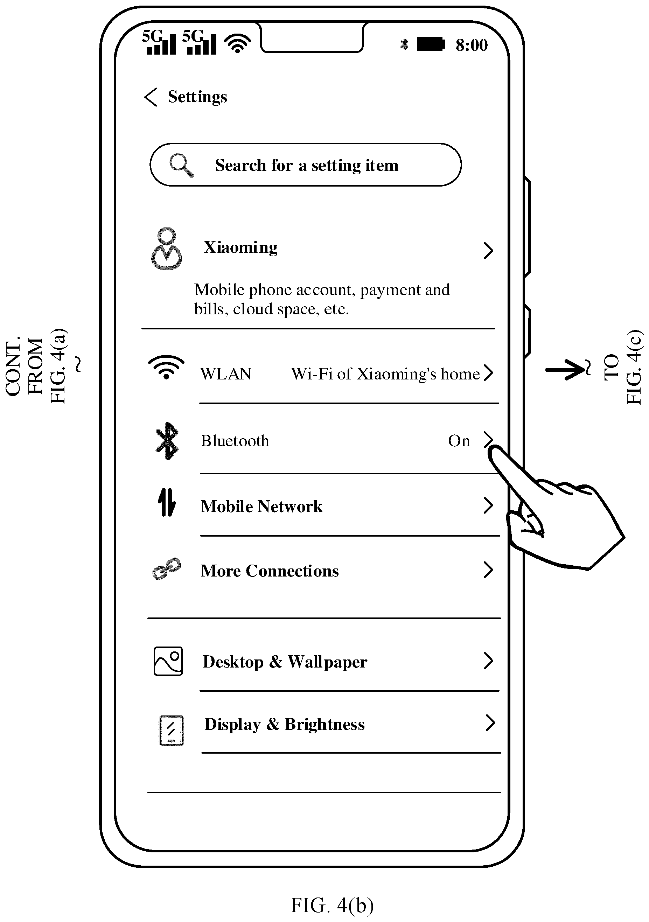

Refer to FIG. 4(b). The device setting interface may include content such as an "Account" setting option, a "Wireless Local Area Network (wireless local area network, WLAN)" setting option, a "Bluetooth" setting option, a "Mobile Network" setting option, a "Desktop & Wallpaper" setting option, and a "Display & Brightness" setting option. The mobile phone A displays a Bluetooth setting interface after detecting that the user operates the "Bluetooth" setting option.

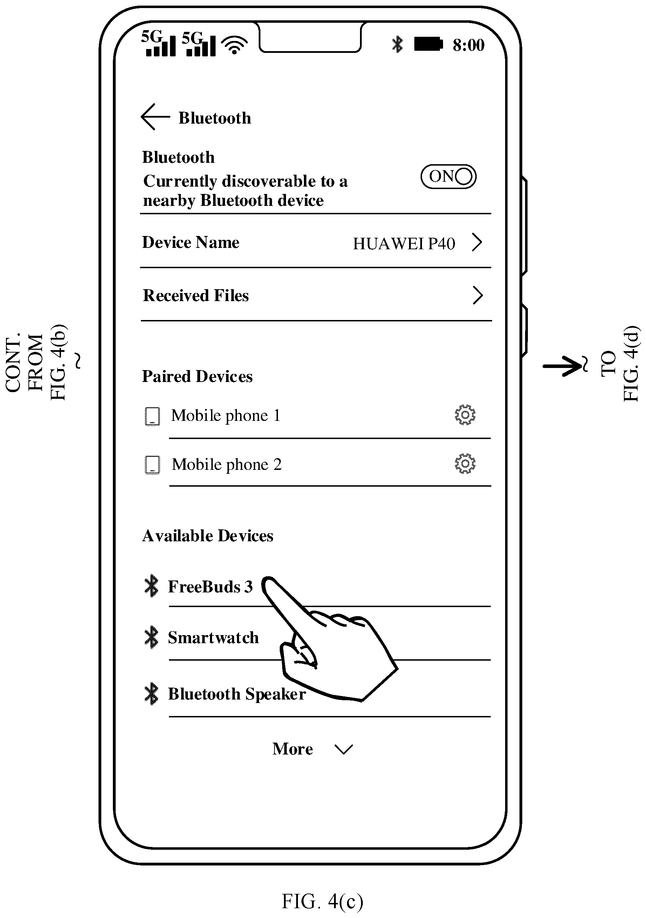

Refer to FIG. 4(c). The Bluetooth setting interface may include a Bluetooth enabling control icon, a name (for example, HUAWEI P40) of the mobile phone A, basic information of a Bluetooth device (that is, a paired device) (for example, a mobile phone 1 and a mobile phone 2) already paired with the mobile phone A, and basic information of a Bluetooth device (that is, an available device, such as FreeBuds 3, a smartwatch, and a Bluetooth speaker) that can be found by the mobile phone A but is not yet paired with the mobile phone A. For example, the basic information of the Bluetooth device may include a device name such as FreeBuds 3. After the mobile phone A detects that the user operates the device name "FreeBuds 3", the mobile phone A displays a prompt box.

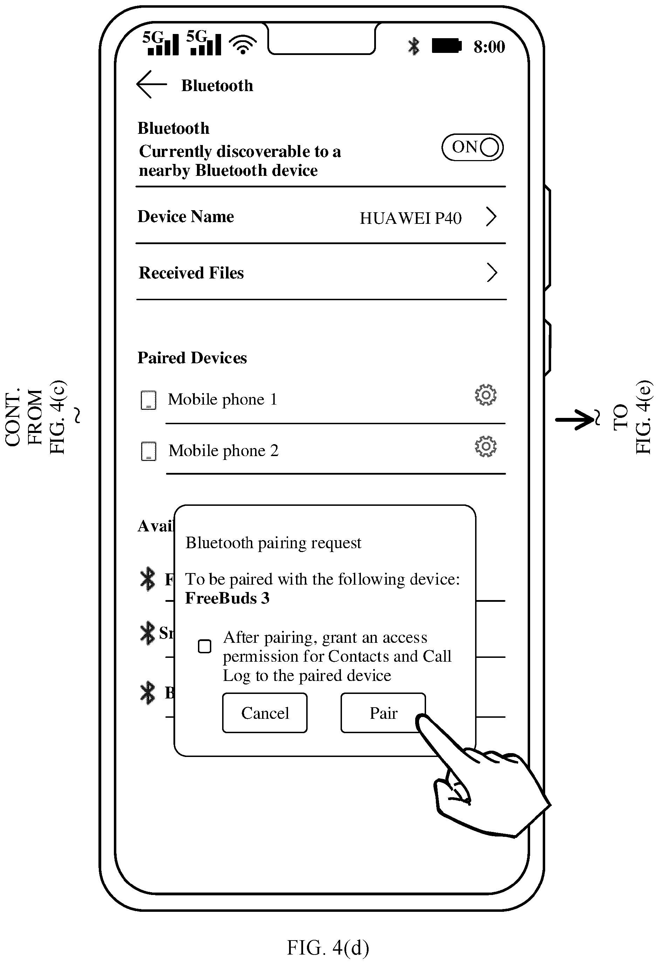

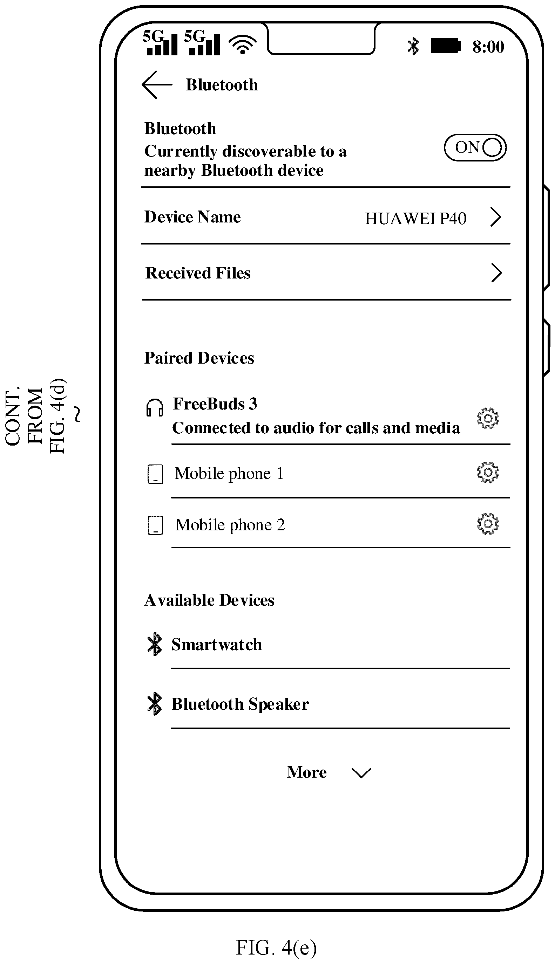

Refer to FIG. 4(d). The prompt box may include content such as the name "FreeBuds 3" of the Bluetooth headset, a "Cancel" option, and a "Pair" option. After the mobile phone A detects that the user operates the "Pair" option, the mobile phone A starts to establish the Bluetooth connection to the Bluetooth headset. After the Bluetooth connection succeeds, the mobile phone A sets the Bluetooth headset as a paired device, and displays, as shown in FIG. 4(e), basic information (for example, the name "FreeBuds 3") of the Bluetooth headset in a paired device list.

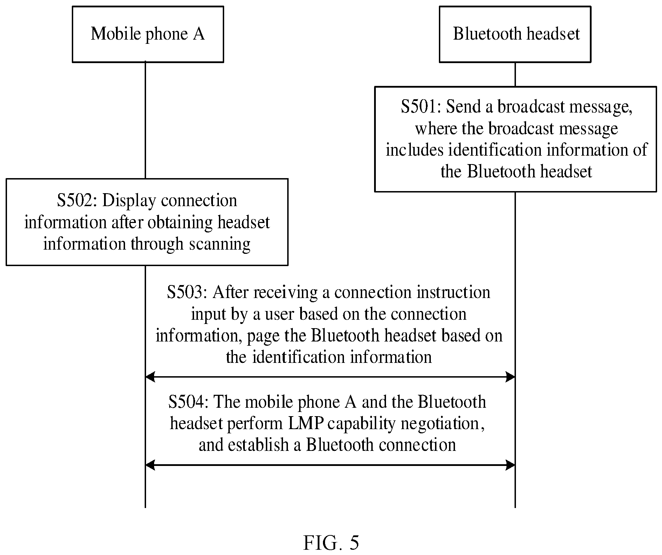

In the foregoing descriptions, for details about a Bluetooth connection establishment process, refer to FIG. 5. FIG. 5 is a schematic diagram of a Bluetooth device connection method according to an embodiment of this application.

S501: A Bluetooth headset sends a broadcast message, where the broadcast message includes identification information of the Bluetooth headset.

In this embodiment, the identification information of the Bluetooth headset includes information such as a headset model and a headset address.

Specifically, after entering a pairing mode, the Bluetooth headset starts to broadcast headset information. For a manner in which the Bluetooth headset enters the pairing mode, refer to the foregoing descriptions. Details are not described herein in this embodiment again.

S502: A mobile phone A displays connection information after obtaining the headset information through scanning.

In some embodiments, the mobile phone A displays the connection information when detecting that signal quality of the broadcast message is greater than a preset value. The connection information may be, for example, the prompt box shown in FIG. 2(a). The prompt box includes a first option (for example, a "Connect" option), and the first option is used to prompt a user to connect the Bluetooth headset. In some other embodiments, for example, as shown in FIG. 4(c), the connection information may be a headset name "FreeBuds 3" in an available device list in a Bluetooth setting interface.

S503: After receiving a connection instruction input by the user based on the connection information, the mobile phone A pages the Bluetooth headset based on the identification information.

In some embodiments, refer to FIG. 2(a). After the mobile phone A detects that the user operates the "Connect" option, the mobile phone A confirms that the connection instruction input by the user is received. Alternatively, refer to FIG. 4(c). After the mobile phone A detects that the user operates the headset name "FreeBuds 3", the mobile phone A confirms that the connection instruction input by the user is received. After receiving the connection instruction, the mobile phone A pages the Bluetooth headset by using the headset address.

Specifically, the mobile phone A serving as a primary device pages the Bluetooth headset based on the headset address in a frequency hopping manner. The Bluetooth headset scans external paging at a fixed carrier frequency interval, and responds after finding paging of the mobile phone A through scanning.

S504: The mobile phone A and the Bluetooth headset perform link management protocol capability negotiation, and establish a Bluetooth connection.

A physical link is established between the mobile phone A and the Bluetooth headset according to a link management protocol (link management Protocol, LMP). The physical link includes an asynchronous connectionless (asynchronous connectionless, ACL) link and a synchronous connection-oriented (synchronous connection-oriented link, SCO) link. The ACL link is mainly used for packet data transfer, and the SCO link is mainly used for synchronous voice transfer.

After the physical link is successfully established, the mobile phone A and the Bluetooth headset establish a channel link (channel link) according to a link control and adaptation protocol (logical link control and adaption protocol, L2CAP). After the channel link is established, the mobile phone A uses a session description protocol (session description protocol, SDP) to query a profile (Profile) supported by the Bluetooth headset, for example, an advanced audio distribution profile (advanced audio distribution profile, A2DP), a hands-free profile (hands-free profile, HFP), or an audio/video remote control profile (Audio/Video Remote Control Profile, AVRCP), so as to establish a corresponding application connection.

The A2DP protocol defines a protocol and process for transferring high-quality audio information such as mono or stereo audio information on an ACL link. For example, if the A2DP protocol is activated between the Bluetooth headset and the mobile phone A, the Bluetooth headset and the mobile phone A establish an A2DP connection. The mobile phone may transmit high-quality audio information to the Bluetooth headset through the ACL link based on the A2DP connection.

The HFP protocol defines a hands-free function protocol, and mainly defines implementation of some functions related to call answering/making. For example, if the HFP protocol is activated between the Bluetooth headset and the mobile phone A, the Bluetooth headset and the mobile phone A establish an HFP connection. The mobile phone A may transmit call audio information to the Bluetooth headset through the SCO link based on the HFP protocol, and the Bluetooth headset may control a telephone function of the mobile phone A, for example, functions such as answering a call, cutting off a call, rejecting a call, and voice dialing.

The AVRCP defines features of how to control streaming media, including pause, stop, replay, previous, next, volume control, and other types of remote control operations.

To sum up, through steps S501 to S504, the mobile phone A can establish the Bluetooth connection to the Bluetooth headset. In addition, after the Bluetooth connection is established between the mobile phone A and the Bluetooth headset, a paired device list (Paired Device List, PDL) of the Bluetooth headset stores basic information, such as a device name and a device address, of the mobile phone A.

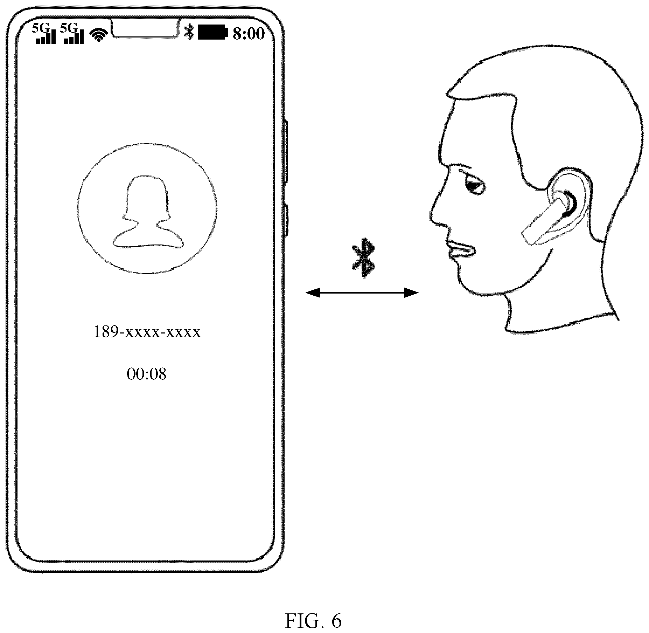

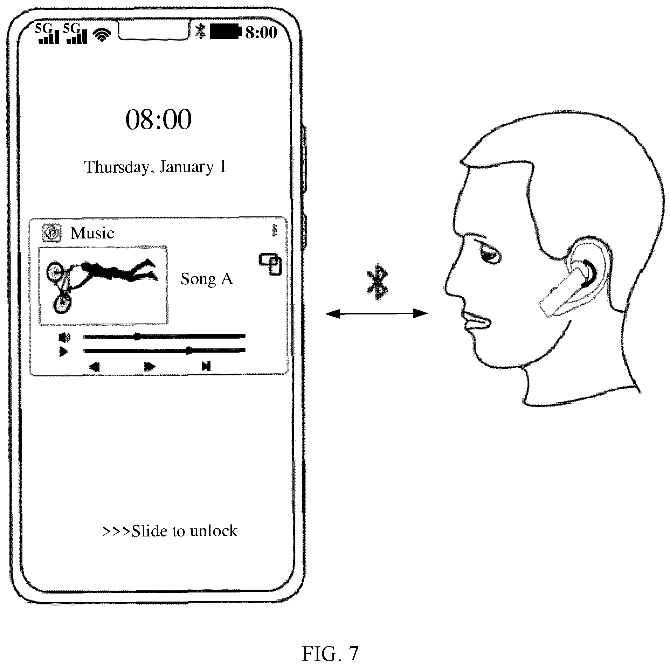

A person skilled in the art can understand that the mobile phone A can normally use the Bluetooth headset after the mobile phone A establishes the Bluetooth connection to the Bluetooth headset. For example, refer to FIG. 6. The mobile phone A may perform a voice call by using the Bluetooth headset. Alternatively, refer to FIG. 7. The mobile phone A may play audio information by using the Bluetooth headset.

Currently, a secondary device (for example, a Bluetooth headset) usually has no capability of verifying use permission of a primary device (for example, a mobile phone), and any primary device can normally use a secondary device after establishing a Bluetooth connection to the secondary device. It can be understood that a secondary device may be used by another person at will after the secondary device is lost or obtained by the another person, and security and privacy of the secondary device cannot be ensured.

In view of this, the embodiments of this application provide a Bluetooth device management method, so that after a Bluetooth connection is established between a primary device and a secondary device, verification is performed on whether the primary device has permission to use the secondary device. This prevents the another person from using the secondary device at will, thereby ensuring security and privacy of the secondary device.

The Bluetooth device management method provided in the embodiments of this application includes four parts. The first part relates to a process in which the primary device encrypts the secondary device. The second part relates to a process in which the encrypted secondary device performs password verification on the primary device. The third part relates to a process in which the primary device performs other setting on the secondary device, for example, password changing and cancellation, trusted device setting, and owner information setting. The fourth part relates to a process in which the primary device manages the secondary device by using the AI Life app. The following specifically describes the four parts.

First part: This part is the process in which the primary device encrypts the secondary device.

The following describes the encryption process of the secondary device by using an example in which the primary device is a first electronic device (for example, a mobile phone A) and the secondary device is a Bluetooth headset (for example, FreeBuds 3). It should be understood that one Bluetooth headset may separately establish Bluetooth connections to a plurality of mobile phones at different times. Therefore, in addition to the mobile phone A, the Bluetooth headset may further have another primary device, for example, a mobile phone B and a mobile phone C.

In the embodiments, there are two Bluetooth headset encryption manners: encryption on a mobile phone side and encryption on a headset side. A user may select, based on a requirement, at least one of the two encryption manners to encrypt the Bluetooth headset. The following specifically describes the two encryption manners.

It should be understood that when the mobile phone A manages Bluetooth headset encryption, the mobile phone A is required to have an encryption capability. If the mobile phone A has no encryption capability, even if the Bluetooth headset is in an unencrypted state (that is, encrypted neither on the mobile phone side nor on the headset side), after the mobile phone A establishes a Bluetooth connection to the Bluetooth headset, the mobile phone A does not guide the user to perform encryption setting (including encryption on the mobile phone side and/or encryption on the headset side) on the Bluetooth headset.

### (1) Encryption on the mobile phone side

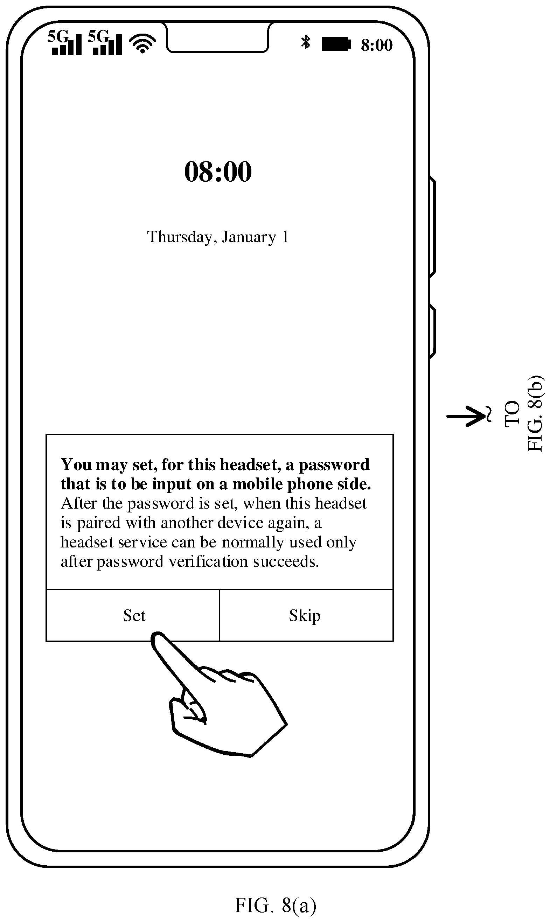

FIG. 8(a) to FIG. 8(c) are a schematic diagram of a Bluetooth device encryption process according to an embodiment of this application, and relates to a process in which the mobile phone A guides, by using a pop-up box, the user to perform encryption on the mobile phone side for the Bluetooth headset.

Refer to FIG. 8(a). After the Bluetooth headset successfully connects to the mobile phone A (for example, after the mobile phone receives an operation of tapping a "Connect" option in FIG. 3 by the user) for the first time in the unencrypted state (for example, after the Bluetooth headset is delivered from a factory, or after a password is canceled), the mobile phone A displays a second prompt box, to prompt the user to set, for the Bluetooth headset, a password that is to be input on the mobile phone side. For example, the second prompt box may include a second option (for example, a "Set" option), a "Skip" option, and prompt information "You may set, for this headset, a password that is to be input on the mobile phone side" and "After the password is set, when this headset is paired with another device again, a headset service can be normally used only after password verification succeeds". After detecting that the user operates the "Set" option, the mobile phone A displays a password input box.

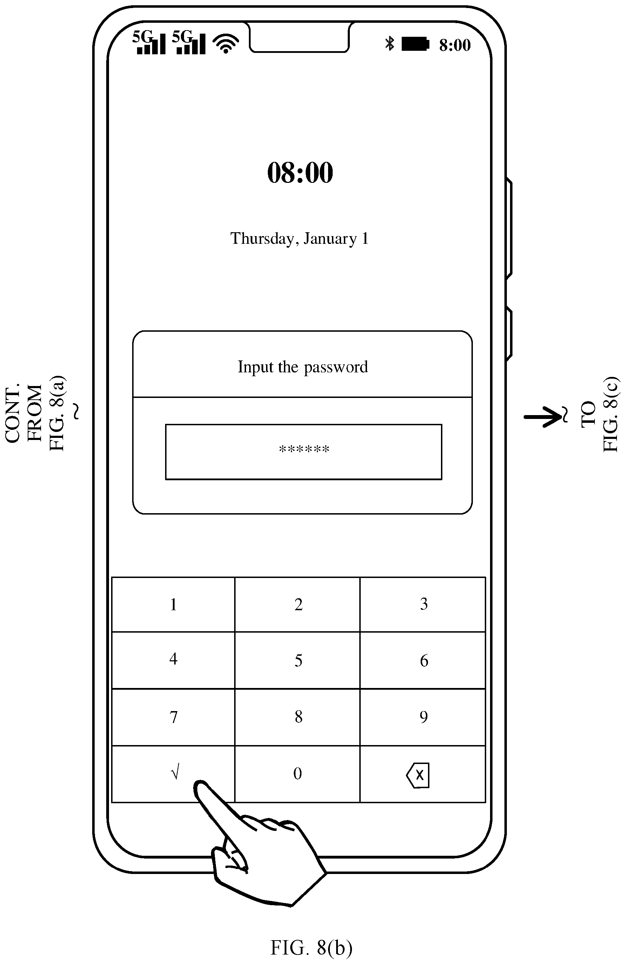

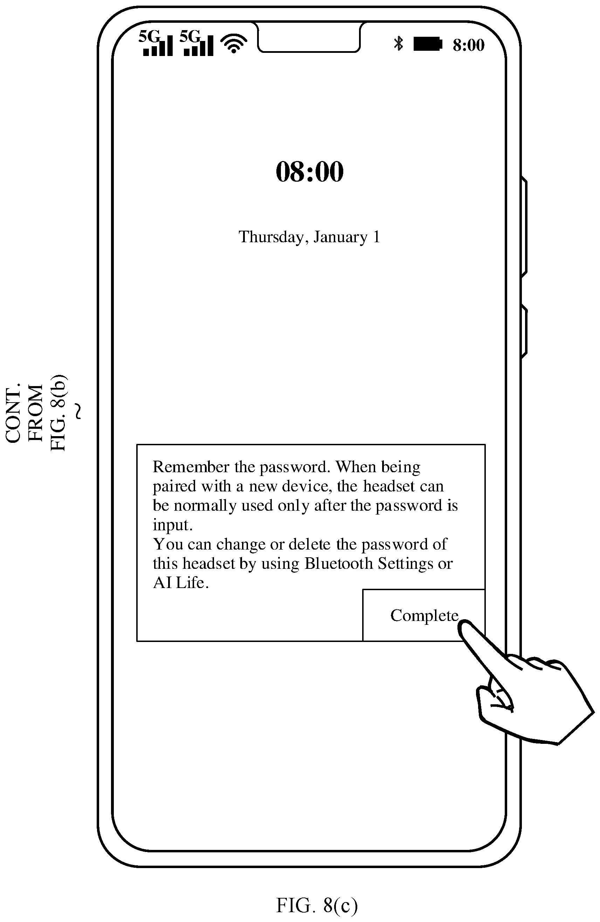

Refer to FIG. 8(b). The password input box is used to obtain the password that is set by the user for the Bluetooth headset and that is to be input on the mobile phone side. Because a password in the password input box is usually not displayed in plaintext, to ensure that a password actually input by the user is the same as a password that the user plans to input, the mobile phone A may request the user to input the password twice. If passwords input at the two times are the same, the password is used for encryption of the Bluetooth headset. After encryption is completed, the mobile phone A displays, for example, a prompt box shown in FIG. 8(c).

In this embodiment, the password input through the password input box may be a password formed by combining characters (including digits, symbols, letters, and the like) in any manner. This is not limited in this embodiment.

Refer to FIG. 8(c). The prompt box includes a "Complete" option and prompt information "Remember the password. When being paired with a new device, the headset can be normally used only after the password is verified. You can change or delete the password of this headset by using Bluetooth Settings or AI Life". After detecting that the user operates the "Complete" option, the mobile phone A ends displaying the prompt box.

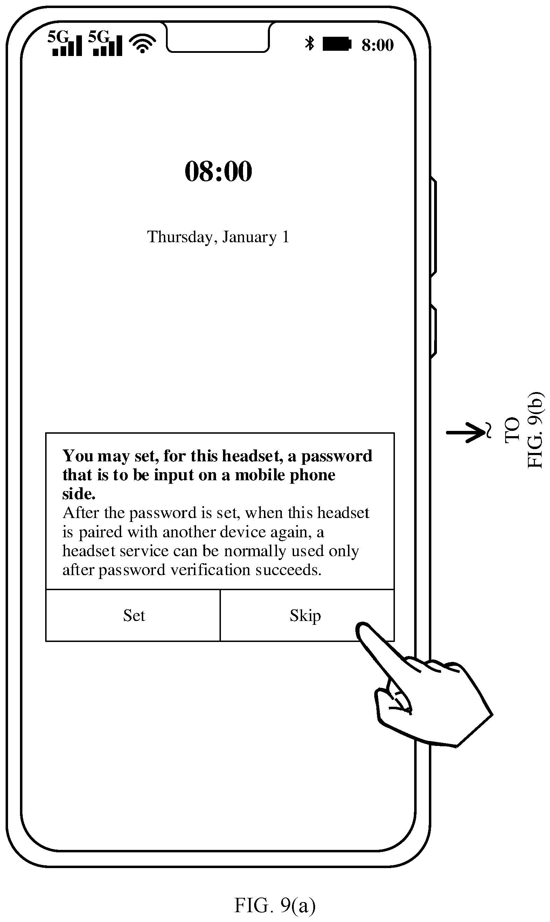

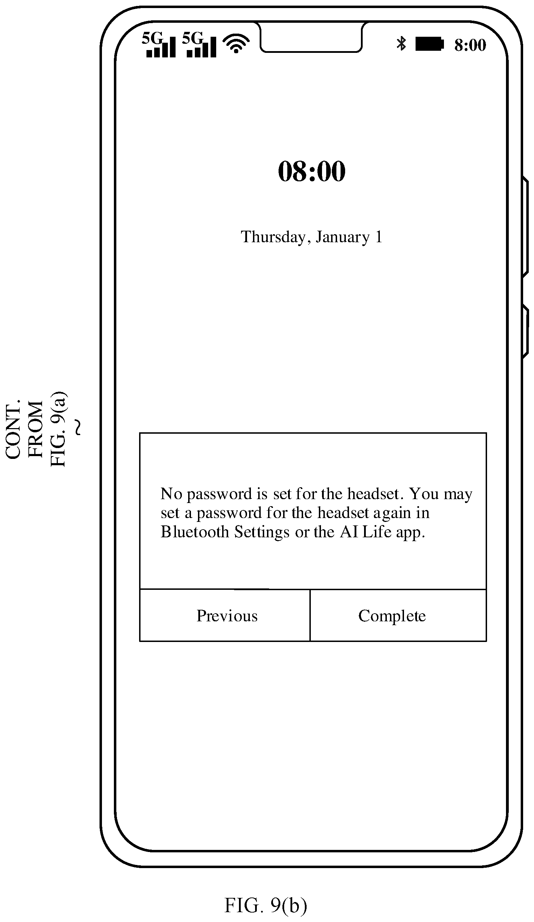

The user may alternatively choose, based on a requirement, not to set a password of the Bluetooth headset this time. For example, refer to FIG. 9(a). After the mobile phone A detects that the user operates the "Skip" option, the mobile phone A may display, for example, a prompt box shown in FIG. 9(b). The prompt box includes a "Previous" option, a "Complete" option, and prompt information "No password is set for the headset. You may set a password for the headset again in Bluetooth Settings or the AI Life app". The "Previous" option is used to control the mobile phone A to return to a prompt box shown in FIG. 9(a). The "Complete" option is used to end displaying the prompt box. After the mobile phone A detects that the user operates the "Complete" option, the mobile phone A successfully skips password setting.

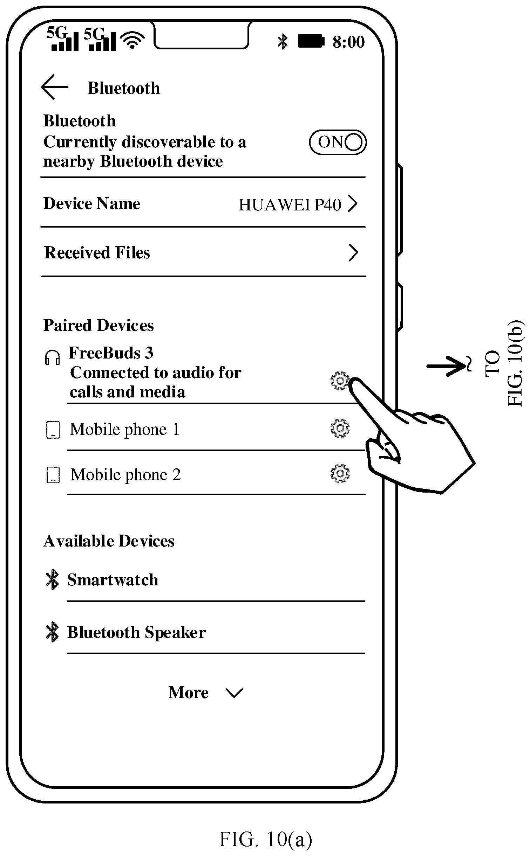

After the user skips setting the password of the Bluetooth headset according to pop-up information, if the user needs to encrypt the Bluetooth headset, the user may continue to set the password in a Bluetooth setting option of the mobile phone A, as shown in FIG. 10(a) to FIG. 10(e).

FIG. 10(a) to FIG. 10(e) are a schematic diagram of a Bluetooth device encryption process according to still another embodiment of this application, and relates to a process in which the mobile phone A sets a password for the Bluetooth headset in the Bluetooth setting option according to a user instruction. Details are as follows.

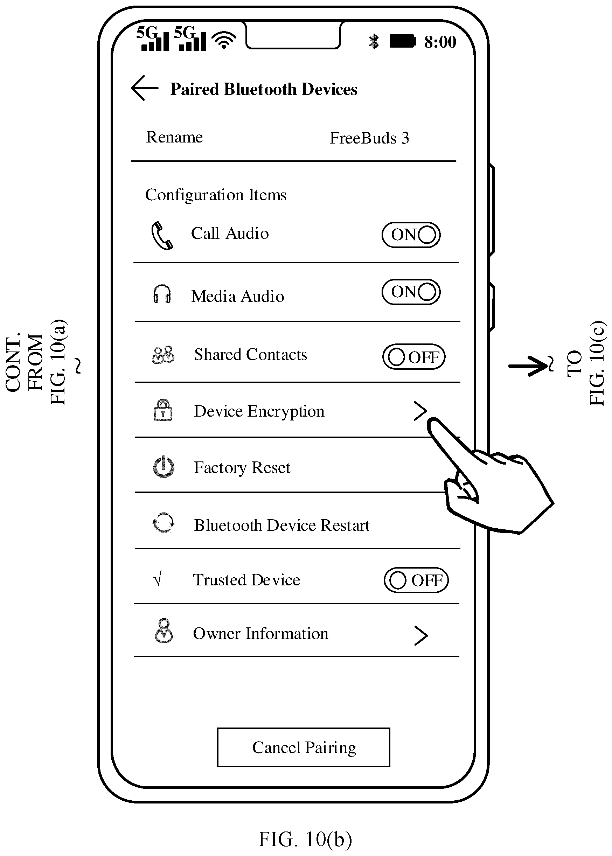

Refer to FIG. 10(a). Devices already paired with the mobile phone A include a connected device and an unconnected device, for example, a device FreeBuds 3 currently connected to the mobile phone. The user may set the connected device. Specifically, after detecting that the user operates a "Settings" icon of the FreeBuds 3, the mobile phone A displays, for example, a setting interface shown in FIG. 10(b).

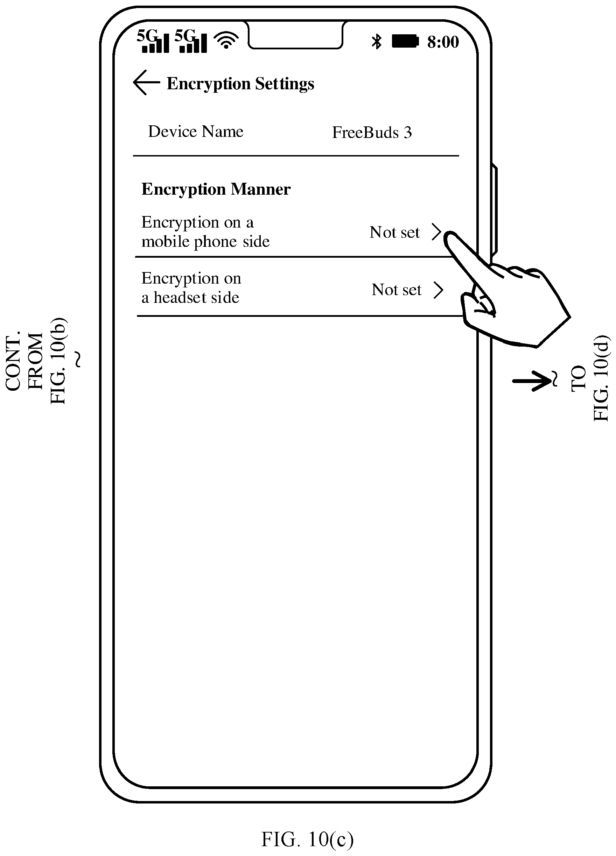

Refer to FIG. 10(b). The setting interface includes a name "FreeBuds 3" of the Bluetooth headset and configuration items of the Bluetooth headset, for example, a "Call Audio" configuration item, a "Media Audio" configuration item, a "Shared Contacts" configuration item, a "Device Encryption" configuration item, a "Factory Reset" configuration item, a "Bluetooth Device Restart" configuration item, a "Trusted Devices" configuration item, and an "Owner Information" configuration item. After detecting that the user operates the "Device Encryption" configuration item, the mobile phone A may display, for example, a display interface shown in FIG. 10(c).

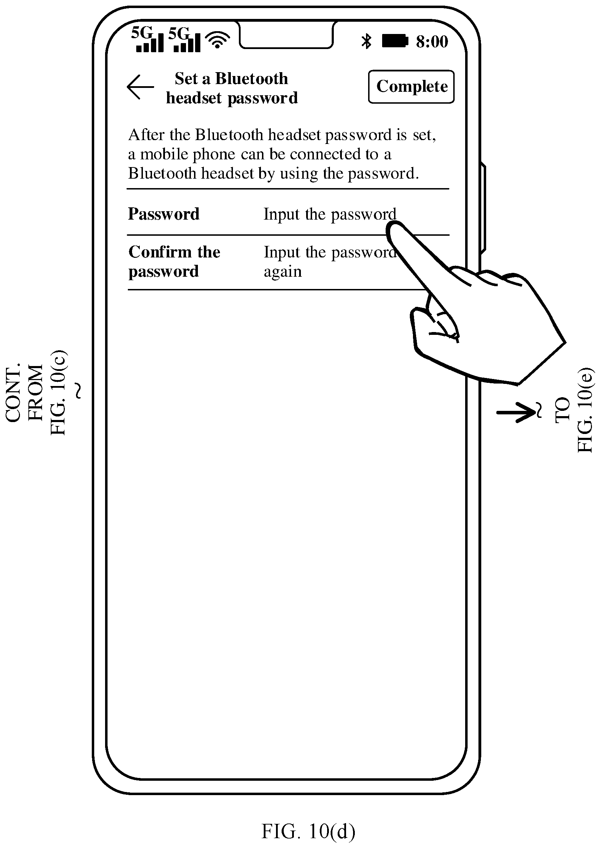

Refer to FIG. 10(c). The display interface includes the two encryption manners of the Bluetooth headset. One manner is encryption on the mobile phone side, and the other manner is encryption on the headset side. After the mobile phone A detects that the user selects the manner of encryption on the mobile phone side, the mobile phone A displays, for example, a display interface shown in FIG. 10(d).

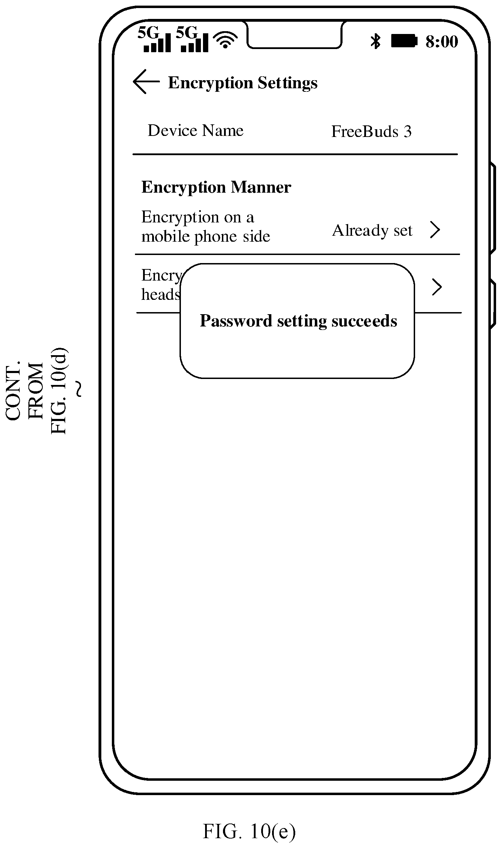

Refer to FIG. 10(d). The display interface includes a password input area, a password re-input area, and a "Complete" icon. After the mobile phone A detects that the user inputs a same password in the password input area and the password re-input area and operates the "Complete" icon, password setting is completed. The mobile phone A displays, for example, prompt information "Password setting succeeds" shown in FIG. 10(e).

After the user encrypts the Bluetooth headset in the manner of encryption on the mobile phone side, when the Bluetooth headset is connected to another primary device (for example, a mobile phone B) for the first time, after the mobile phone B establishes a Bluetooth connection to the Bluetooth headset, the Bluetooth headset needs to obtain a password through the mobile phone B to perform password verification. The mobile phone B can normally use the Bluetooth headset only after verification succeeds. This ensures security and privacy of the Bluetooth headset.

In the foregoing embodiments, the terminal device may alternatively encrypt the headset by collecting biometric feature information, for example, fingerprint information, face information, iris information, a bone voiceprint, voice information, or ear canal feature information, of the user.

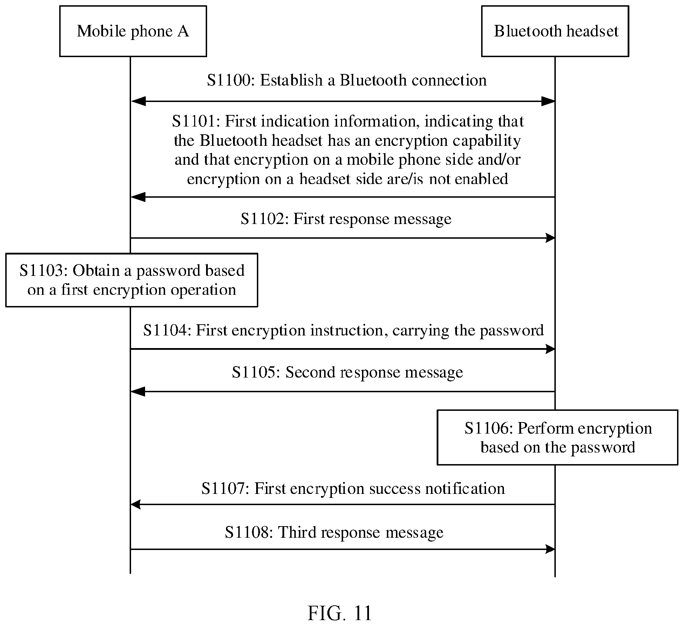

In the foregoing descriptions, for a procedure in which the mobile phone A encrypts the Bluetooth headset in the manner of encryption on the mobile phone side, refer to FIG. 11. FIG. 11 is a flowchart of Bluetooth device encryption according to an embodiment of this application.

S 1100: The mobile phone A and the Bluetooth headset establish a Bluetooth connection.

For details about step S1100, refer to the Bluetooth connection flowchart shown in FIG. 5. Details are not described herein in this embodiment again.

S1101: The Bluetooth headset sends first indication information to the mobile phone A, where the first indication information is used to indicate that the Bluetooth headset has an encryption capability and that encryption on the mobile phone side and/or encryption on the headset side are/is not enabled.

A Bluetooth device encryption method provided in this embodiment is performed on a basis that both the mobile phone A and the Bluetooth headset have Bluetooth encryption capabilities. In this embodiment, the encryption capability of the Bluetooth headset includes capabilities of encrypting the Bluetooth headset itself, performing device setting, and performing authentication on a primary device under control of the primary device (for example, the mobile phone A). An encryption capability of the primary device includes capabilities of encrypting the Bluetooth headset in the manner of encryption on the mobile phone side and/or the manner of encryption on the headset side, performing device setting on the Bluetooth headset, and assisting the Bluetooth headset in performing authentication on the primary device.

In this embodiment, that the Bluetooth headset is unencrypted means that encryption on the mobile phone side and/or encryption on the headset side are/is not enabled on the Bluetooth headset. In some embodiments, when the Bluetooth headset is connected to the primary device (for example, the mobile phone A) for the first time after delivery, or when the Bluetooth headset is connected to the mobile phone A for the first time after all originally set passwords are canceled, neither encryption on the mobile phone side nor encryption on the headset side is enabled. In some other embodiments, the Bluetooth headset may enable only encryption on the mobile phone side or encryption on the headset side.

In some embodiments, the Bluetooth headset may communicate with the mobile phone A by using a given protocol type such as a HiEcho message, to negotiate the encryption capability. For example, the first indication information may be "HiEcho: encryption capability=1, encryption on the mobile phone side=0, encryption on the headset side=0", indicating that the Bluetooth headset has the encryption capability, encryption on the mobile phone side is not enabled, and encryption on the headset side is not enabled.

S1102: The mobile phone A sends a first response message to the Bluetooth headset, where the first response message is used to indicate that the mobile phone A has the encryption capability.

In some embodiments, when the Bluetooth headset may negotiate the encryption capability with the mobile phone A by using a given protocol type such as HiEcho, for example, the first response message may be "HiEcho response: success".

It should be noted that, in this embodiment, step S1101 may be performed before step S1102, or step S 1102 may be performed before step S1101. This is not limited in this embodiment.

In steps S1101 and S1102, alternatively, the mobile phone may proactively query, by using an SDP query service, various profile services or capabilities supported by the Bluetooth headset, and the headset reports, to the mobile phone, services or capabilities supported by the headset, for example, A2DP and whether the headset supports the encryption capability.

S1103: When the Bluetooth headset has the encryption capability, the mobile phone prompts the user to encrypt the Bluetooth headset, and obtains a password based on a first encryption operation.

Generally, when a headset is delivered from a factory or is connected to an electronic device for the first time, the headset is in an unencrypted state. When the Bluetooth headset has no encryption capability, the mobile phone does not prompt the user to perform an encryption operation.

In this step, when the first indication information carries an indication message "encryption on the mobile phone side=0", the mobile phone A obtains the password based on the first encryption operation. For example, the first encryption operation is user operations shown in FIG. 8(a) and FIG. 8(b). Alternatively, the first encryption operation may be user operations shown in FIG. 10(a) to FIG. 10(d).

S1104: The mobile phone A sends a first encryption instruction to the Bluetooth headset, where the first encryption instruction carries the password, and is used to control the Bluetooth headset to enable a password verification function.

In this embodiment, because a Bluetooth link is already established between the mobile phone and the Bluetooth headset, and the Bluetooth link is an encrypted link, the mobile phone A may send the password to the Bluetooth headset in plaintext, or may convert the password into a password hash value and send the password hash value to the Bluetooth headset. For example, the first encryption instruction may be "HiEcho: set a mobile phone side password=1, password=123456".

S 1105: The Bluetooth headset sends a second response message to the mobile phone A.

The second response message is used to indicate that the Bluetooth headset has received the first encryption instruction sent by the mobile phone A. For example, the second response message may be "HiEcho response: success".

S 1106: The Bluetooth headset encrypts the Bluetooth headset based on the password.

Specifically, after receiving the password sent by the mobile phone A, the Bluetooth headset enables encryption on the mobile phone side, and stores the password. In addition, the Bluetooth headset sets the mobile phone A in a locally maintained paired device list (Paired Device List, PDL) as a trusted device, so that the mobile phone A can normally use the Bluetooth headset.

S1107: The Bluetooth headset sends a first encryption success notification to the mobile phone A, to indicate that encryption on the mobile phone side succeeds.

For example, the first encryption success notification may be "HiEcho: setting succeeds, encryption on the mobile phone side=1". After receiving the first encryption success notification, the mobile phone A may display, for example, the prompt information shown in FIG. 8(c), to notify the user that encryption on the mobile phone side is completed.

S1108: The mobile phone A sends a third response message to the Bluetooth headset.

The third response message is used to notify the Bluetooth headset that the mobile phone A has received the first encryption success notification. For example, the third response message may be "HiEcho response: success".

Through steps S1100 to S1108, encryption on the mobile phone side is completed. Subsequently, after another primary device (for example, a mobile phone B) is connected to the Bluetooth headset, the password needs to be input to normally use the Bluetooth headset.

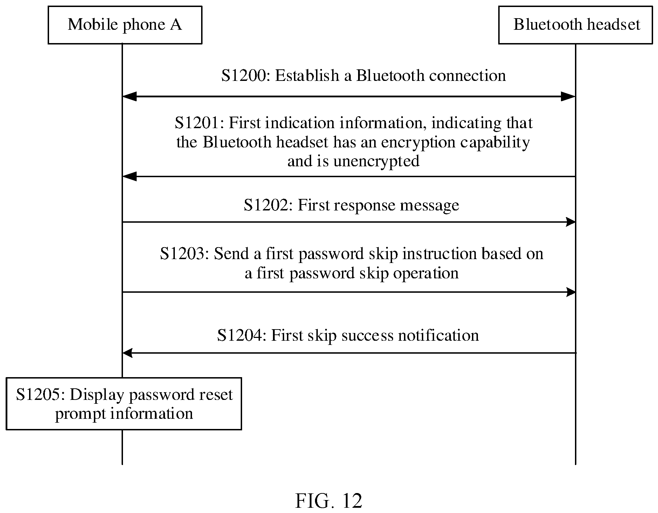

FIG. 12 is a flowchart of a Bluetooth device encryption method according to another embodiment of this application, and relates to a process in which the mobile phone A skips setting a password for the Bluetooth headset.

S1200: The mobile phone A and the Bluetooth headset establish a Bluetooth connection.

S1201: The Bluetooth headset sends first indication information to the mobile phone A, where the first indication information is used to indicate that the Bluetooth headset has an encryption capability and is unencrypted.

S1202: The mobile phone A sends a first response message to the Bluetooth headset, where the first response message is used to indicate that the mobile phone A has an encryption capability.

In this embodiment, for steps S1200 to S1202, refer to steps S 1100 to S1102. Details are not described herein in this embodiment again.

S1203: The mobile phone A sends a first password skip instruction to the Bluetooth headset based on a first password skip operation, where the instruction is used to instruct the Bluetooth headset not to set, for the present, a password that is to be input on the mobile phone side.

For example, the first password skip operation may be an operation of the user selecting a "Skip" option, as shown in FIG. 9(a). The first password skip instruction may be "HiEcho: encryption on the mobile phone side=0".

S1204: The Bluetooth headset sends a first skip success notification to the mobile phone A. The first skip success notification is used to indicate that the Bluetooth headset has skipped password setting.

S1205: The mobile phone A displays password reset prompt information.

The password reset prompt information is used to indicate, to the user, a manner of subsequently setting a password for the Bluetooth headset. Refer to FIG. 9(b). The password reset prompt information may be "No password is set for the headset. You may set a password for the headset again in Bluetooth Settings or the AI Life app".

### (2) Encryption on the headset side

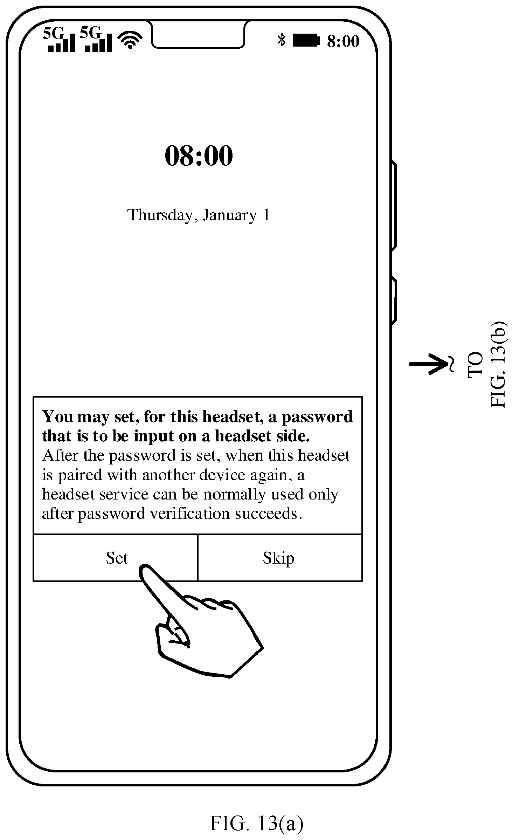

FIG. 13(a) to FIG. 13(c) are a schematic diagram of a Bluetooth device encryption process according to still another embodiment of this application, and relates to a process in which the mobile phone A guides, by using a pop-up box, the user to perform encryption on the headset side for the Bluetooth headset.

In some embodiments, after the mobile phone A completes or skips encryption on the mobile phone side, the mobile phone A starts to guide the user to perform encryption on the headset side for the Bluetooth headset. In some other embodiments, after the mobile phone A establishes a connection to the Bluetooth headset for the first time, if the Bluetooth headset is unencrypted, the mobile phone A may alternatively directly guide the user to perform encryption on the headset side for the Bluetooth headset. Details are as follows.

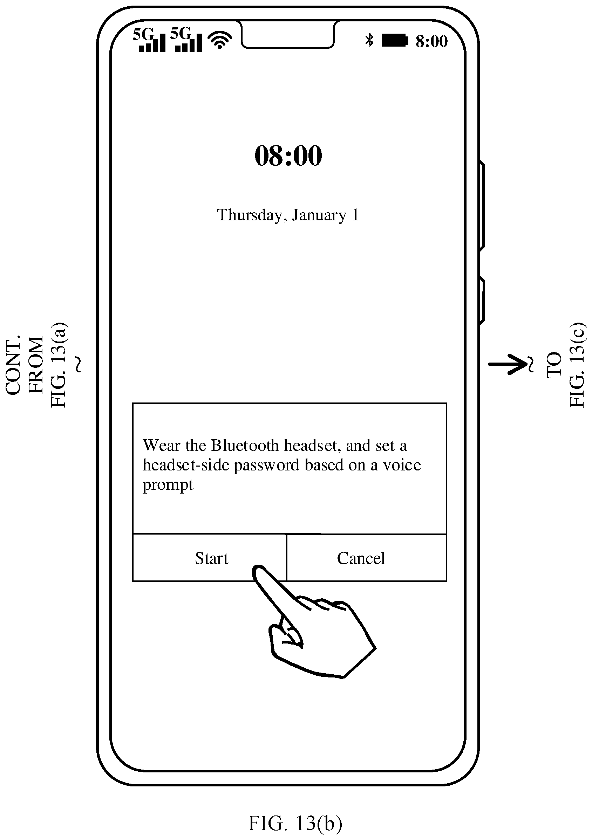

Refer to FIG. 13(a). When guiding the user to perform encryption on the headset side for the Bluetooth headset, the mobile phone A may display another second prompt box, to prompt the user to set, for the Bluetooth headset, a password that is to be input on the headset side. The second prompt box includes a second option (for example, a "Set" option), a "Skip" option, and prompt information "You may set, for this headset, a password that is to be input on the headset side" and "After the password is set, when this headset is paired with another device again, a headset service can be normally used only after password verification succeeds". After the mobile phone A detects that the user operates the "Set" option, the mobile phone A may display, for example, a prompt box shown in FIG. 13(b).

Refer to FIG. 13(b). The prompt box includes prompt information, a "Start" option, and a "Cancel" option. For example, the prompt information may be "Wear the Bluetooth headset, and set a password based on a voice prompt". When the mobile phone A detects that the user operates the "Cancel" option, the password is not set for the present. After the mobile phone A detects that the user operates the "Start" option, the mobile phone A controls the Bluetooth headset to start to set the password that is to be input on the headset side.

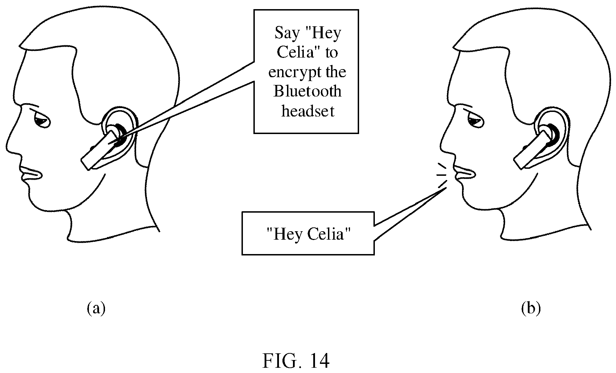

In this embodiment, the Bluetooth headset may be encrypted by using a bone voiceprint, or may be encrypted by using voice information. In a case of bone voiceprint encryption of the Bluetooth headset, after receiving a headset-side encryption instruction sent by the mobile phone A, the Bluetooth headset first plays a first prompt speech, as shown in (a) in FIG. 14, to prompt the user to set the password. For example, the first prompt speech may be "Say 'Hey, Celia' to encrypt the Bluetooth headset". Subsequently, refer to (b) in FIG. 14. The Bluetooth headset collects a bone voiceprint generated when the user utters "Hey, Celia", uses the bone voiceprint as a password of the Bluetooth headset, and encrypts the Bluetooth headset based on the password. After completing related setting of encryption on the headset side, the Bluetooth headset notifies the mobile phone A that encryption succeeds.

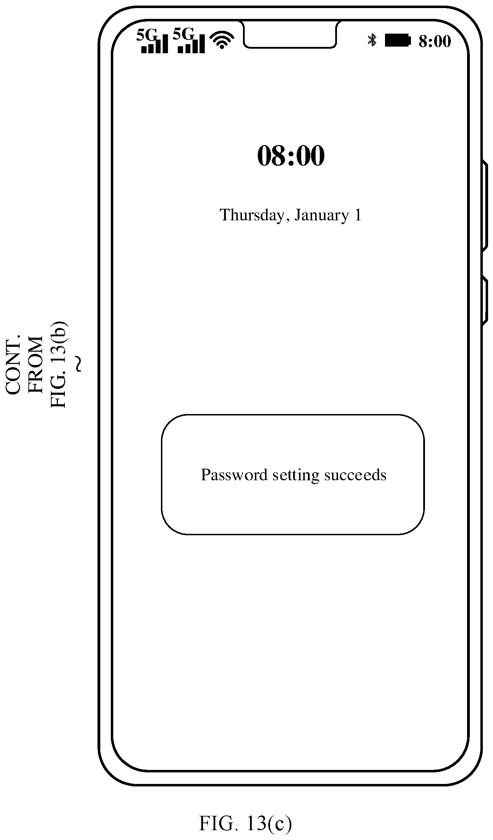

Refer to FIG. 13(c). After detecting that the Bluetooth headset is successfully encrypted, the mobile phone A displays encryption success prompt information, for example, "Password setting succeeds".

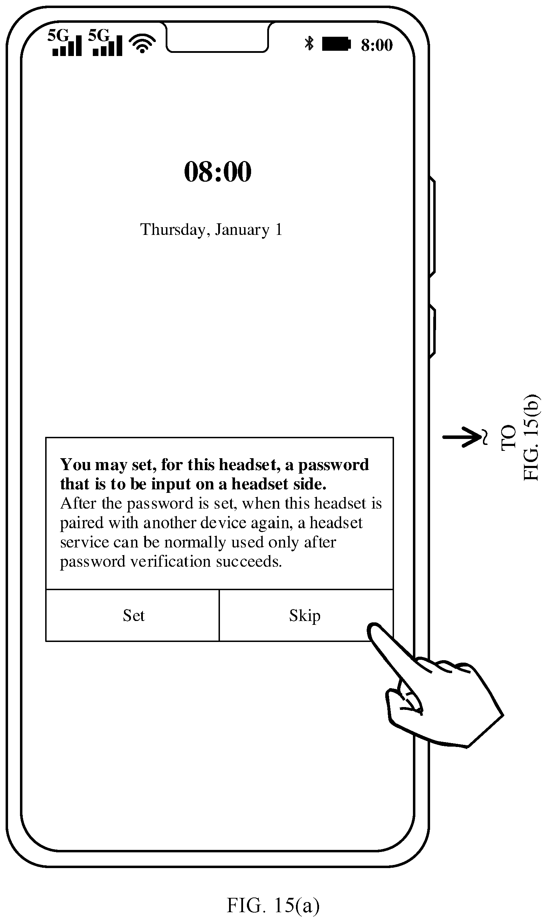

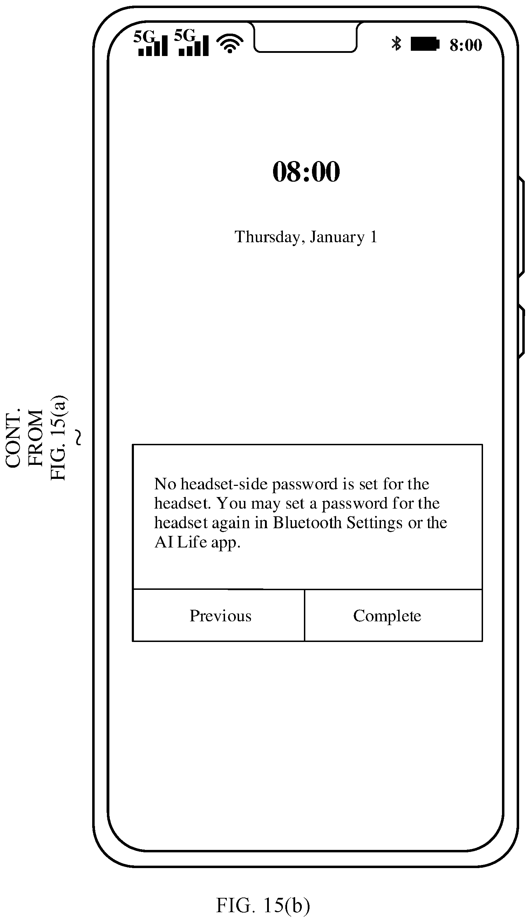

The user may alternatively choose, based on a requirement, not to encrypt the Bluetooth headset in the manner of encryption on the headset side this time. For example, refer to FIG. 15(a). After the mobile phone A detects that the user operates the "Skip" option in the prompt box, the mobile phone A notifies the Bluetooth headset not to set a password this time, and displays, for example, a prompt box shown in FIG. 15(b). The prompt box includes prompt information, a "Previous" option, and a "Complete" option. For example, the prompt information may be "No password is set for the headset. You may set a password for the headset again in Bluetooth Settings or the AI Life app". The "Previous" option is used to control the mobile phone A to return to the prompt box shown in FIG. 15(a). The "Complete" option is used to end displaying the prompt box. After the mobile phone A detects that the user operates the "Complete" option, password setting is successfully skipped.

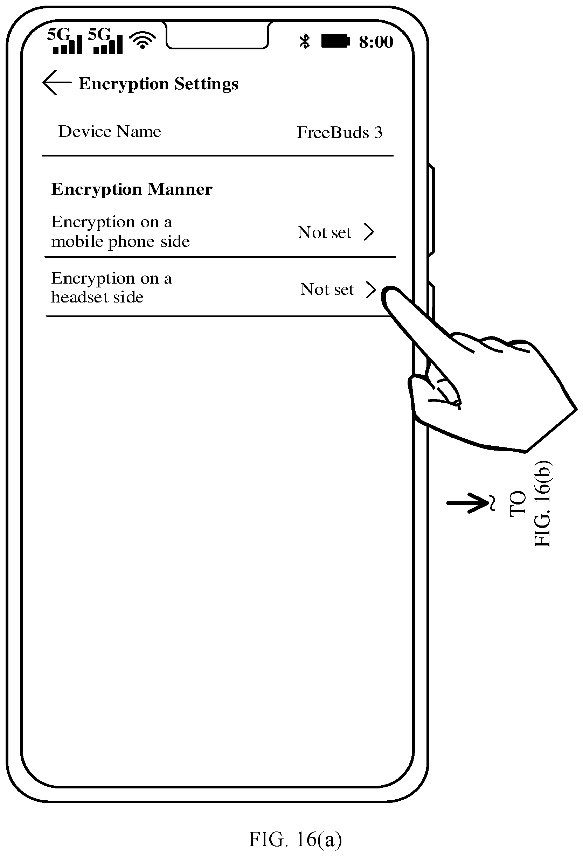

After the user skips setting the password of the Bluetooth headset, if the user needs to encrypt the Bluetooth headset, the user may continue to set the password in a Bluetooth setting option of the mobile phone A, as shown in FIG. 16(a) to FIG. 16(c).

FIG. 16(a) to FIG. 16(c) are a schematic diagram of a Bluetooth device encryption process according to still another embodiment of this application, and relates to a process in which the mobile phone A sets, for the Bluetooth headset in the Bluetooth setting option according to a user instruction, a password that is to be input on the headset side.

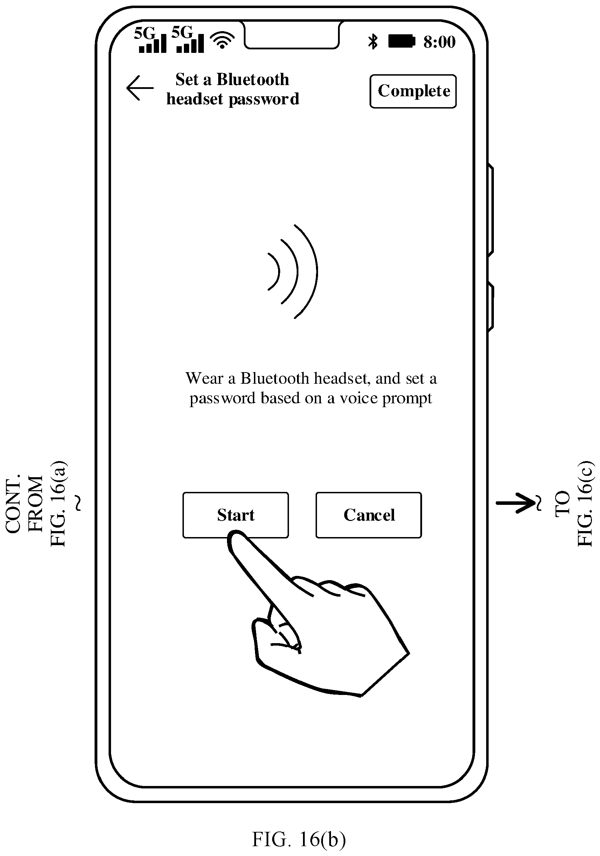

Refer to FIG. 16(a). After the mobile phone A detects that the user selects the manner of encryption on the headset side in the interface, the mobile phone A displays a setting interface shown in FIG. 16(b).

Refer to FIG. 16(b). The setting interface includes prompt information, a "Start" option, and a "Cancel" option. For example, the prompt information may be "Wear the Bluetooth headset, and set a password based on a voice prompt". When the mobile phone A detects that the user operates the "Cancel" option, the password is not set for the present. After the mobile phone A detects that the user operates the "Start" option, the mobile phone A notifies the Bluetooth headset to start to set the password that is to be input on the headset side. Specifically, the Bluetooth headset may set, according to a procedure shown in FIG. 14, the password that is to be input on the headset side. Details are not described herein in this embodiment again.

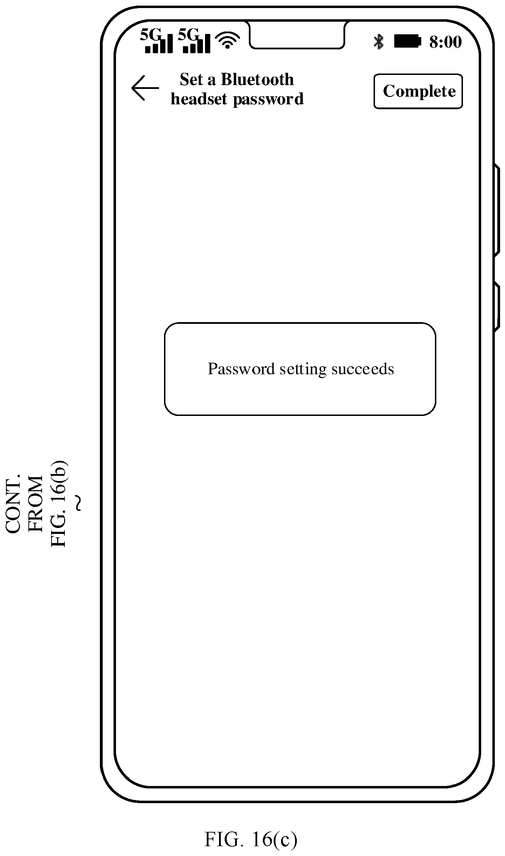

Refer to FIG. 16(c). After the mobile phone A detects that encryption on the headset side is completed, the mobile phone A displays prompt information "Password setting succeeds".

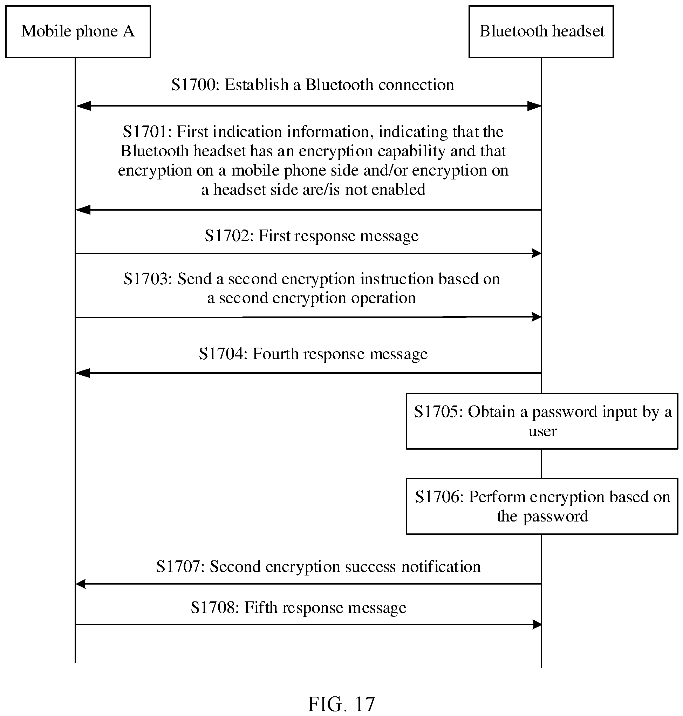

In the foregoing descriptions, for a procedure in which the mobile phone A encrypts the Bluetooth headset in the manner of encryption on the headset side, refer to FIG. 17. FIG. 17 is a flowchart of Bluetooth device encryption according to another embodiment of this application.

S1700: The mobile phone A and the Bluetooth headset establish a Bluetooth connection.

S1701: The Bluetooth headset sends first indication information to the mobile phone A, where the first indication information is used to indicate that the Bluetooth headset has an encryption capability and that encryption on the mobile phone side and/or encryption on the headset side are/is not enabled.

S1702: The mobile phone A sends a first response message to the Bluetooth headset, where the first response message is used to indicate that the mobile phone A has an encryption capability.

In this embodiment, for steps S1700 to S1702, refer to steps S 1100 to S1102. Details are not described herein in this embodiment again.

S1703: The mobile phone A sends a second encryption instruction to the Bluetooth headset based on a second encryption operation.

For example, the second encryption operation may be an operation of the user selecting the "Start" option, as shown in FIG. 13(b) or FIG. 16(b). The second encryption instruction may be "HiEcho: encryption on the headset side=1".

S1704: The Bluetooth headset sends a fourth response message to the mobile phone A.

The fourth response message is used to notify the mobile phone Athat the Bluetooth headset has received the second encryption instruction. For example, the fourth response message may be "HiEcho response: success".

S1705: The Bluetooth headset obtains a password input by the user.

Specifically, for a process of obtaining the Bluetooth headset password, refer to related descriptions in FIG. 14. Details are not described herein in this embodiment again.

S1706: The Bluetooth headset performs encryption based on the password.

Specifically, the Bluetooth headset enables encryption on the headset side, and stores the password. In addition, if a PDL of the Bluetooth headset does not include basic information (for example, a device name, a device address, and a trusted device mark) of the mobile phone A, the Bluetooth headset stores the basic information of the mobile phone A in the locally maintained PDL.

S1707: The Bluetooth headset sends a second encryption success notification to the mobile phone A.

For example, the second encryption success notification may be "HiEcho: encryption on the headset side=1".

S1708: The mobile phone A sends a fifth response message to the Bluetooth headset.

The fifth response message is used to notify the Bluetooth headset that the mobile phone A has received the second encryption success notification sent by the Bluetooth headset. For example, the fifth response message may be "HiEcho response: success".

In addition, after sending the fifth response message, the mobile phone A may display, for example, the prompt information shown in FIG. 10(c), to indicate that encryption on the headset side is completed.

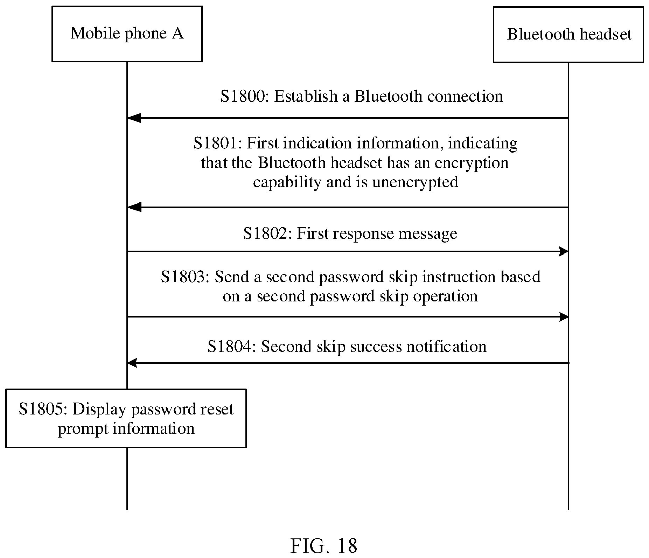

FIG. 18 is a flowchart of Bluetooth device encryption according to another embodiment of this application, and relates to a process in which the mobile phone A skips setting, for the Bluetooth headset, a password that is to be input on the headset side.

S1800: The mobile phone A and the Bluetooth headset establish a Bluetooth connection.

S1801: The Bluetooth headset sends first indication information to the mobile phone A, where the first indication information is used to indicate that the Bluetooth headset has an encryption capability and is unencrypted.

S1802: The mobile phone A sends a first response message to the Bluetooth headset, where the first response message is used to indicate that the mobile phone A has an encryption capability.

In this embodiment, for steps S1800 to S1802, refer to steps S 1100 to S1102. Details are not described herein in this embodiment again.

S1803: The mobile phone A sends a second password skip instruction to the Bluetooth headset based on a second password skip operation, where the instruction is used to instruct the Bluetooth headset not to set, for the present, a password that is to be input on the headset side.

For example, the second password skip operation may be an operation of the user selecting the "Skip" option, as shown in FIG. 15(a). The first password skip instruction may be "HiEcho: encryption on the headset side=0".

S1804: The Bluetooth headset sends a second skip success notification to the mobile phone A. The skip success notification is used to indicate that the Bluetooth headset has skipped setting the password that is to be input on the headset side.

S1805: The mobile phone A displays password reset prompt information.

The password reset prompt information is used to indicate, to the user, a manner of subsequently setting a password for the Bluetooth headset. Refer to FIG. 9(b). The password reset prompt information may be "No password is set for the headset. You may set a password for the headset again in Bluetooth Settings or the AI Life app".

After the Bluetooth headset is encrypted (including encryption on the mobile phone side and/or encryption on the headset side), the Bluetooth headset enables the password verification function. After establishing a Bluetooth connection to the Bluetooth headset, an unpaired Bluetooth device needs to pass password verification to normally use the Bluetooth headset. Otherwise, some functions of the Bluetooth headset, such as a call answering function and an audio playing function, will be restricted. The following describes, by using the second part, a process in which the Bluetooth headset performs password verification on the primary device after encryption.

Second part: The encrypted secondary device performs password verification on the primary device.

For a Bluetooth headset having an encryption capability, a primary device connected to the Bluetooth headset may not necessarily have an encryption capability. Therefore, in this embodiment, when the primary device has the encryption capability, the Bluetooth headset may perform password verification in a manner of verification on the mobile phone side, or may perform password verification in a manner of verification on the headset side. When the primary device has no encryption capability, a password usually cannot be input on the mobile phone side. Therefore, user password verification may be performed in the manner of verification on the headset side.

The following describes processes of password verification on the mobile phone side and password verification on the headset side.

(1) Password verification on the mobile phone side

The following first uses an example in which the primary device is a second electronic device (for example, a mobile phone B having an encryption capability) and a Bluetooth headset (for example, FreeBuds 3), to describe the manner of verification on the mobile phone side for the Bluetooth headset.

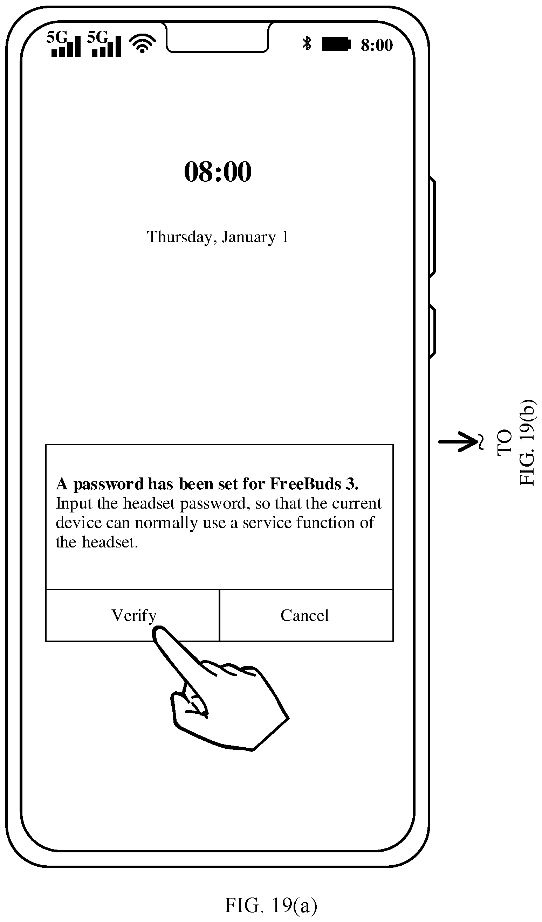

FIG. 19(a) to FIG. 19(c) are a schematic diagram of a password verification process according to an embodiment of this application, and relates to a process in which the mobile phone B performs, in a pop-up prompt manner with reference to a user instruction, password verification for using the Bluetooth headset.

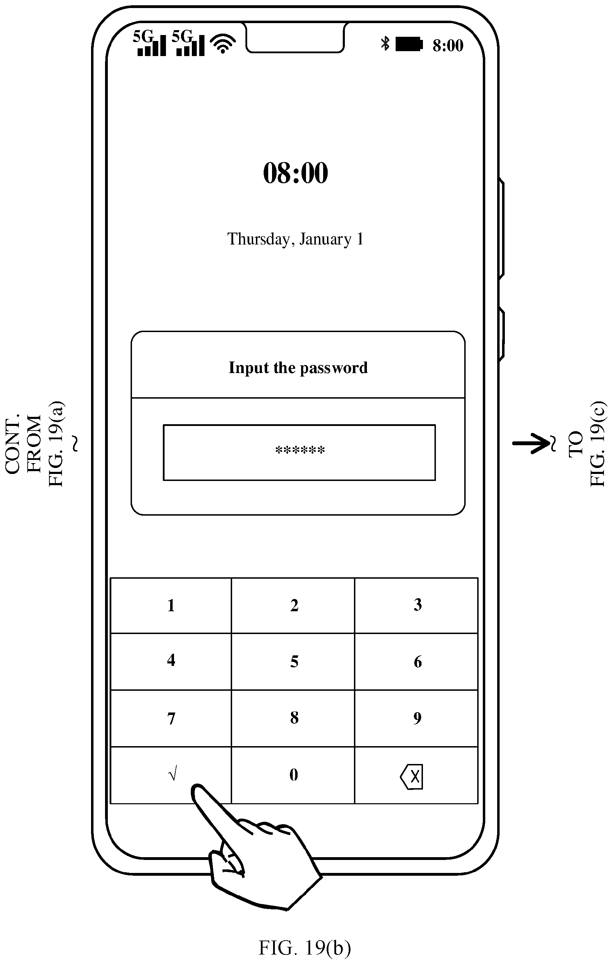

Refer to FIG. 19(a). After the mobile phone B establishes a Bluetooth connection to the encrypted Bluetooth headset (for example, after the mobile phone B receives an operation performed by a user on the "Connect" option in FIG. 2(b)), the mobile phone B displays a fourth prompt box. The fourth prompt box includes prompt information, a fourth option (for example, a "Verify" option), and a "Skip" option. The prompt information may be "A password has been set for the FreeBuds 3. Input the password, so that the current device can normally use a service function of the headset". The "Verify" option is used to display a password input box according to a user instruction. The "Skip" option is used to cancel current password verification. After detecting that the user operates the "Verify" option, the mobile phone A displays, for example, a prompt box shown in FIG. 19(b).

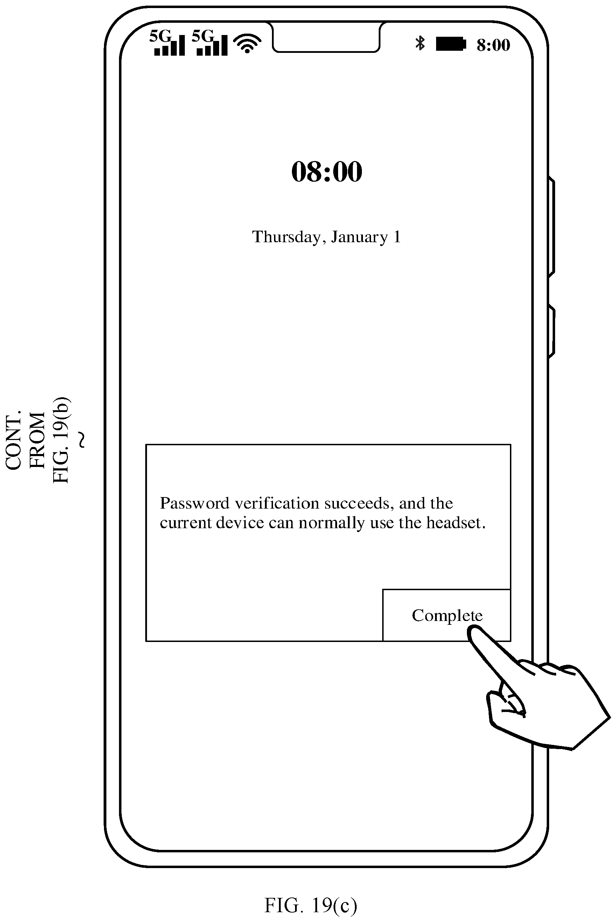

Refer to FIG. 19(b). The prompt box is used to obtain a password input by the user. After the mobile phone B detects that the user inputs and confirms the password, if the input password is correct, the mobile phone B displays a prompt box shown in FIG. 19(c).

Refer to FIG. 19(c). The prompt box includes prompt information and a "Complete" icon. For example, the prompt information may be "Password verification succeeds, and the current device can normally use the headset". The "Complete" icon is used to end displaying the prompt box.

It should be noted that, when the password input by the user is incorrect, the mobile phone B displays password error prompt information, for example, "The password is incorrect. Perform password verification again". If a quantity of times the user inputs an incorrect password is greater than a preset value (for example, 5 times), the Bluetooth headset locks a password verification function for a preset time (for example, 24 hours), so as to avoid unauthorized use of the headset.

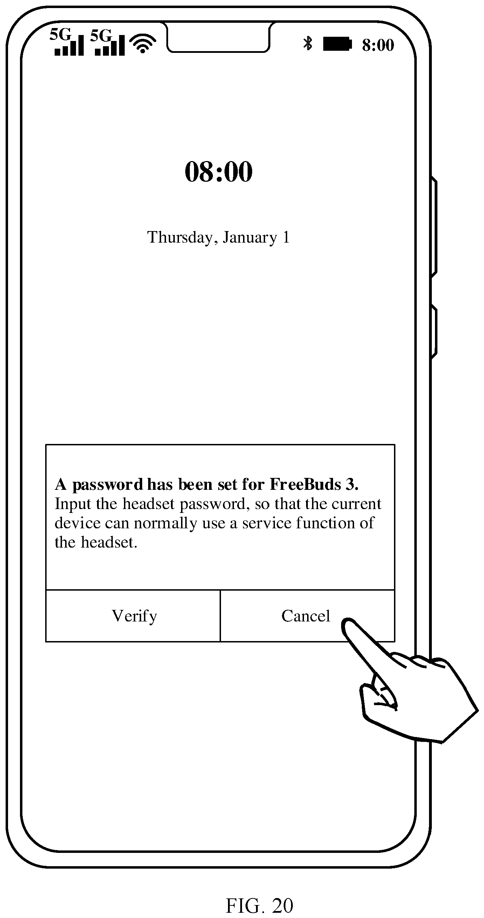

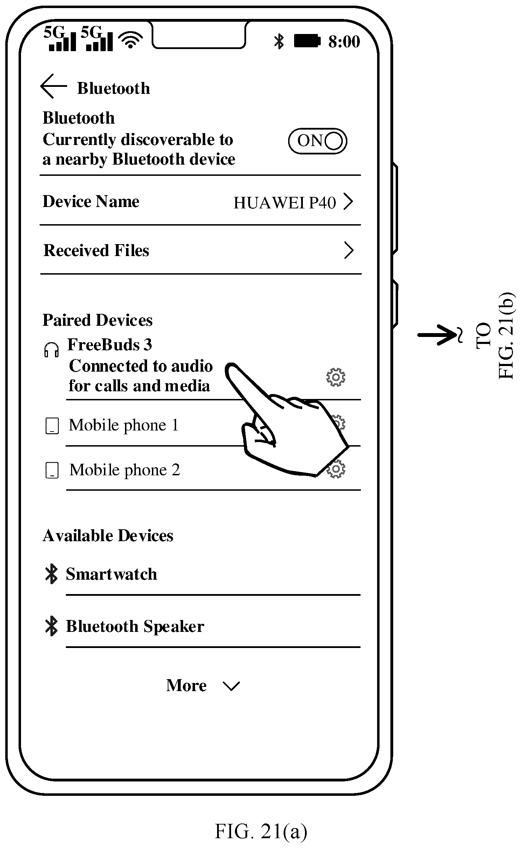

The user may alternatively choose, based on a requirement, not to perform password verification this time. For example, refer to FIG. 20. The user may choose to cancel current password verification, by operating a "Cancel" option in the prompt box. In addition, if the user needs to re-input a password for password verification during a current connection between the mobile phone B and the Bluetooth headset, verification may be performed in a Bluetooth setting option in the mobile phone B, as shown in FIG. 21(a) to FIG. 21(c).

In some embodiments, when the user cancels current password verification, the Bluetooth headset may still maintain some of emergency functions. For example, the mobile phone may search for the headset or provide an alarm clock service by using a Bluetooth technology.

FIG. 21(a) to FIG. 21(c) are a schematic diagram of a password verification process according to still another embodiment of this application, and relates to a process in which a user performs user password verification in Bluetooth settings.

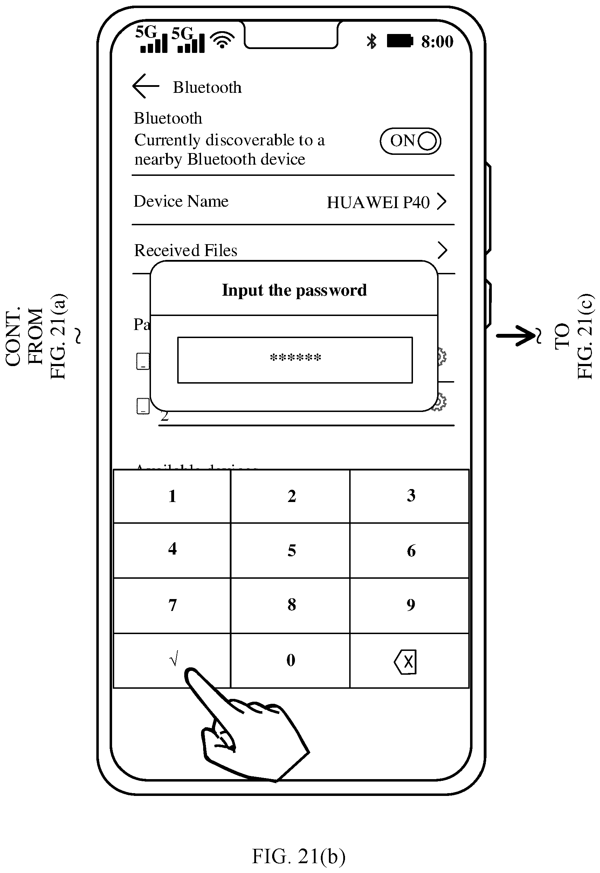

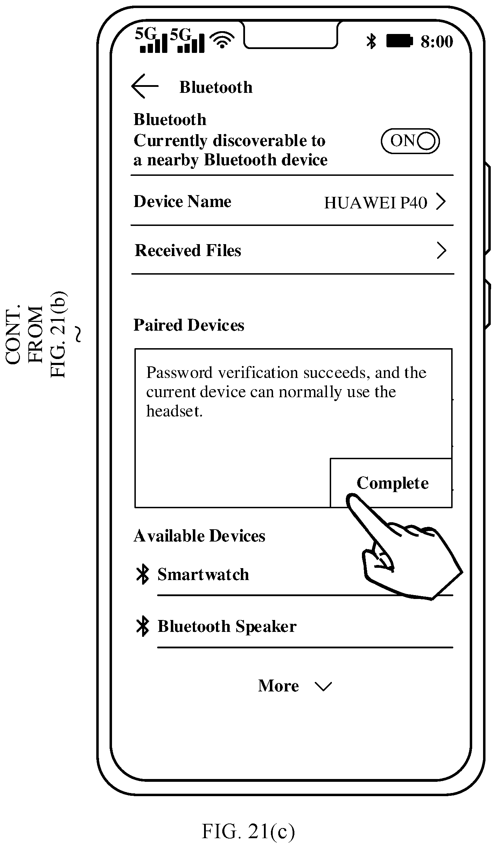

Refer to FIG. 21(a). In a Bluetooth setting interface, if the Bluetooth headset is in an encrypted state and the mobile phone B does not pass password verification, after the mobile phone B detects that the user operates "FreeBuds 3", the mobile phone B displays a prompt box shown in FIG. 21(b), where the prompt box includes a password input area. After detecting that the user inputs a correct password, the mobile phone B may display, for example, a prompt box shown in FIG. 21(c), where the prompt box includes prompt information "Password verification succeeds, and the current device can normally use the headset".

It should be noted that, when a password input by the user is incorrect, the mobile phone B displays password error prompt information, for example, "The password is incorrect. Perform password verification again". If a quantity of times the user inputs an incorrect password is greater than a preset value (for example, 5 times), the Bluetooth headset locks a password verification function for a preset time (for example, 24 hours), so as to avoid unauthorized use of the headset.

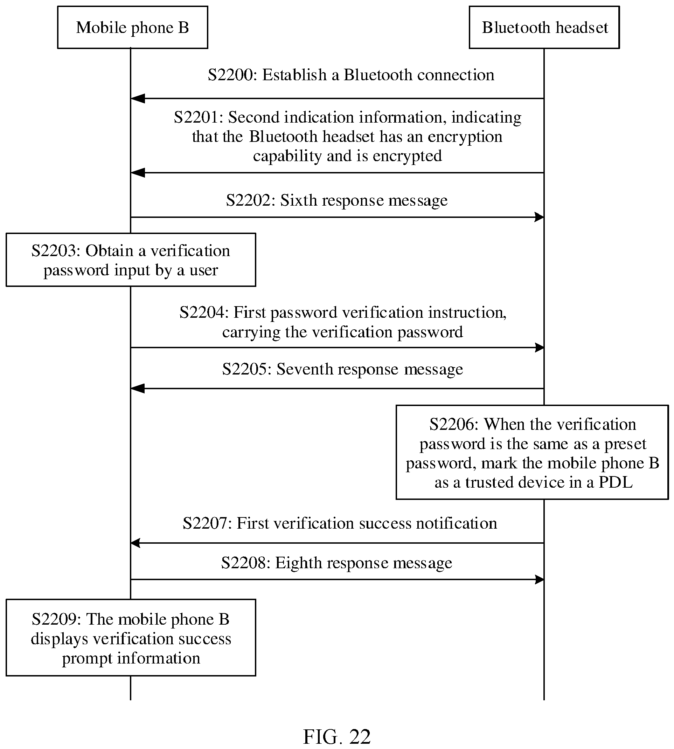

In the foregoing descriptions, for a process in which the Bluetooth headset performs password verification on the mobile phone side, refer to FIG. 22. FIG. 22 is a flowchart of a password verification method according to an embodiment of this application.

S2200: The mobile phone B and the Bluetooth headset establish a Bluetooth connection.

S2201: The Bluetooth headset sends second indication information to the mobile phone B, where the second indication information is used to indicate that the Bluetooth headset has an encryption capability and is encrypted.

In this embodiment, that the Bluetooth headset is encrypted includes that the Bluetooth headset has enabled encryption on the headset side and/or encryption on the mobile phone side.

For example, the second indication information may be "HiEcho: encryption capability=1, encryption on the mobile phone side=1, encryption on the headset side=1". Alternatively, the second indication information may be "HiEcho: encryption capability=1, encryption on the mobile phone side=1, encryption on the headset side=0".

S2202: The mobile phone B sends a sixth response message to the Bluetooth headset.

The sixth response message is used to indicate that the mobile phone B has an encryption capability. For example, the sixth response message may be "HiEcho response: success".

S2203: In response to a case that the Bluetooth headset has enabled encryption on the mobile phone side, the mobile phone B obtains a verification password input by a user.

For example, the mobile phone B may obtain the verification password of the user according to the process shown in FIG. 19(a) to FIG. 19(c) or FIG. 21(a) to FIG. 21(c).

S2204: The mobile phone B sends a first password verification instruction to the Bluetooth headset, where the instruction carries the verification password.

For example, the first password verification instruction may be "HiEcho: password=123456", used to send, to the Bluetooth headset, the verification password " 123465" input by the user.

S2205: The Bluetooth headset sends a seventh response message to the mobile phone B.

The seventh response message is used to indicate that the Bluetooth headset has received the verification password sent by the mobile phone B. For example, the seventh response message may be "HiEcho response: success".

S2206: When the verification password is the same as a preset password, the Bluetooth headset marks the mobile phone B as a trusted device in a PDL.

S2207: The Bluetooth headset sends a first verification success notification to the mobile phone B.

S2208: The mobile phone B sends an eighth response message to the Bluetooth headset. The eighth response message is used to indicate that the mobile phone B has received the first verification success notification.

S2209: The mobile phone B displays verification success prompt information. For example, the verification success prompt information may be the prompt information shown in FIG. 19(c) or FIG. 21(c).

Through steps S2200 to S2209, the Bluetooth headset can set the mobile phone B as a trusted device. After being connected to the Bluetooth headset again, the mobile phone B can normally use the Bluetooth headset without password verification.

### (2) Password verification on the headset side

The following uses an example in which the primary device is a second electronic device (for example, a mobile phone B having an encryption capability) and a Bluetooth headset (for example, FreeBuds 3), to describe the manner of verification on the headset side for the Bluetooth headset.

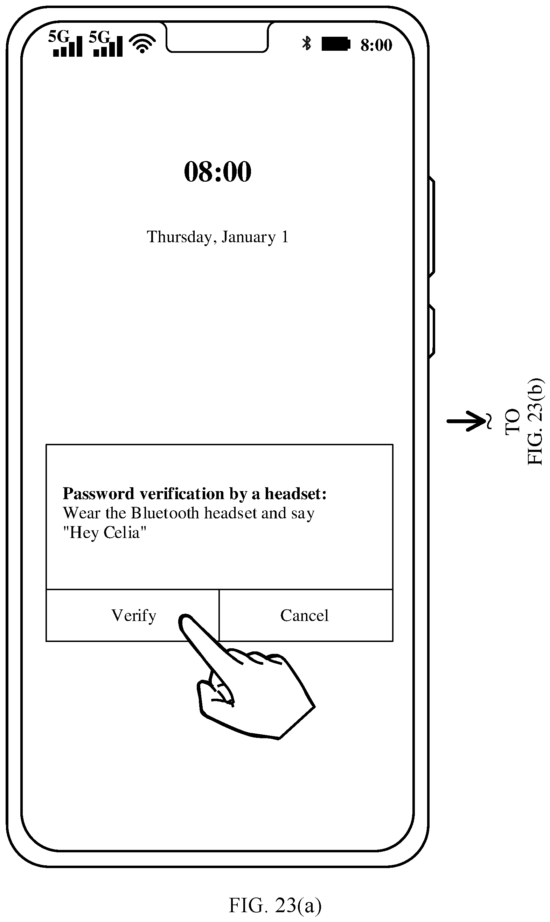

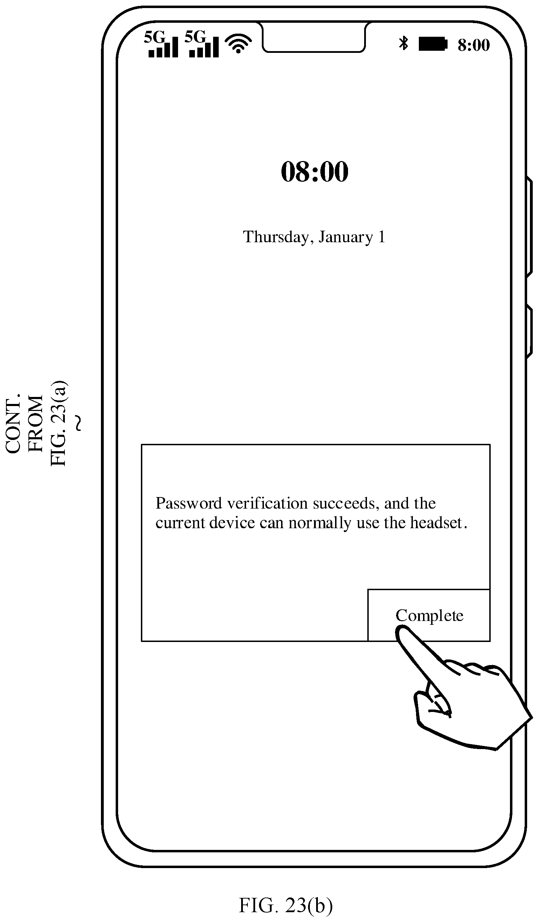

FIG. 23(a) and FIG. 23(b) are a schematic diagram of a password verification process of a Bluetooth device according to still another embodiment of this application, and relates to a process in which the Bluetooth headset performs password verification on the headset side.

Refer to FIG. 23(a). After the mobile phone B establishes a Bluetooth connection to the Bluetooth headset, if encryption on the headset side is enabled on the Bluetooth headset, the mobile phone B displays a prompt box. The prompt box may include prompt information, a "Verify" option, and a "Cancel" option. For example, when a bone voiceprint is used for encryption on the headset side, the prompt information may be "Password verification by the headset: Wear the Bluetooth headset and say 'Hey, Celia'". After the mobile phone B detects that a user operates a "Verify" icon, the mobile phone B notifies the Bluetooth headset to start password verification on the headset side.

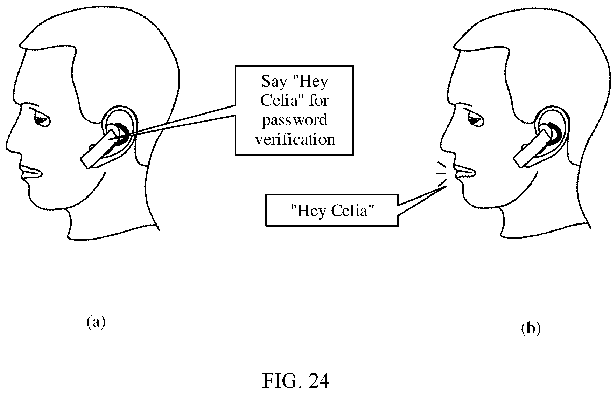

In an example, refer to FIG. 24(a). During password verification on the headset side, the Bluetooth headset first plays a password verification prompt speech, to prompt the user to input a password. For example, when a bone voiceprint is used for encryption on the headset side, the prompt speech may be "Say 'Hey, Celia' for password verification". Refer to FIG. 24(b). The Bluetooth headset collects a bone voiceprint generated when the user says "Hey, Celia", uses the bone voiceprint as a verification password, and compares the verification password with a locally stored preset password (that is, a preset bone voiceprint). If it is verified that the bone voiceprint successfully matches the preset bone voiceprint, user password verification succeeds. The Bluetooth headset notifies the mobile phone B that verification succeeds.

Refer to FIG. 23(b). After receiving a verification success message, the mobile phone B may display a prompt box, to indicate that verification on the headset side succeeds. The prompt box may include prompt information and a "Complete" option. For example, the prompt information may be "Password verification succeeds, and the current device can normally use the headset". After the mobile phone B detects that the user operates the "Complete" option, verification on the headset side ends.

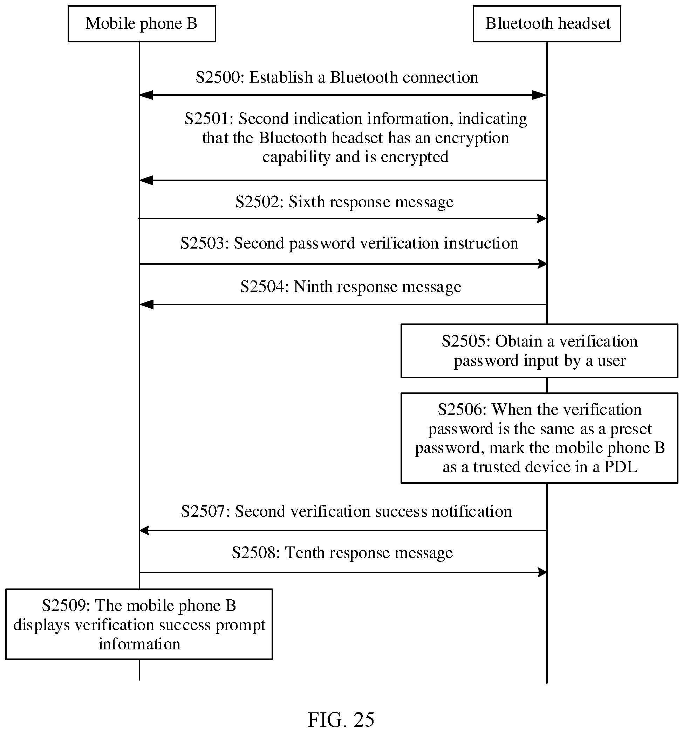

In the foregoing descriptions, for a flowchart of controlling, by the mobile phone B, the Bluetooth headset to perform verification on the headset side, refer to FIG. 25. FIG. 25 is a flowchart of a password verification method of a Bluetooth device according to an embodiment of this application.

S2500: The mobile phone B and the Bluetooth headset establish a Bluetooth connection.

S2501: The Bluetooth headset sends second indication information to the mobile phone B, where the second indication information is used to indicate that the Bluetooth headset has an encryption capability and is encrypted.

S2502: The mobile phone B sends a sixth response message to the Bluetooth headset, where the sixth response message is used to indicate that the mobile phone B has an encryption capability.

For steps S2500 to S2502, refer to descriptions of steps S2200 to S2202. Details are not described herein in this embodiment again.

S2503: In response to a case that the Bluetooth headset has enabled encryption on the headset side, the mobile phone B sends a second password verification instruction to the Bluetooth headset according to a user instruction.

For example, refer to FIG. 23(a). After detecting that the user operates the "Verify" option, the mobile phone B sends the second password verification instruction to the Bluetooth headset.

S2504: The Bluetooth headset sends a ninth response message to the mobile phone B.

The ninth response message is used to notify the mobile phone B that the Bluetooth headset has received the second password verification instruction. For example, the ninth response message may be "HiEcho response: success".

S2505: The Bluetooth headset obtains a verification password input by the user.

For example, for a specific manner of obtaining, by the Bluetooth headset, the verification password input by the user, refer to related descriptions in FIG. 24. Details are not described herein in this embodiment again.

S2507: When the verification password is the same as a preset password, the Bluetooth headset marks the mobile phone B as a trusted device in a PDL. It should be understood that, after the mobile phone B becomes the trusted device of the Bluetooth headset, the mobile phone B can normally use a service function of the Bluetooth headset.

S2508: The Bluetooth headset sends a second verification success notification to the mobile phone B. The second verification success notification is used to notify the mobile phone that encryption verification on the Bluetooth headset side succeeds.

S2509: The mobile phone B sends a tenth response message to the Bluetooth headset. The tenth response message is used to indicate that the mobile phone B has received the second verification success notification.

S2510: The mobile phone B displays password verification success prompt information. For example, the verification success prompt information may be the prompt information shown in FIG. 23(b).

The following uses an example in which the primary device is a second electronic device (for example, a mobile phone C with no encryption capability) and a Bluetooth headset (for example, FreeBuds 3), to describe the manner of verification on the headset side for the Bluetooth headset.

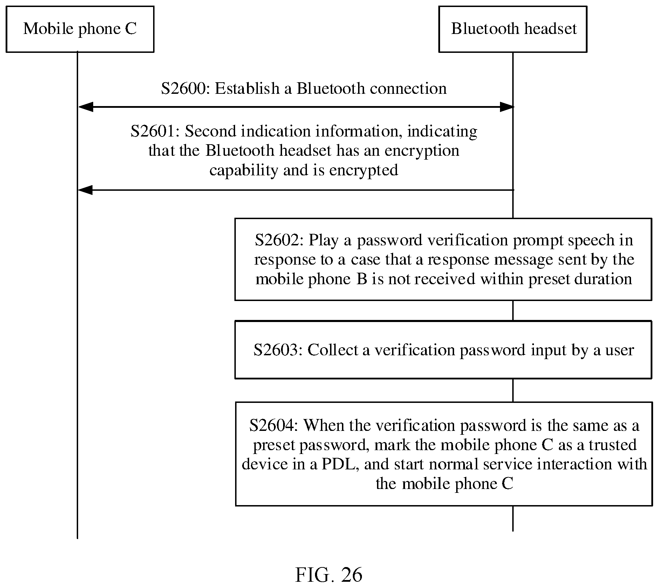

After the mobile phone C establishes a Bluetooth connection to the Bluetooth headset, if the Bluetooth headset detects that the mobile phone C has no encryption capability and encryption on the headset side is set for the Bluetooth headset, the Bluetooth headset itself starts password verification on the headset side after detecting that a user wears the Bluetooth headset. For details, refer to FIG. 26.

FIG. 26 is a flowchart of a password verification method of a Bluetooth device according to still another embodiment of this application.

S2600: The mobile phone C and the Bluetooth headset establish a Bluetooth connection.

S2601: The Bluetooth headset sends second indication information to the mobile phone C, to indicate that the Bluetooth headset has an encryption capability and is encrypted.

For steps S2600 and S2601, refer to steps S2500 and S2501. Details are not described herein in this embodiment again.

S2602: In response to a case that the Bluetooth headset does not receive, within a preset time, a response message sent by the mobile phone C, the Bluetooth headset plays a password verification prompt speech.

Specifically, when the mobile phone C has no encryption capability, the mobile phone C cannot identify that the Bluetooth headset sends the second indication information to the mobile phone C, and therefore, password verification on the mobile phone side cannot be performed. Therefore, in this embodiment, if a Bluetooth link between the mobile phone C and the Bluetooth headset is normal, and the Bluetooth headset does not receive, within the preset time (for example, 5 seconds), the response message that is related to the second indication information and that is returned by the mobile phone C, the Bluetooth headset determines that the mobile phone C has no encryption capability, and enables verification on the headset side by itself.

In a possible implementation, after detecting that the user wears the Bluetooth headset, the Bluetooth headset may start to repeatedly play the password verification prompt speech, so as to prevent the user from missing listening to the speech.

S2603: Collect a verification password input by the user.

For example, the verification password may be a bone voiceprint corresponding to a verification password "Hey, Celia" uttered by the user, or may be voice information sent by the user, for example, "123456".

S2604: When the verification password is the same as a preset password in the Bluetooth headset, mark the mobile phone C as a trusted device in a PDL, and start normal service interaction with the mobile phone C.

According to the headset-side password verification method provided in this embodiment, even if the primary device connected to the encrypted Bluetooth headset has no encryption capability, the Bluetooth headset can enable verification on the headset side by itself, and normally perform service interaction with the mobile phone C after verification succeeds. The method helps expand a use range of the Bluetooth headset, and improves user experience.

Third part: The primary device performs other setting on the Bluetooth headset.

In this embodiment, a trusted primary device or an untrusted primary device that passes password verification can change settings of the Bluetooth headset, including changing a password, canceling a password, setting owner information, setting another trusted primary device, and the like. The following describes these setting processes by using an example in which the primary device is a mobile phone A.

### 1. Changing a password

### (1) Changing a password that is set on a mobile phone side

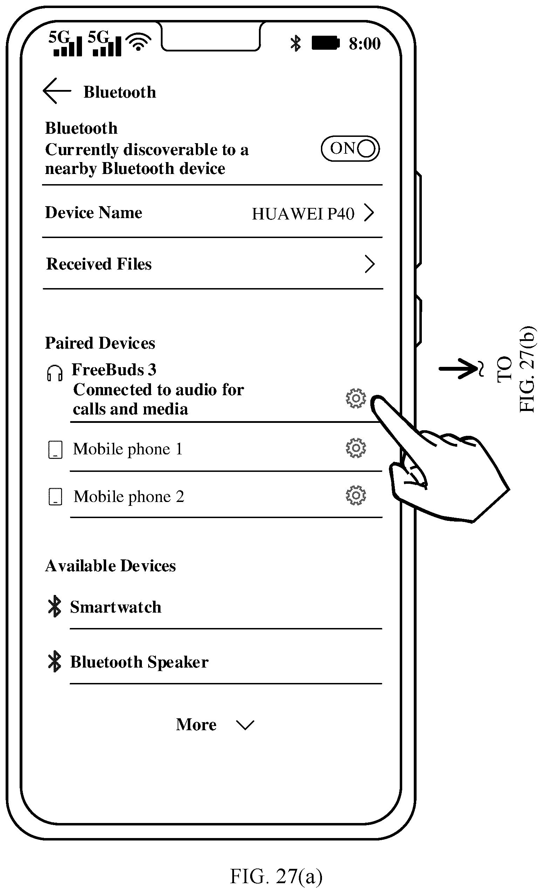

FIG. 27(a) to FIG. 27(e) are a schematic diagram of a password changing process of a Bluetooth device according to an embodiment of this application, and relates to a process of changing, in a Bluetooth setting option of the mobile phone A, a password that is set on the mobile phone side.

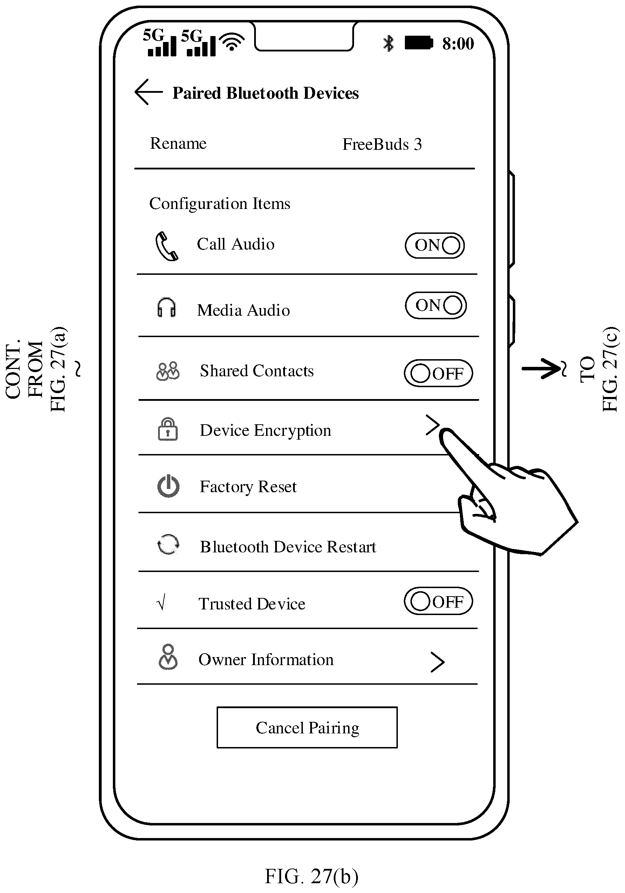

Refer to FIG. 27(a). After detecting that a user operates a "Settings" icon of the Bluetooth headset FreeBuds 3, the mobile phone A displays, for example, a setting interface shown in FIG. 27(b).

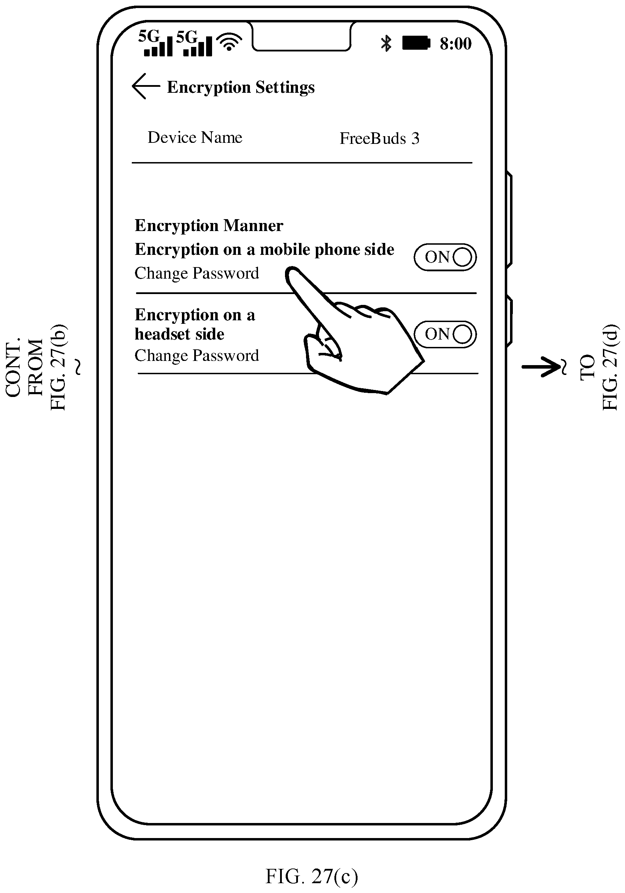

Refer to FIG. 27(b). After the mobile phone A detects that the user operates a "Device Encryption" option, the mobile phone A displays, for example, a setting interface shown in FIG. 27(c).

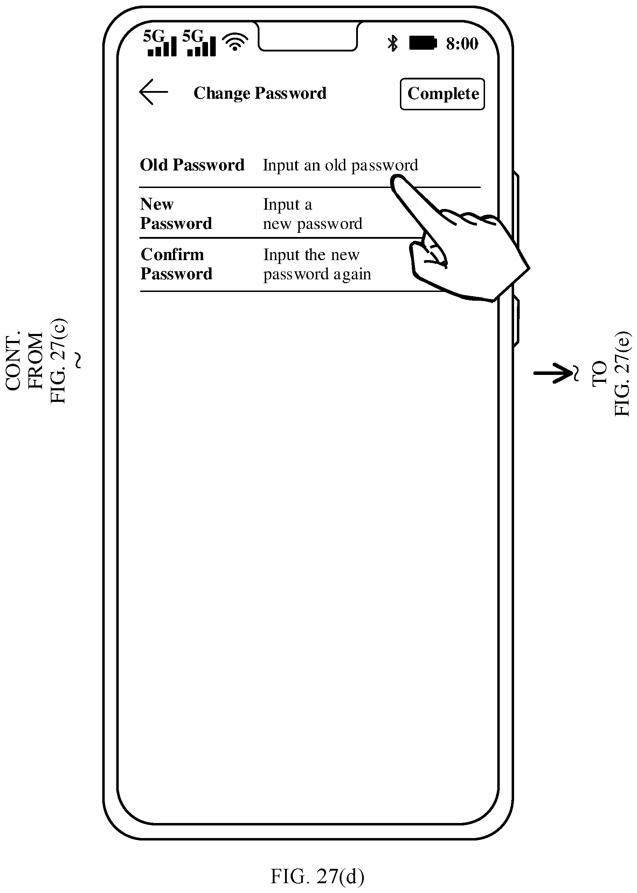

Refer to FIG. 27(c). After detecting that the user operates a "Change Password" option corresponding to encryption on the mobile phone side, the mobile phone A displays, for example, a setting interface shown in FIG. 27(d).

Refer to FIG. 27(d). The setting interface includes an old-password input area, a new-password input area, a confirmation password input area, and a "Complete" icon. When the mobile phone A detects that an old password input by the user is correct and a new password is the same as a confirmation password, password changing is completed.

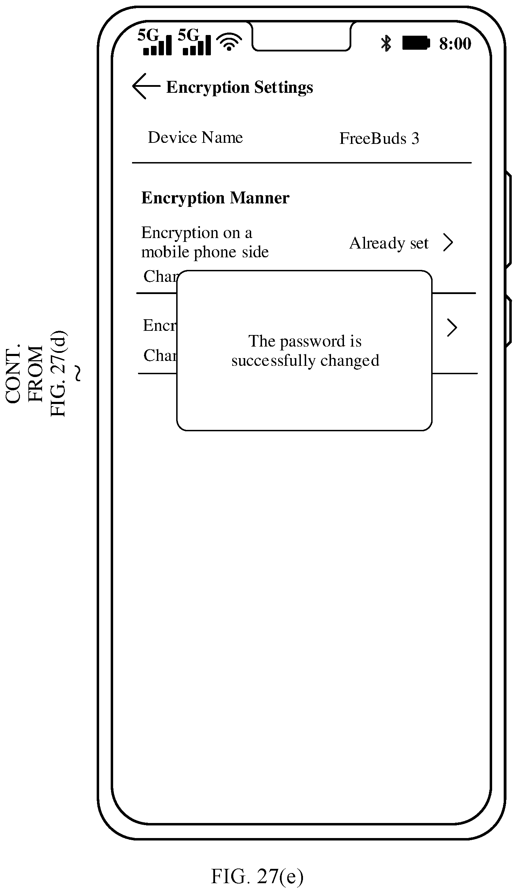

Refer to FIG. 27(e). After the password is successfully changed, the mobile phone A displays change success prompt information, for example, "The password is successfully changed".

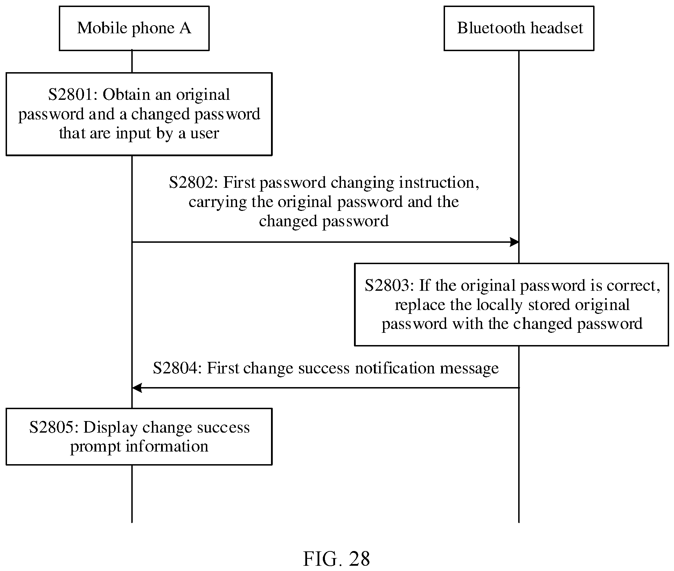

FIG. 28 is a flowchart of a password changing method of a Bluetooth device according to an embodiment of this application. The password changing procedure is also performed on a basis that a Bluetooth connection has been established between the mobile phone A and the Bluetooth headset and both the mobile phone A and the Bluetooth headset have Bluetooth encryption capabilities. The password changing method specifically includes the following steps.

S2801: The mobile phone A obtains an original password and a changed password that are input by a user.

In this embodiment, the mobile phone A may obtain, according to the password changing procedure shown in FIG. 27(a) to FIG. 27(e), the original password and the changed password that are input by the user.

S2802: The mobile phone A sends a first password changing instruction to the Bluetooth headset, where the instruction carries the original password and the changed password.

S2803: If the original password input by the user is correct, the Bluetooth headset replaces the locally stored original password with the changed password.

For steps S2801 to S2803, in some other implementations, alternatively, the Bluetooth headset may first verify whether the original password input by the user is correct, and after verification succeeds, obtain the changed password through the mobile phone A.

S2804: The Bluetooth headset sends a first change success notification message to the mobile phone. The first change success notification message is used to notify the mobile phone that the Bluetooth headset has changed the password input on the mobile phone side.

S2805: The mobile phone A displays change success prompt information. For example, refer to FIG. 27(e). The prompt information may be "The password is successfully changed".

Through the foregoing process, the user can change the password of the Bluetooth headset by using the mobile phone A. After the password is successfully changed, after connecting a Bluetooth device to the Bluetooth headset, the user needs to input the changed password to normally use a service function of the headset.

### (2) Changing a password that is set on a headset side

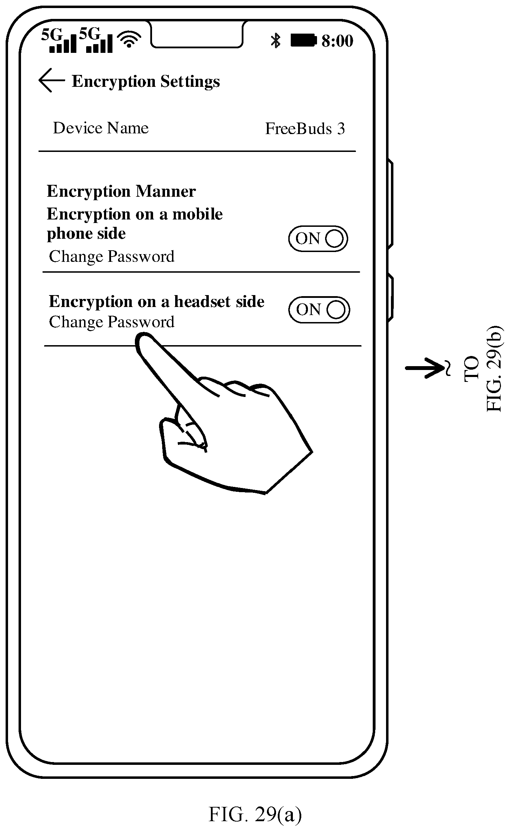

FIG. 29(a) to FIG. 29(c) are a schematic diagram of a password changing process of a Bluetooth device according to another embodiment of this application, and relates to a process of changing, in a Bluetooth setting option of the mobile phone A, a password that is set on the headset side.

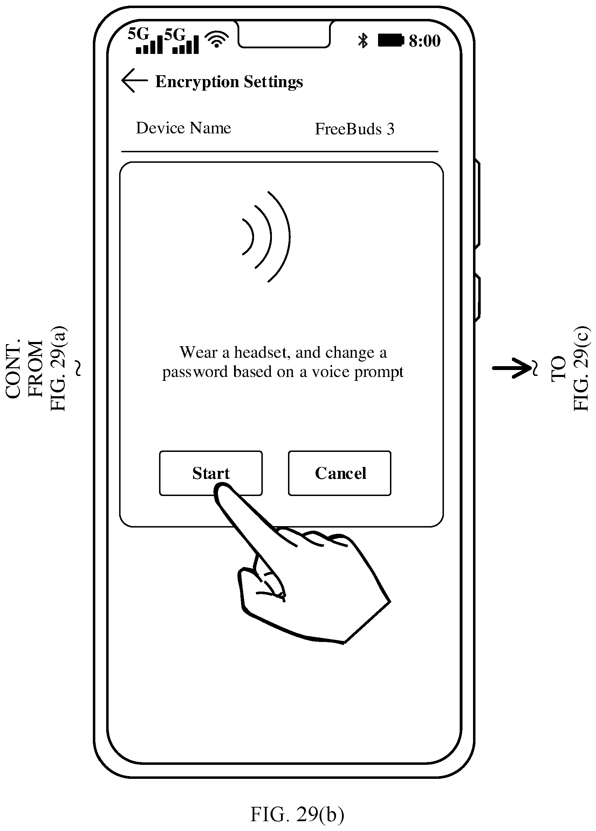

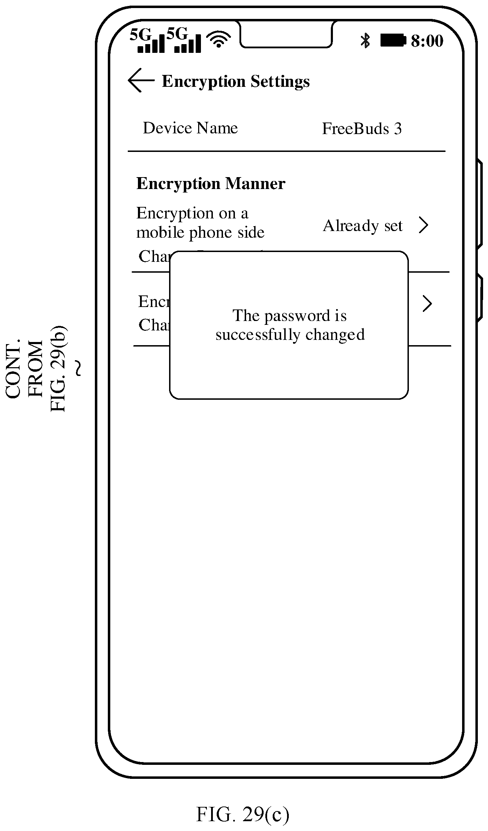

Refer to FIG. 29(a). After detecting that a user operates a "Change Password" option corresponding to encryption on the headset side, the mobile phone A displays, for example, a password changing interface shown in FIG. 29(b). The password changing interface includes prompt message, a "Start" option, and a "Cancel" option. For example, the prompt information may be "Wear the headset, and change the password based on a voice prompt". After the mobile phone A detects that the user operates the "Start" option, the mobile phone A controls the Bluetooth headset to perform password resetting. Specifically, for a password resetting process of the Bluetooth headset, refer to FIG. 14. Details are not described herein in this embodiment again. After the password is successfully changed, the mobile phone A displays, for example, a prompt box shown in FIG. 29(c), where the prompt box includes prompt information "The password is successfully changed".

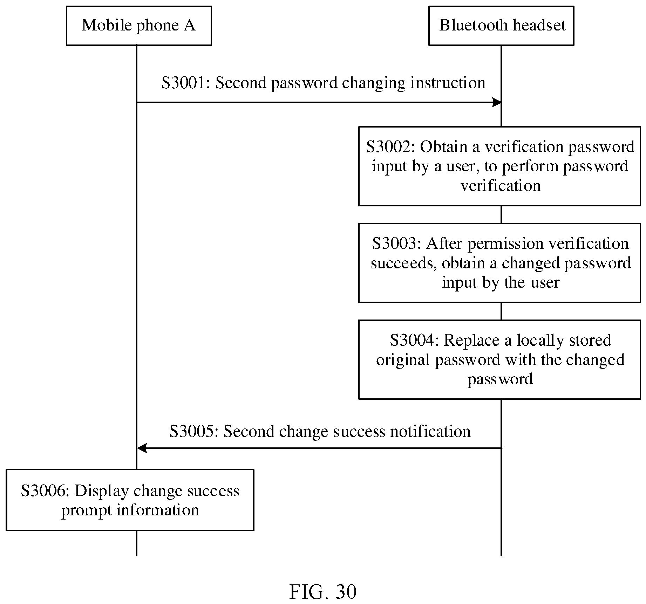

In the foregoing descriptions, for a process in which the mobile phone A controls the Bluetooth headset to change the password input on the headset side, refer to FIG. 30. FIG. 30 is a flowchart of a password changing method of a Bluetooth device according to still another embodiment of this application.

S3001: The mobile phone A sends a second password changing instruction to the Bluetooth headset.

For example, refer to FIG. 29(b). After the mobile phone A detects that a user operates the "Start" option, the mobile phone A sends the second password changing instruction to the Bluetooth headset. The second password changing instruction is used to instruct the Bluetooth headset to change an original password that is set on the headset side.

S3002: The Bluetooth headset obtains a verification password input by the user, to perform password verification.

For example, the Bluetooth headset may obtain the password for password verification of the Bluetooth headset according to the process shown in FIG. 24. If the verification password is correct, it indicates that the user has permission to change the password, and the mobile phone A performs a next step.

S3003: After password verification succeeds, the Bluetooth headset obtains a changed password input by the user. For example, the Bluetooth headset may obtain the changed password according to the process shown in FIG. 14.

S3004: The Bluetooth headset replaces the locally stored original password with the changed password.

S3005: The Bluetooth headset sends a second change success notification to the mobile phone A. The second change success notification is used to notify the mobile phone that the Bluetooth headset has changed the password input on the headset side.

S3006: The mobile phone A displays change success prompt information. For example, refer to FIG. 29(c). The prompt information may be "The password is successfully changed".

### 2. Canceling a password

### (1) Canceling a password that is set on a mobile phone side

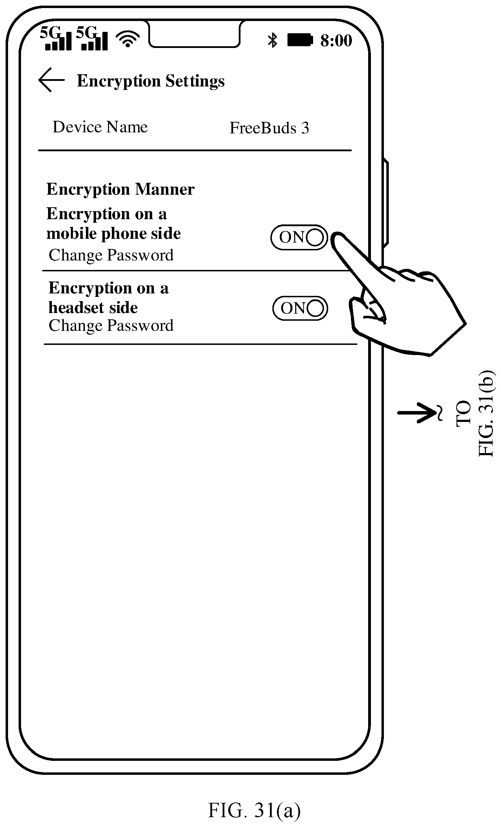

FIG. 31(a) to FIG. 31(d) are a schematic diagram of a password cancellation process of a Bluetooth device according to an embodiment of this application, and relates to a process of disabling encryption on the mobile phone side in a Bluetooth setting option of the mobile phone A.

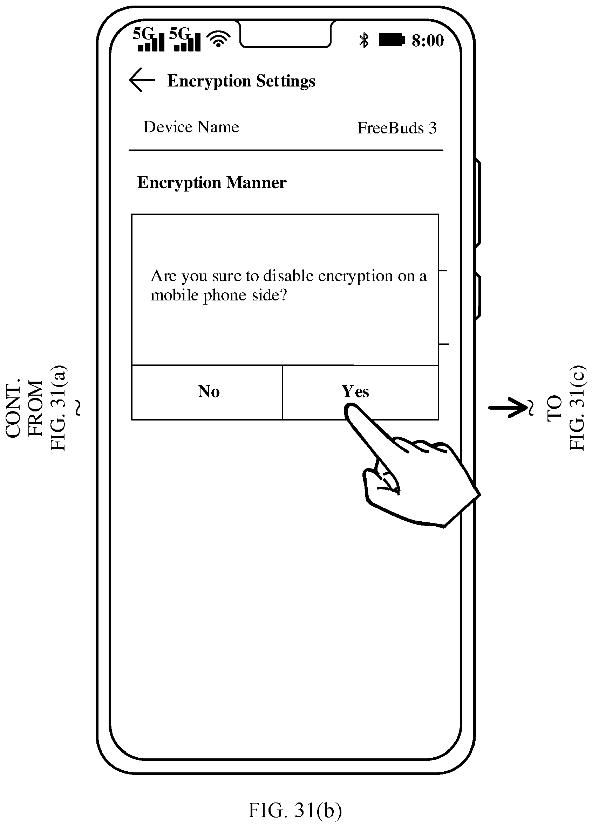

Refer to FIG. 31(a). In an encryption setting interface, after the mobile phone A detects an operation of disabling encryption on the mobile phone side by a user, the mobile phone A may display, for example, a prompt box shown in FIG. 31(b).

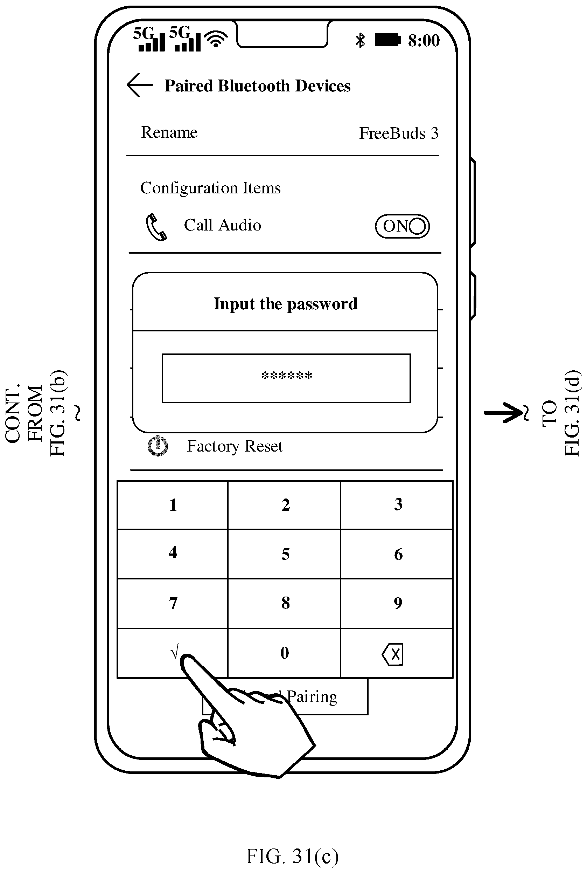

Refer to FIG. 31(b). The prompt box includes prompt information, a "No" option, and a "Yes" option. For example, the prompt information may be "Are you sure to disable encryption on the mobile phone side?". When the mobile phone detects that the user operates the "No" option, encryption on the mobile phone side is not disabled this time. If the mobile phone A detects that the user operates the "Yes" option, the mobile phone A displays, for example, a prompt box shown in FIG. 31(c).

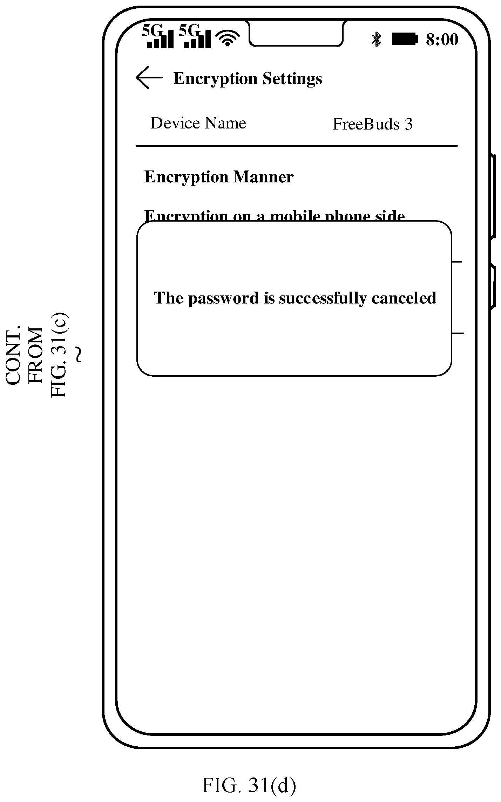

Refer to FIG. 31(c). The prompt box includes a password input area, used to obtain a password input by the user, for password verification. If the mobile phone A detects that the user inputs a correct password, encryption of the Bluetooth headset on the mobile phone side is successfully canceled. Then, refer to FIG. 31(d). The mobile phone displays prompt information "The password is successfully canceled".

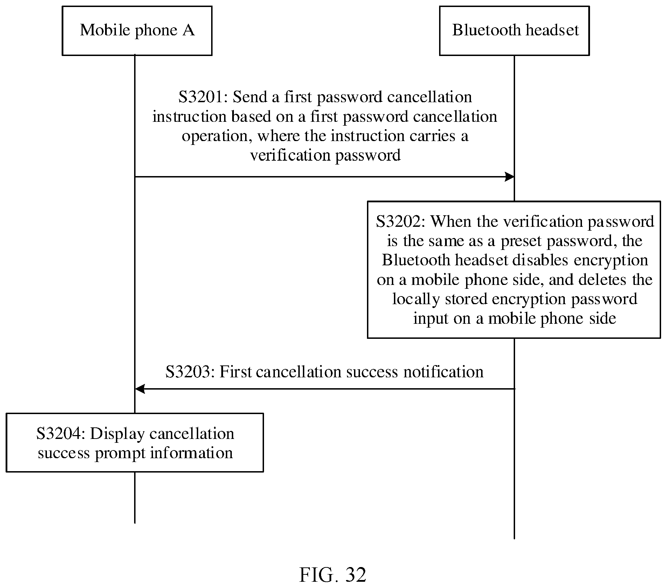

FIG. 32 is a flowchart of a password cancellation method of a Bluetooth device according to an embodiment of this application, and relates to a process of canceling a password of the Bluetooth headset on the mobile phone A. The password cancellation procedure is also performed on a basis that a Bluetooth connection has been established between the mobile phone A and the Bluetooth headset and both the mobile phone A and the Bluetooth headset have Bluetooth encryption capabilities. The password cancellation method specifically includes the following steps.

S3201: The mobile phone A sends a first password cancellation instruction to the Bluetooth headset based on a first password cancellation operation, where the instruction carries a verification password.

For example, refer to FIG. 31(a) to FIG. 31(c). After the mobile phone A detects the first password cancellation operation in which the user disables encryption on the mobile phone side and inputs the verification password, the mobile phone A sends the password cancellation instruction to the Bluetooth headset, where the instruction carries the verification password.

S3202: When the verification password is the same as a preset password, the Bluetooth headset disables encryption on the mobile phone side, and deletes the locally stored password input on the mobile phone side.

S3203: The Bluetooth headset sends a first cancellation success notification to the mobile phone A. The first cancellation success notification is used to notify the mobile phone that the Bluetooth headset has disabled encryption on the mobile phone side.

S3204: The mobile phone A displays cancellation success prompt information. For example, refer to FIG. 31(d). The prompt information may be "The password is successfully canceled".

Through steps S3201 to S3204, the user can cancel, by using the mobile phone A, the password that is of the Bluetooth headset and that is set on the mobile phone side. After the password is canceled, after any Bluetooth device is connected to the Bluetooth headset, no password needs to be input on the mobile phone side for password verification.

### (2) Canceling a password that is set on a headset side

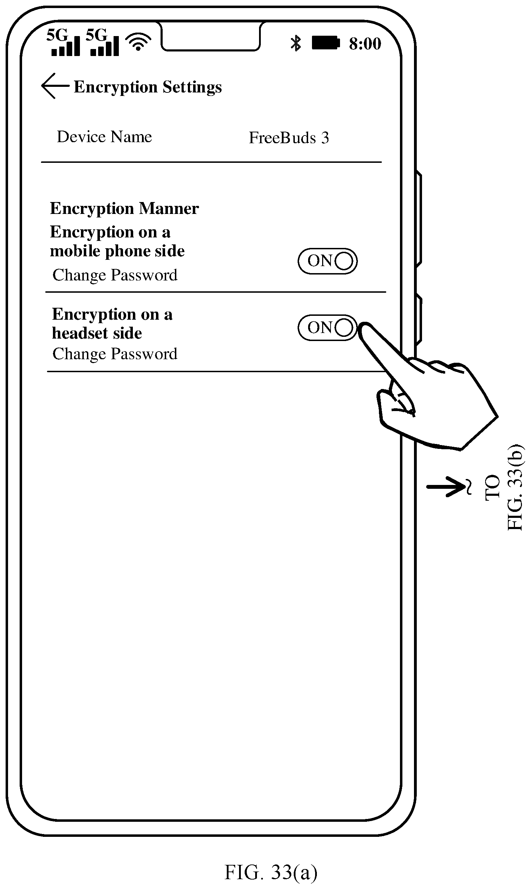

FIG. 33(a) to FIG. 33(d) are a schematic diagram of a password cancellation process of a Bluetooth device according to another embodiment of this application, and relates to a process of canceling encryption on the headset side in a Bluetooth setting option of the mobile phone A.

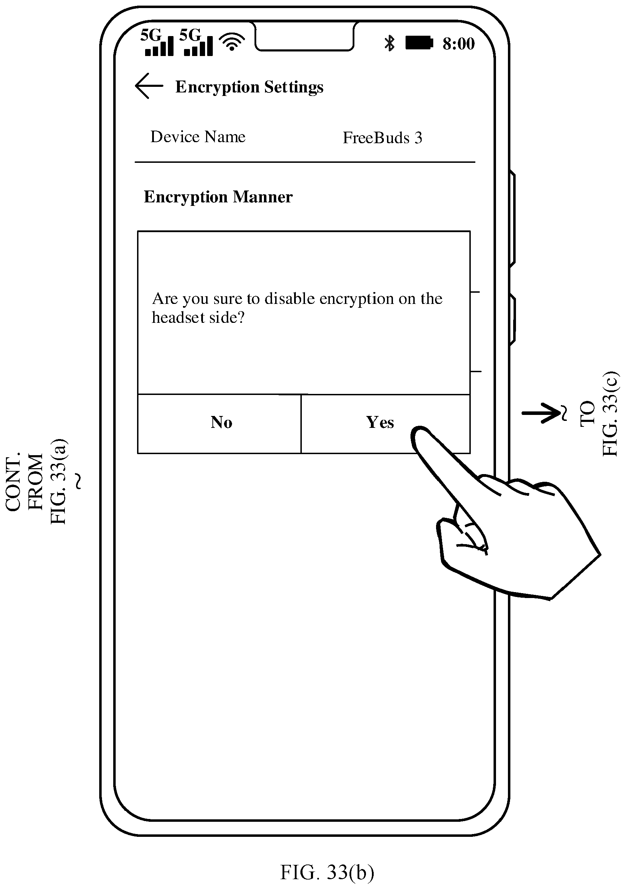

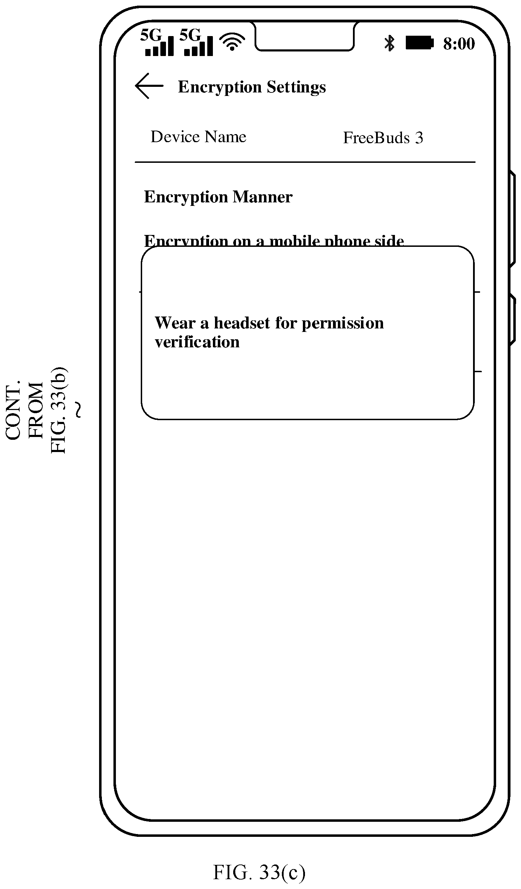

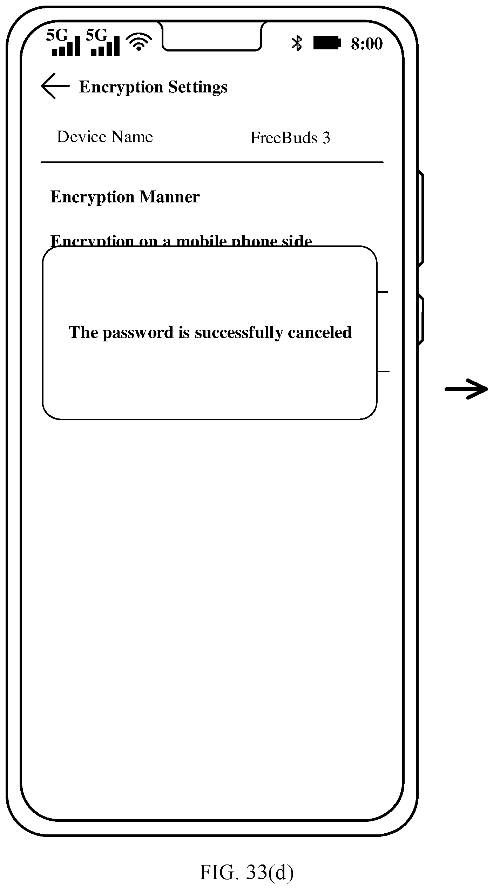

Refer to FIG. 33(a). After the mobile phone A detects an operation of disabling encryption on the headset side by a user, the mobile phone A displays, for example, a prompt box shown in FIG. 33(b). The prompt box includes prompt information, a "No" option, and a "Yes" option. For example, the prompt information may be "Are you sure to disable encryption on the headset side". When the mobile phone detects that the user operates the "No" option, the password of the Bluetooth headset is not canceled this time. When the mobile phone A detects that the user operates the "Yes" option, the mobile phone A displays, for example, a prompt box shown in FIG. 33(c). The prompt box includes prompt information "Wear the Bluetooth headset for password verification". Specifically, after the user wears the Bluetooth headset and inputs a verification password, if verification succeeds, the Bluetooth headset notifies the mobile phone A that the password is successfully canceled. After determining that the password is successfully canceled, the mobile phone A displays, for example, prompt information "The password is successfully canceled" shown in FIG. 33(d).

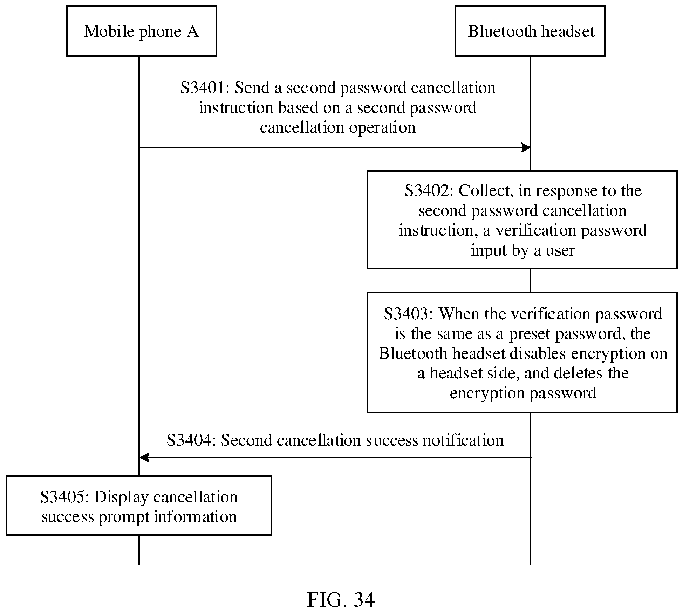

FIG. 34 is a flowchart of a password cancellation method of a Bluetooth device according to another embodiment of this application, and relates to a process of canceling a password of the Bluetooth headset on the mobile phone A.

S3401: The mobile phone A sends a second password cancellation instruction to the Bluetooth headset based on a second password cancellation operation.

For example, refer to FIG. 33(a). After the mobile phone A detects the second password cancellation operation in which a user disables encryption on the headset side, the mobile phone A sends the second password cancellation instruction to the Bluetooth headset. The instruction is used to instruct the Bluetooth headset to disable encryption on the headset side.

S3402: In response to the second password cancellation instruction, the Bluetooth headset collects a verification password input by the user. For example, the Bluetooth headset may collect, by using the method shown in FIG. 24, the verification password input by the user.

S3403: When the verification password is the same as a preset password, the Bluetooth headset disables encryption on the headset side, and deletes the password. The password is a password collected on the headset side.

S3404: The Bluetooth headset sends a second cancellation success notification to the mobile phone A. The second cancellation success notification is used to notify the mobile phone A that encryption of the Bluetooth headset on the headset side is disabled.

S3405: The mobile phone A displays cancellation success prompt information. For example, the prompt information may be "The password is successfully canceled".

Through steps S3401 to S3405, the user can disable encryption on the headset side by using the mobile phone A. After the password is canceled, any Bluetooth device does not need password verification on the headset side after being connected to the Bluetooth headset.

### 3. Setting owner information

A secondary device (for example, a Bluetooth headset) may be lost and found by another person during use. To help a headset finder return a Bluetooth headset, an embodiment of this application provides an owner information prompt method.

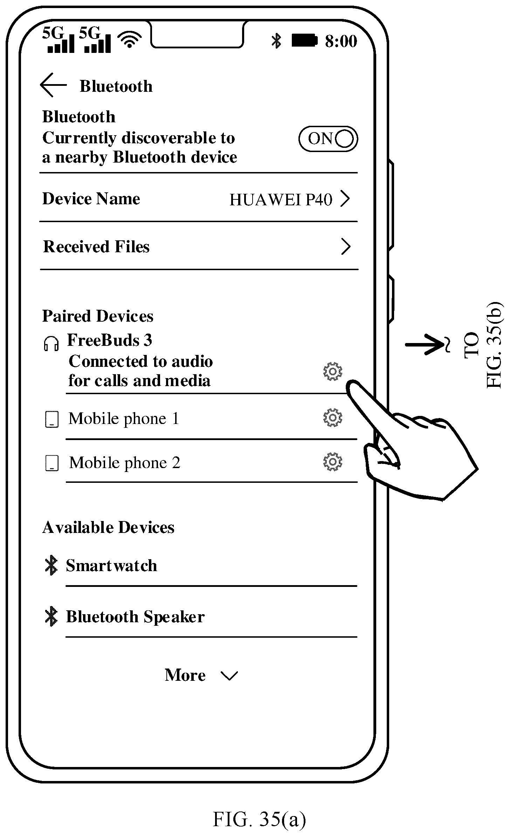

FIG. 35(a) to FIG. 35(c) are a schematic diagram of an owner information setting process according to an embodiment of this application, and relates to a process of setting owner information in Bluetooth settings of the mobile phone A.

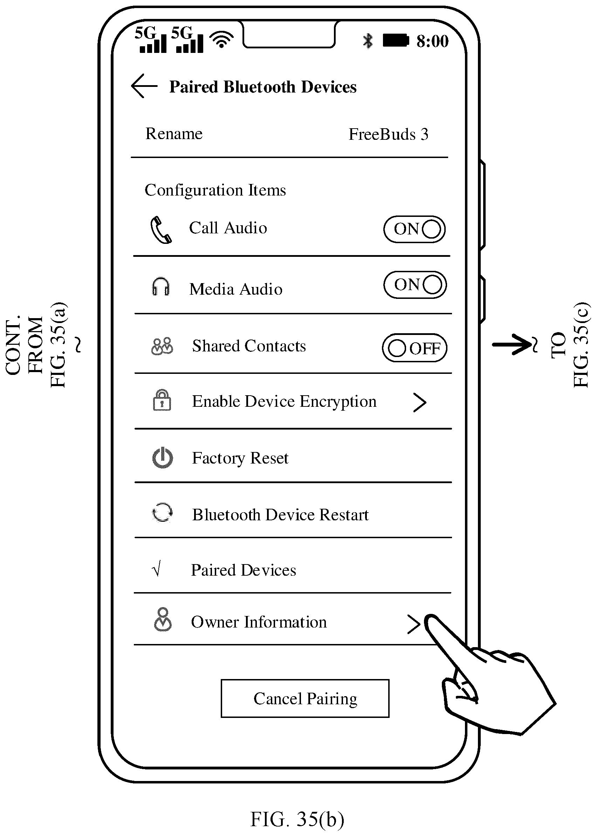

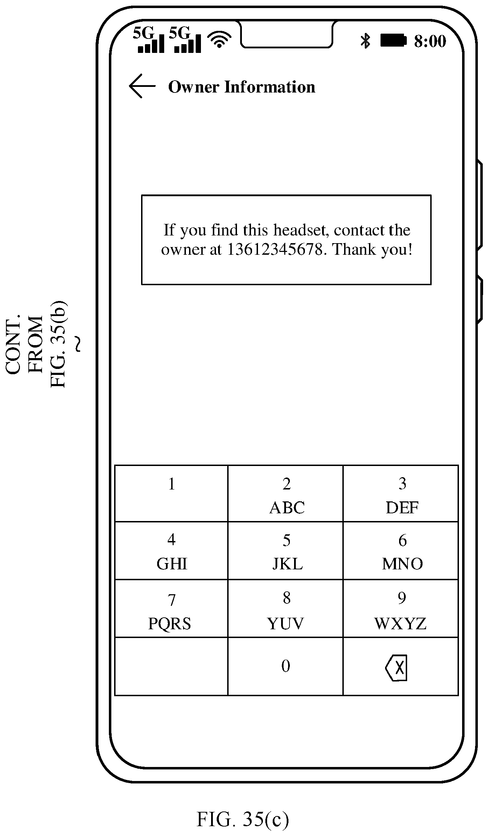

Refer to FIG. 35(a). In a Bluetooth setting interface of the mobile phone A, after detecting that a user operates a "Settings" icon of FreeBuds 3, the mobile phone A enters, for example, a setting interface shown in FIG. 35(b). An "Owner Information" setting item is configured in the setting interface. After detecting that the user operates the "Owner Information" setting item, the mobile phone A displays, for example, an owner information setting interface shown in FIG. 35(c). The owner information setting interface includes an owner information input box, used to input the owner information according to a user instruction. For example, the owner information may be: "If you find this headset, contact the owner at 13612345678. Thank you!" After obtaining the owner information, the mobile phone A sends the owner information to the Bluetooth headset for storage, so that the owner information is successfully set.

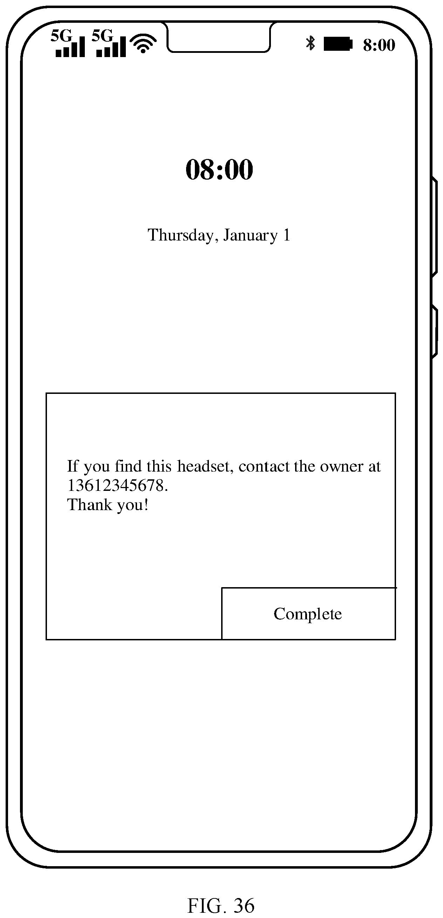

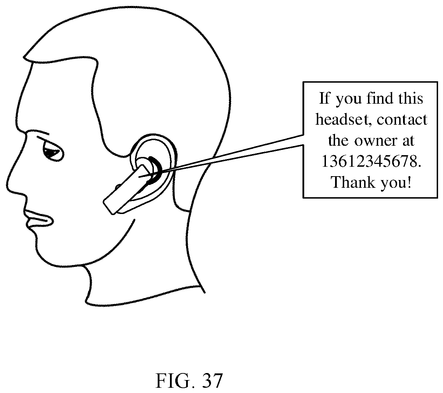

After the owner information is successfully set, if the encrypted Bluetooth headset receives an incorrect password for a plurality of times (for example, five times), the Bluetooth headset switches to a locked state and remains locked for preset duration (for example, 24 hours). Then, the Bluetooth headset controls the currently connected primary device to display the owner information (for example, as shown in FIG. 36), or the Bluetooth headset itself plays the owner information preset by the user (for example, as shown in FIG. 37), so as to prompt the user to return the Bluetooth headset to the owner.

In addition, the user may also modify or delete the owner information in the owner information setting interface. For example, after an owner contact method is changed, the user may change the original contact method to a new contact method in the owner information setting interface.

### 4. Setting a trusted device

A PDL is stored in the Bluetooth headset, as shown in Table 1. The PDL includes basic information of a device already paired with the Bluetooth headset, for example, a device name, a device address, and whether the device is a trusted device. When the PDL is empty, the Bluetooth headset currently has no paired device other than the mobile phone A. When the PDL is not empty, the Bluetooth has another paired device.

**Table 1 PDL**

| Device name | Device address | Trusted device |
|---|---|---|
| HUAWEI P40 | Address 1 | Yes |
| HUAWEI Mate 30 | Address 2 | No |
| HUAWEI nova 7 | Address 3 | No |

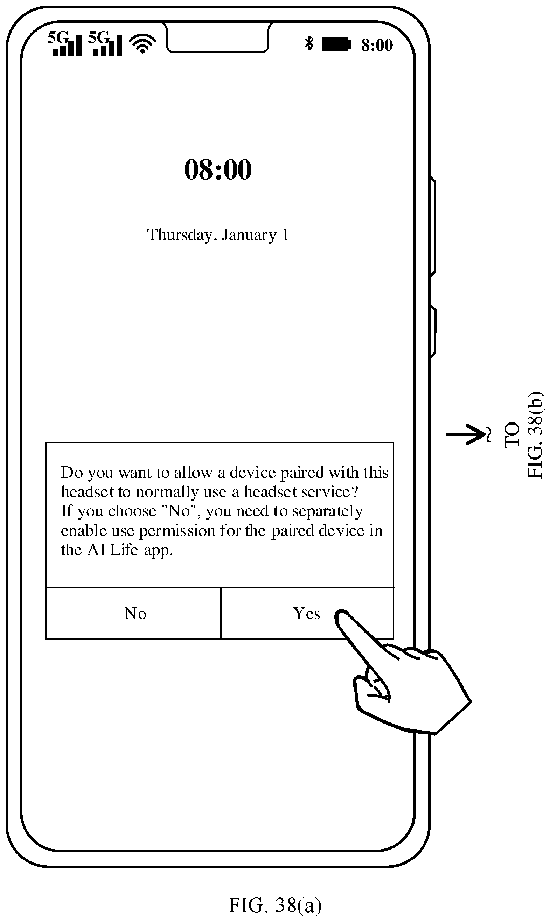

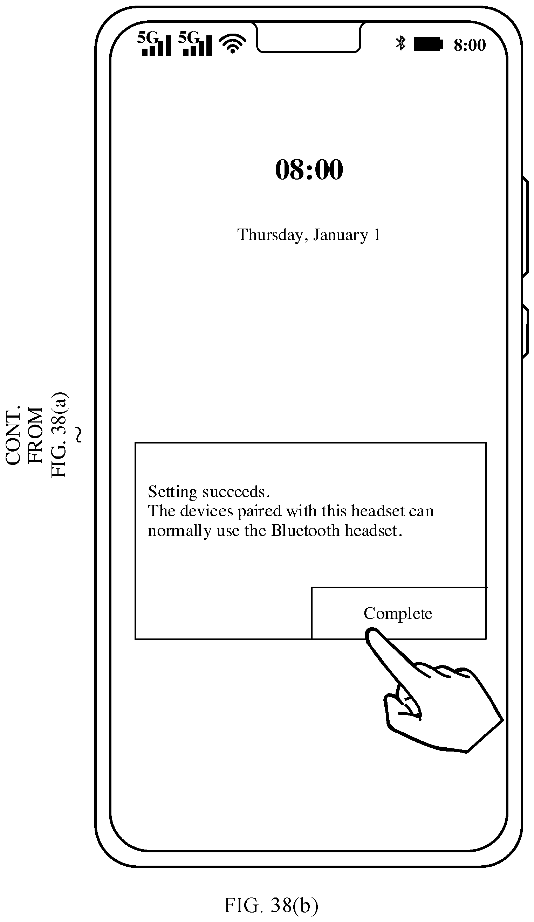

FIG. 38(a) and FIG. 38(b) are a schematic diagram of a trusted device setting process according to an embodiment of this application, and relates to a process of guiding, by using a pop-up box on the mobile phone A, a user to set a trusted device of the Bluetooth headset.

Refer to FIG. 38(a). After the mobile phone A guides, by using the pop-up box, the user to complete password setting, the mobile phone A may display a third prompt box, to prompt the user to set, as a trusted device, an electronic device already paired with the Bluetooth headset. For example, the third prompt box may include prompt information, a "No" option, and a third option (for example, a "Yes" option). The prompt information may be "Do you want to allow a device paired with this headset to normally use a headset service? If you choose 'No', you need to separately enable use permission for the paired device in the AI Life app". When detecting that the user selects the "No" option, the mobile phone A cancels current setting. When detecting a second operation of the user, for example, an operation performed by the user on the "Yes" option, the mobile phone A sets all devices already paired with the Bluetooth headset as trusted devices, so that the devices can normally use the Bluetooth headset without password verification after being connected to the Bluetooth headset.

Refer to FIG. 38(b). The mobile phone A displays a prompt box after completing trusted device setting of the Bluetooth headset. The prompt box includes prompt information and a "Complete" option. The prompt information may be "Setting succeeds: The devices paired with this headset can normally use the Bluetooth headset".

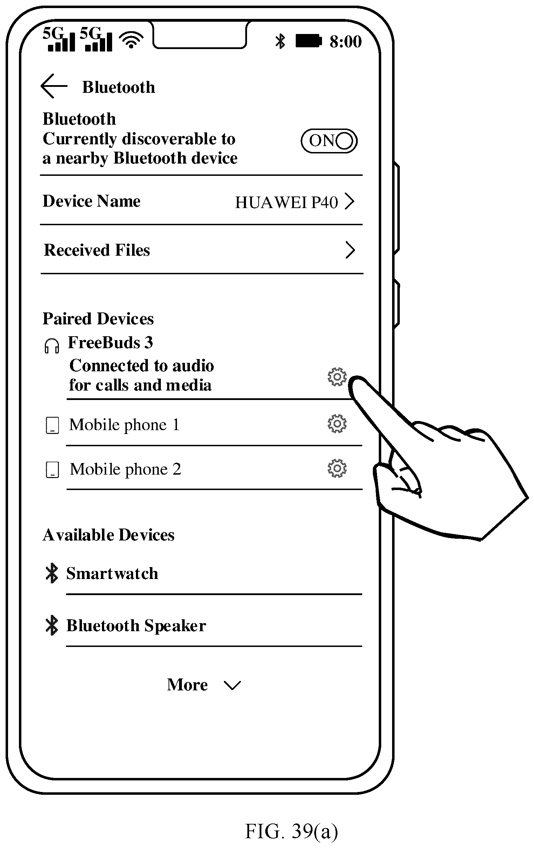

FIG. 39(a) to FIG. 39(e) are a schematic diagram of a trusted device setting process according to another embodiment of this application, and relates to a process of setting a trusted device of the Bluetooth headset in Bluetooth settings of the mobile phone A.

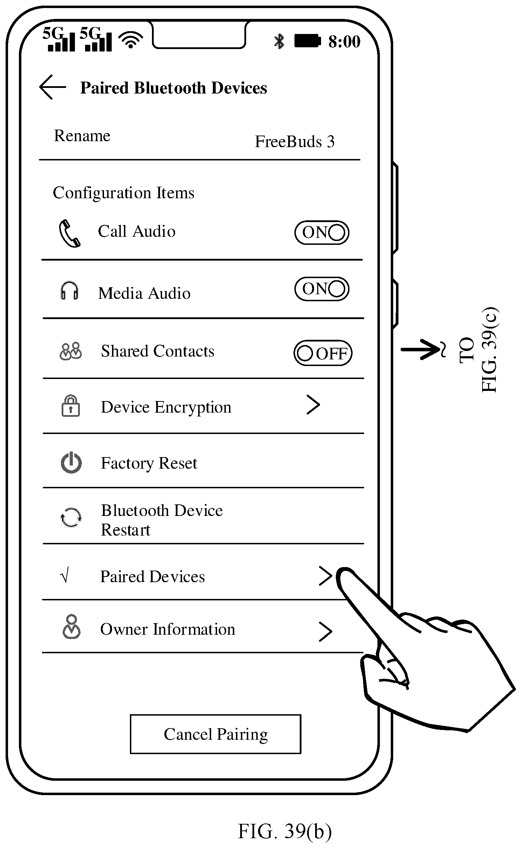

Refer to FIG. 39(a). In a Bluetooth setting interface, after the mobile phone A detects that a user operates a "Settings" icon of FreeBuds 3, the mobile phone A may display, for example, a setting interface shown in FIG. 39(b).

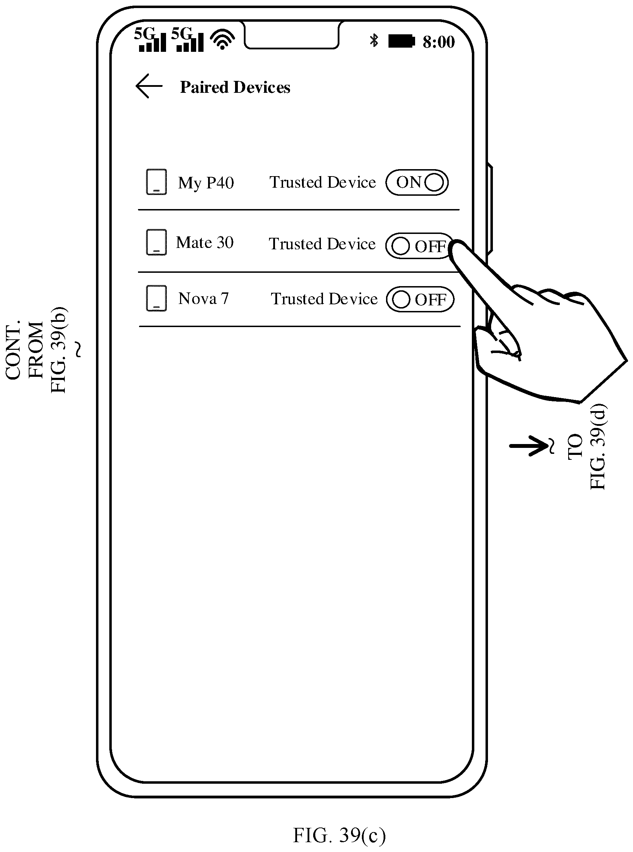

Refer to FIG. 39(b). The setting interface includes a "Paired Devices" option. After the mobile phone A detects that the user operates the "Paired Devices" option, the mobile phone A displays, for example, a trusted device setting interface shown in FIG. 39(c).

Refer to FIG. 39(c). The trusted device setting interface may include information about a device already paired with the Bluetooth headset FreeBuds 3, for example, a device name and a trusted device setting option. For example, names of devices already paired with the FreeBuds 3 include "My P40", "Mate 30", and "nova 7", where the My P40 is a trusted device, and the Mate 30 and the nova 7 are untrusted devices. The user may set, by performing a second operation based on a requirement of the user, whether any paired device is a trusted device. For example, the user sets whether "My P40", "Mate 30", or "nova 7" is a trusted device. For example, if the mobile phone A detects an operation of setting the Mate 30 as a trusted device by the user, the mobile phone A may perform authentication on the user in a password input interface.

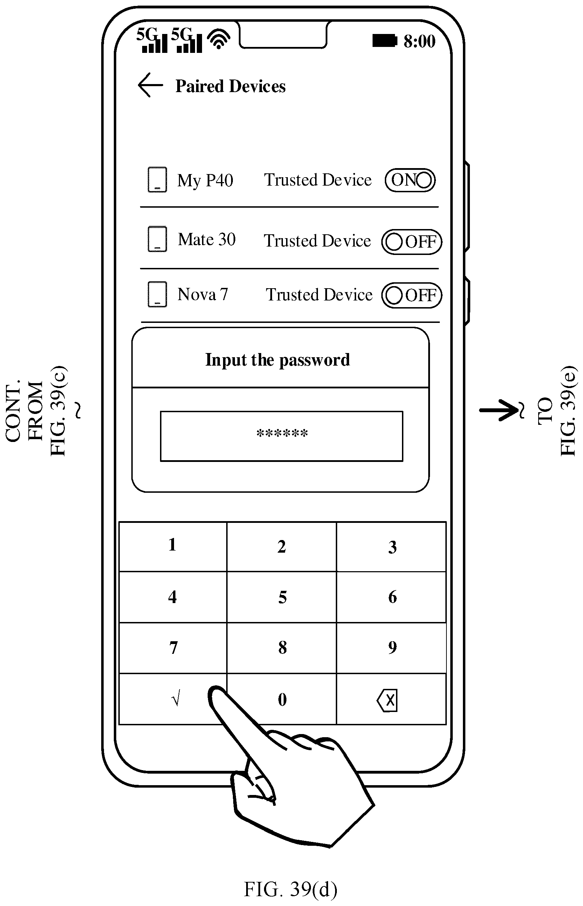

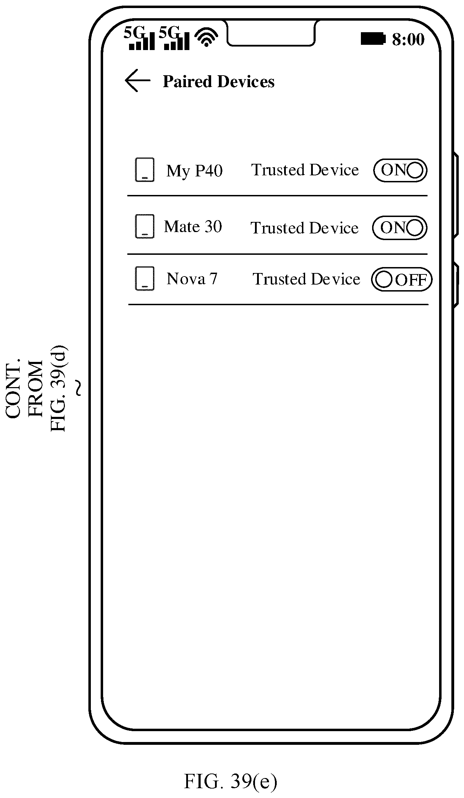

Refer to FIG. 39(d). The password input interface includes a password input box, used to input a password of the Bluetooth headset. After detecting that the user inputs a correct Bluetooth password, the mobile phone A changes the Mate 30 to a trusted device, as shown in FIG. 39(e). It should be noted that, after the Mate 30 is changed to a trusted device, a trusted device identifier of the Mate 30 in the PDL of the Bluetooth headset is changed to "Yes".

After a paired device is connected to the Bluetooth headset again, if the Bluetooth headset is in an encrypted state and the paired device is a trusted device (for example, the Mate 30), the device can normally use the Bluetooth headset. If the paired device (for example, the nova 7) is an untrusted device, the Bluetooth headset needs to perform password verification on the device. For a specific password verification process, refer to the process shown in FIG. 19(a) to FIG. 19(c) or FIG. 23(a) and FIG. 23(b).

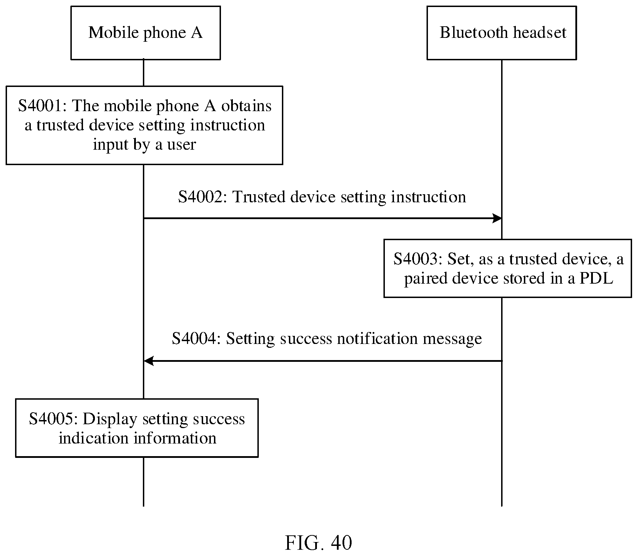

In the foregoing descriptions, for a process in which the mobile phone A manages a trusted device of the Bluetooth headset according to a user instruction, refer to FIG. 40. FIG. 40 is a flowchart of trusted device setting according to an embodiment of this application.

S4001: The mobile phone A obtains a trusted device setting instruction input by a user.

In some embodiments, the mobile phone A may determine, based on full/empty state information that is of the PDL and that is carried in first indication information, whether the PDL of the Bluetooth headset is empty. If the PDL of the Bluetooth headset is not empty, it indicates that the Bluetooth headset has another paired Bluetooth device. To help the user manage whether to allow these Bluetooth devices to normally use the Bluetooth headset without password verification, the mobile phone A may display trusted device setting information. For example, the trusted device setting information may be shown in FIG. 38(a), used to ask the user whether to set all devices already paired with this headset as trusted devices, so that these devices can normally use a headset service. When detecting that the user operates the "Yes" option, the mobile phone A determines that the trusted device setting instruction input by the user is received. The trusted device setting instruction is used to instruct the Bluetooth headset to set all paired devices in the PDL as trusted devices.

In some other embodiments, refer to FIG. 39(c). The user may choose to set a specific paired device as a trusted device. In this case, the trusted device setting instruction includes device information (for example, a device name "Mate 30"). The trusted device setting instruction is used to instruct the Bluetooth headset to set the device (for example, the Mate 30) as a trusted device.

S4002: The mobile phone A sends the trusted device setting instruction to the Bluetooth headset.

S4003: The Bluetooth headset updates the PDL according to the trusted device setting instruction, and sets, as a trusted device, the paired device stored in the PDL.

In some embodiments, the Bluetooth headset sets all paired devices in the PDL as trusted devices. In some other embodiments, the Bluetooth headset sets, as a trusted device, a device (for example, the Mate 30) indicated in the trusted device setting instruction.

S4004: The Bluetooth headset sends a setting success notification message to the mobile phone A, to indicate that an item indicated in the trusted device setting instruction is completed.

S4005: The mobile phone A displays setting success indication information.

In some embodiments, refer to FIG. 38(b). The setting success indication information may be "Setting succeeds: The device paired with this headset can normally use the Bluetooth headset".

Through steps S4001 to S4005, the mobile phone A can set another paired device of the Bluetooth headset as a trusted device. When being connected to the Bluetooth headset again, these trusted paired devices can normally use the headset without password verification. This helps improve user experience of a trusted device user.

In addition, the mobile phone A may further send a second setting instruction to the Bluetooth headset based on a user operation (for example, an operation of disabling a trusted device state of the Mate 30). The second setting instruction is used to instruct the Bluetooth headset to set a target electronic device (for example, the Mate 30) as an untrusted device.

Fourth part: The primary device sets the Bluetooth headset by using the AI Life app.

In the foregoing embodiments, encryption capabilities of the primary device (for example, the mobile phone) and the secondary device (for example, the Bluetooth headset) may be implemented by using a proprietary protocol between the primary device and the secondary device. Therefore, in some embodiments, some primary devices may not have the encryption capability, and cannot manage and set a secondary device having the encryption capability. Therefore, another embodiment of this application provides a Bluetooth device management method, used for each primary device to manage and set a secondary device by using the AI Life app.

The following still uses an example in which the primary device is the mobile phone A and the secondary device is the Bluetooth headset FreeBuds 3, to describe a process in which the primary device manages and sets the secondary device by using the AI Life app. Certainly, the primary device may alternatively be another primary device, for example, a mobile phone B, a mobile phone C, or a tablet computer.

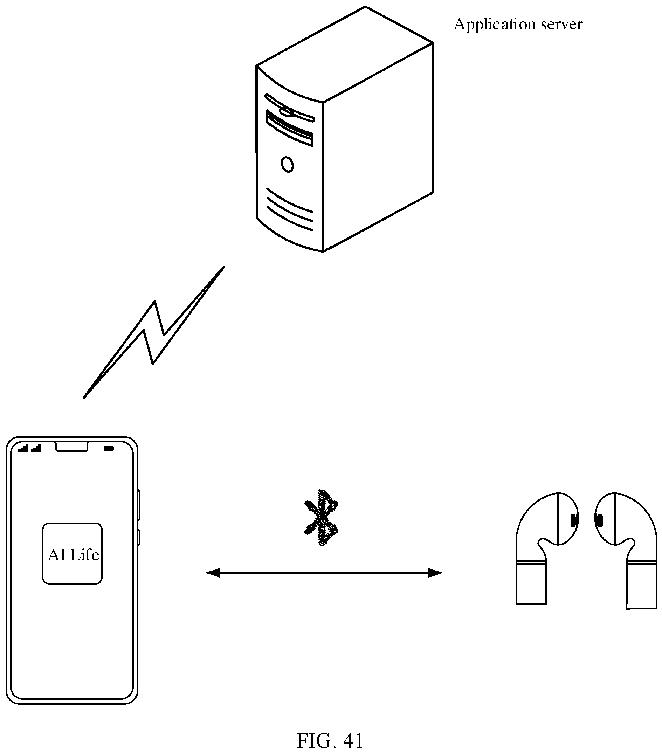

FIG. 41 is a schematic diagram of a structure of a Bluetooth device control system according to an embodiment of this application. The system includes the mobile phone A on which the AI Life app is installed, the Bluetooth headset, and an application server of the AI Life app. The mobile phone A and the application server are connected to each other through a wireless network. The mobile phone A and the Bluetooth headset are connected to each other by using Bluetooth.

### 1. Setting a password

### (1) Encryption on the mobile phone side

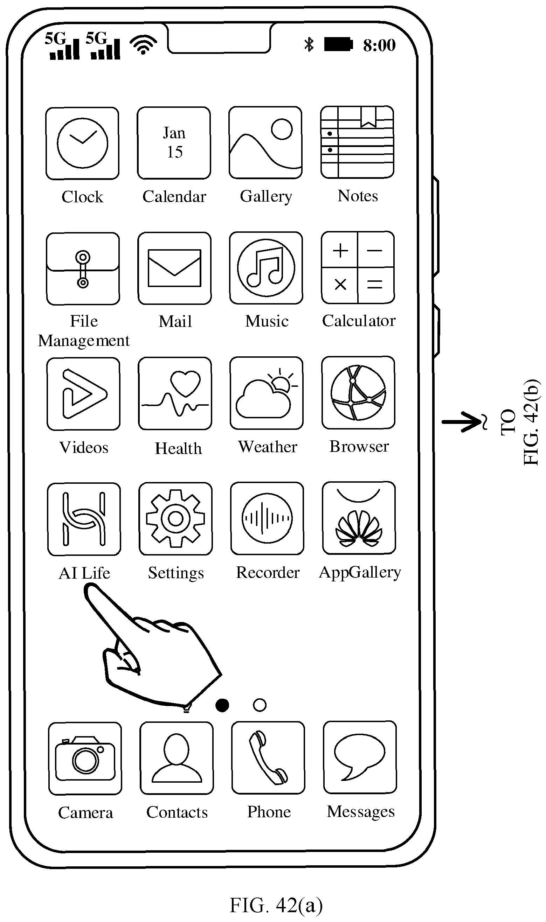

FIG. 42(a) to FIG. 42(h) are a schematic diagram of a Bluetooth device encryption process according to still another embodiment of this application, and relates to a process of setting, for the Bluetooth headset in the AI Life app, a password that is to be input on the mobile phone side.

Refer to FIG. 42(a). Various application icons are displayed on a desktop of the mobile phone A, including an icon of the AI Life app. After the mobile phone A detects that a user operates the icon of the AI Life app, the mobile phone A may display an application interface of the AI Life app.

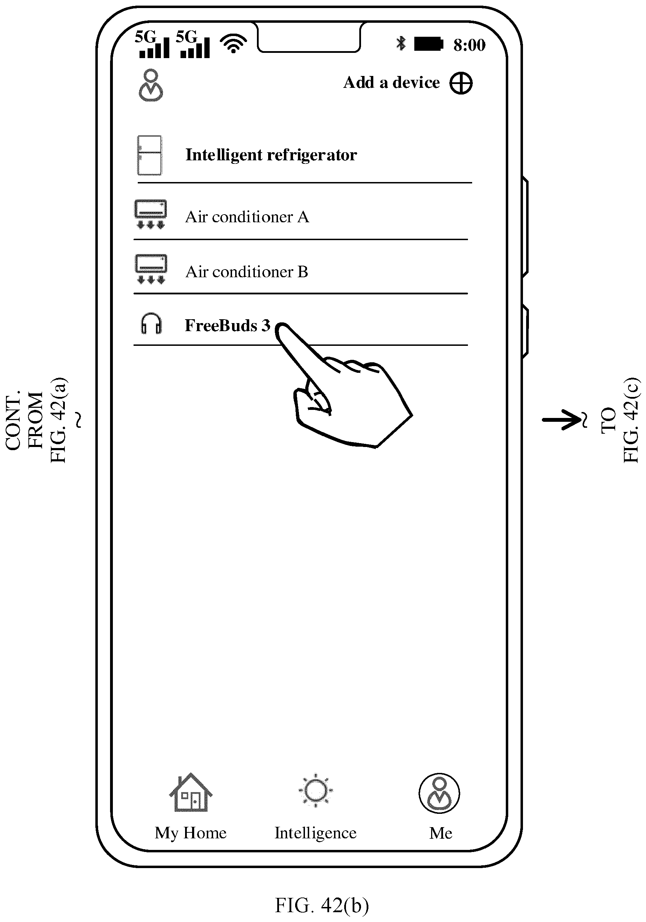

Refer to FIG. 42(b). The application interface includes information (such as icons and names) about devices such as an intelligent refrigerator, an air conditioner A, an air conditioner B, and the Bluetooth headset FreeBuds 3. The user can manage these intelligent devices by using the AI Life app. For example, after the mobile phone A detects that the user operates the name of the FreeBuds 3, the mobile phone A displays a headset setting interface.

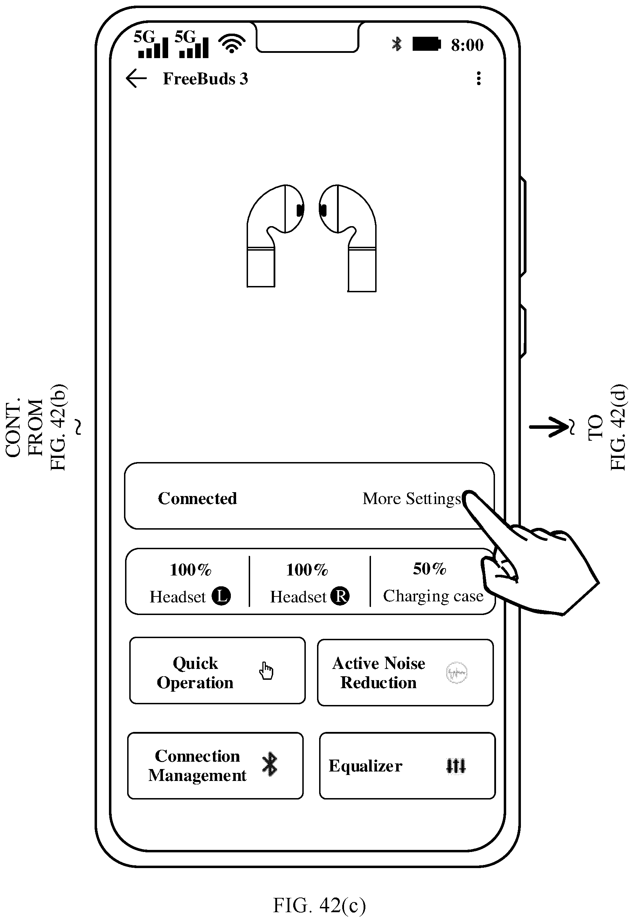

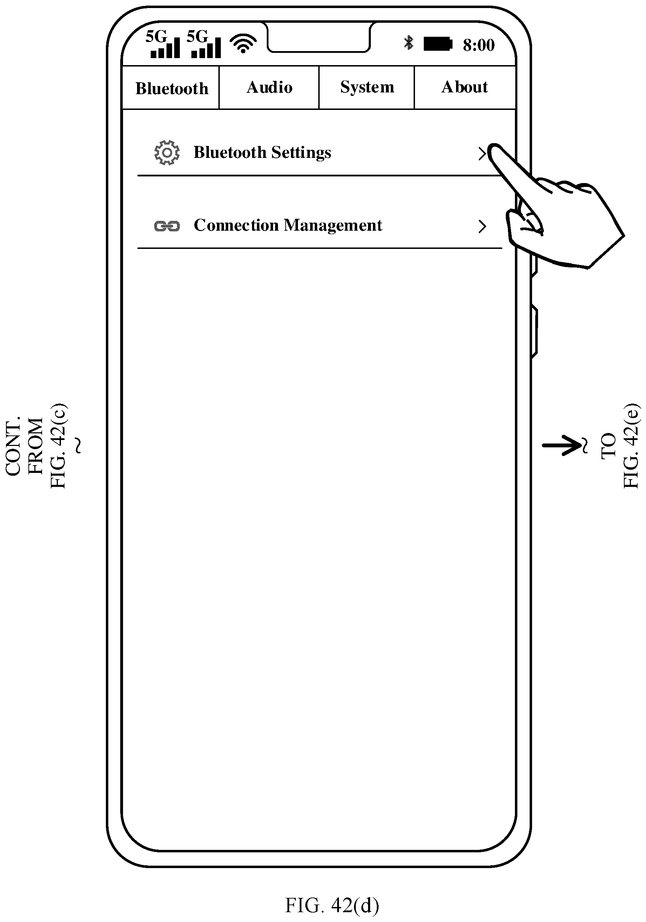

Refer to FIG. 42(c). The headset setting interface includes a "Connected" setting option of the FreeBuds 3, battery level information of the Bluetooth headset and a charging case, a "Quick Operation" setting option, an "Active Noise Reduction" setting option, a "Connection Management" setting option, an "Equalizer" setting option, and the like. When detecting that the user operates the "Connected" setting option, the mobile phone A may display, for example, a setting interface shown in FIG. 42(d).

Refer to FIG. 42(d). The setting interface includes a "Bluetooth Settings" option and a "Connection Management" option. After detecting that the user operates the "Bluetooth Settings" option, the mobile phone A may display a drop-down menu of the "Bluetooth Settings" option.

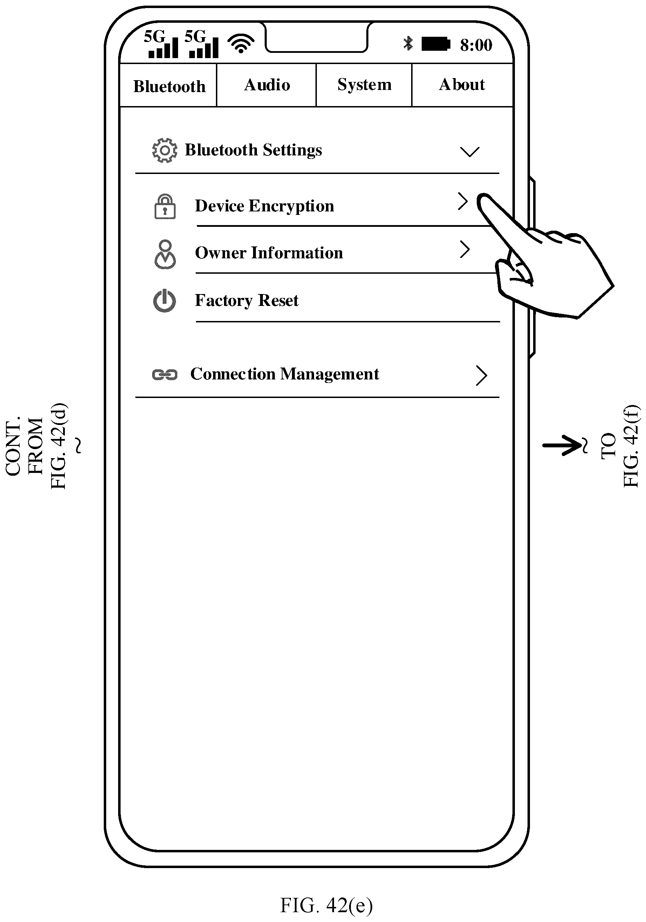

Refer to FIG. 42(e). The drop-down menu of the "Bluetooth Settings" option includes a "Device Encryption" setting item, an "Owner Information" setting item, and a "Factory Reset" setting item. After the mobile phone A detects that the user operates "Device Encryption", the mobile phone A displays an encryption setting interface.

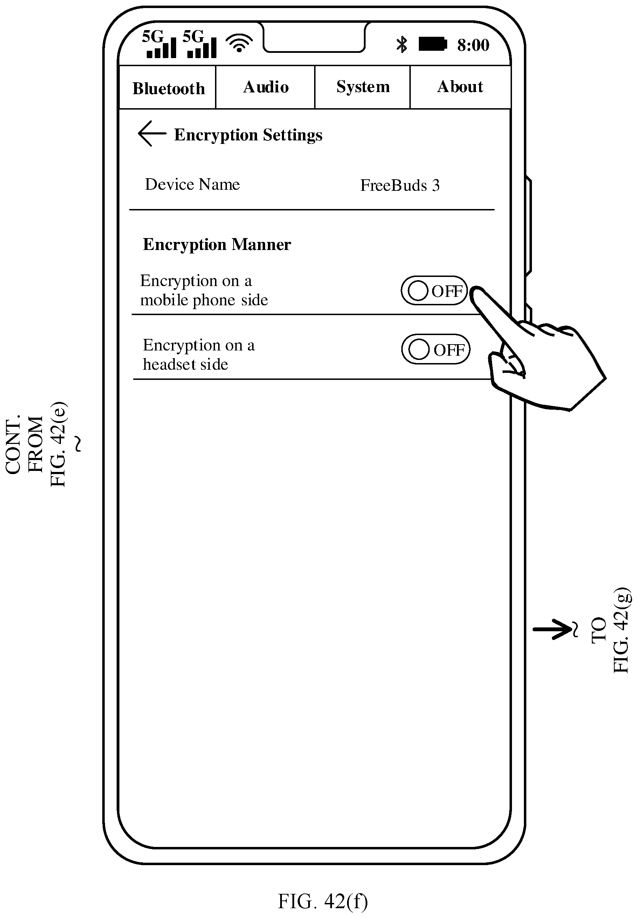

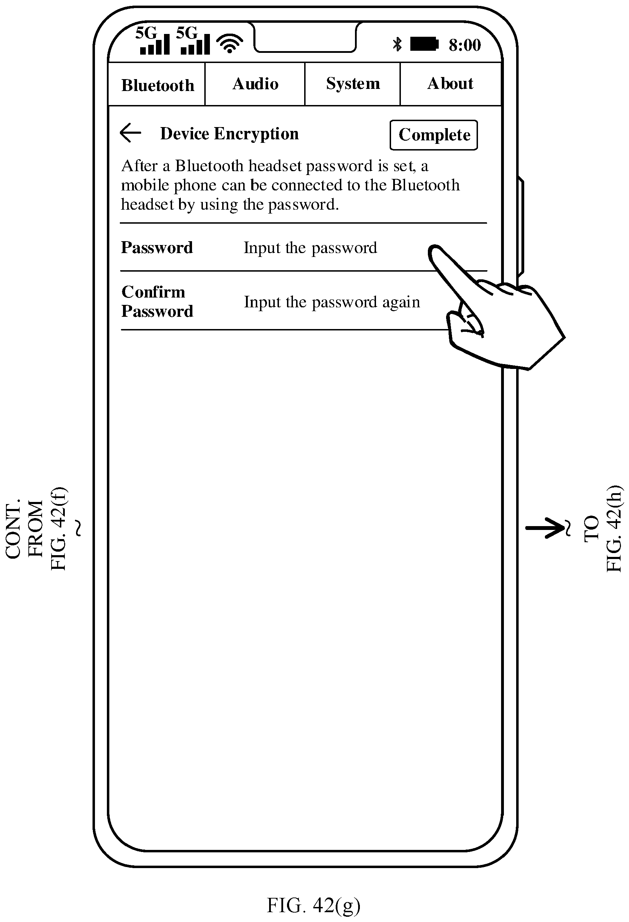

Refer to FIG. 42(f). The encryption setting interface provides two encryption manners of the Bluetooth headset: encryption on the headset side and encryption on the mobile phone side. After detecting an operation of enabling encryption on the mobile phone side by the user, the mobile phone A displays, for example, a display interface shown in FIG. 42(g).

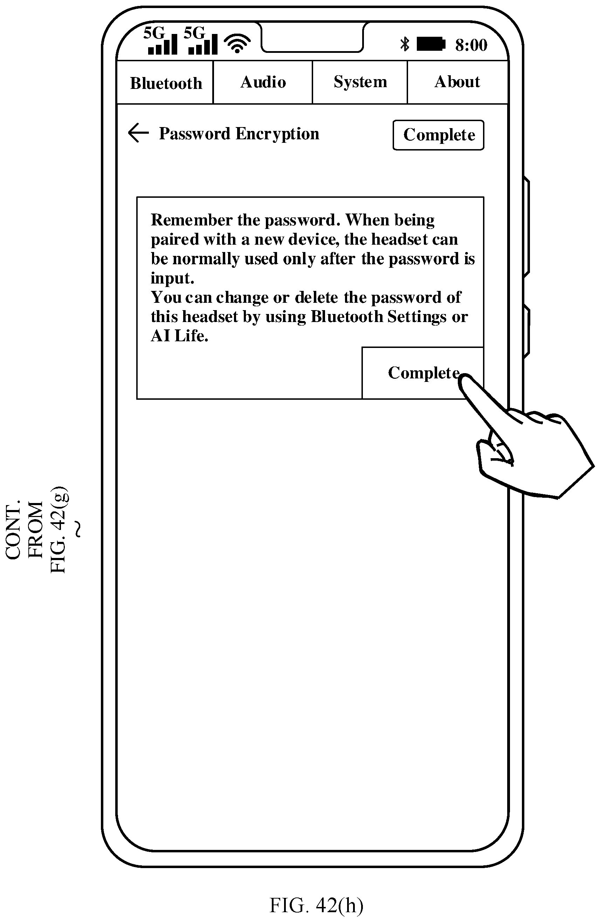

Refer to FIG. 42(g). The display interface includes a password input area, a confirmation password input area, and a "Complete" icon. After detecting that the user inputs, in the password input area and the confirmation password input area, a same password meeting a preset requirement (for example, at least six digits) and operates the "Complete" icon, the mobile phone A displays, for example, a prompt box shown in FIG. 42(h).

Refer to FIG. 42(h). The prompt box includes prompt information "Remember the password. When being paired with a new device, the headset can be normally used only after the password is input" and "You can change or delete the password of this headset by using Bluetooth Settings or AI Life".

It should be noted that, in the password setting process in FIG. 42(a) to FIG. 42(h), for an interaction process between the mobile phone A and the Bluetooth headset, refer to FIG. 11. Details are not described herein in this embodiment again.

### (2) Encryption on the headset side

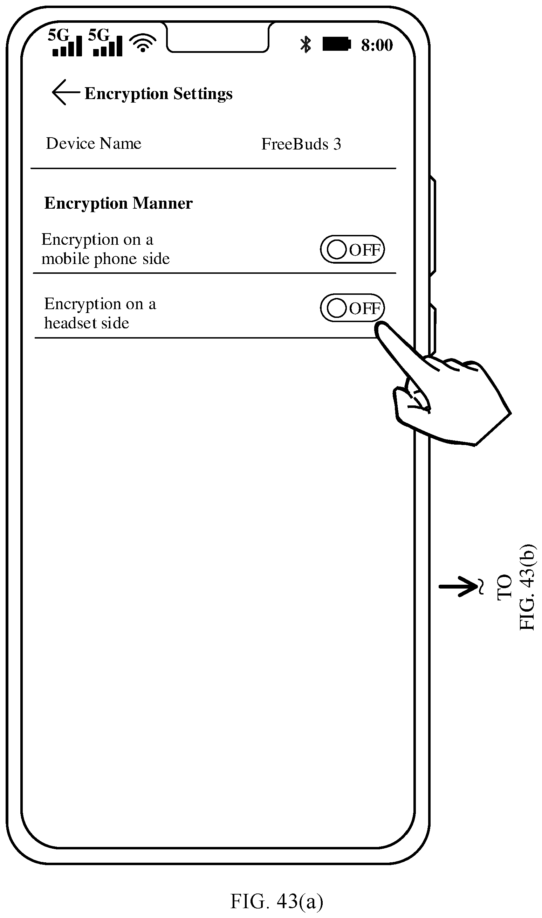

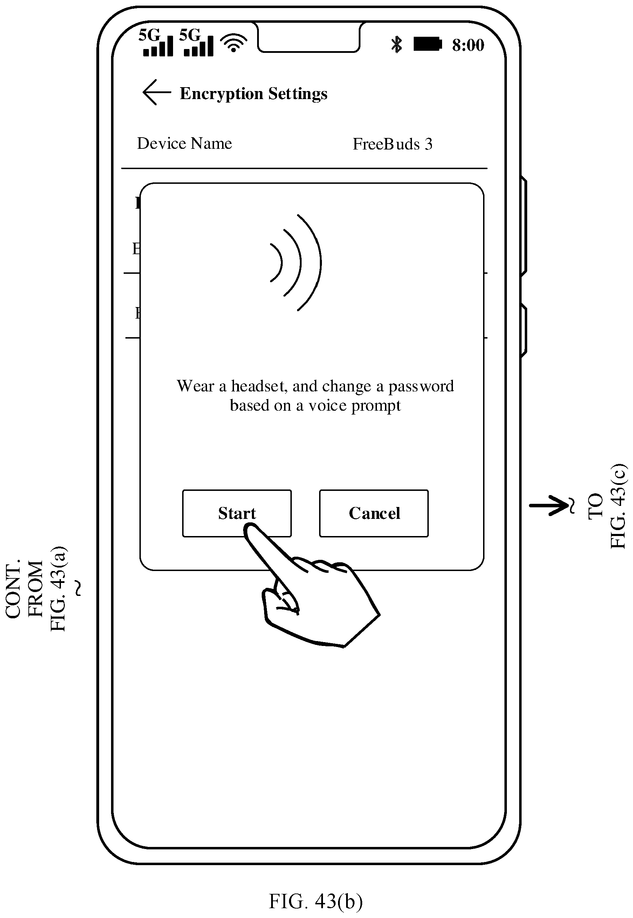

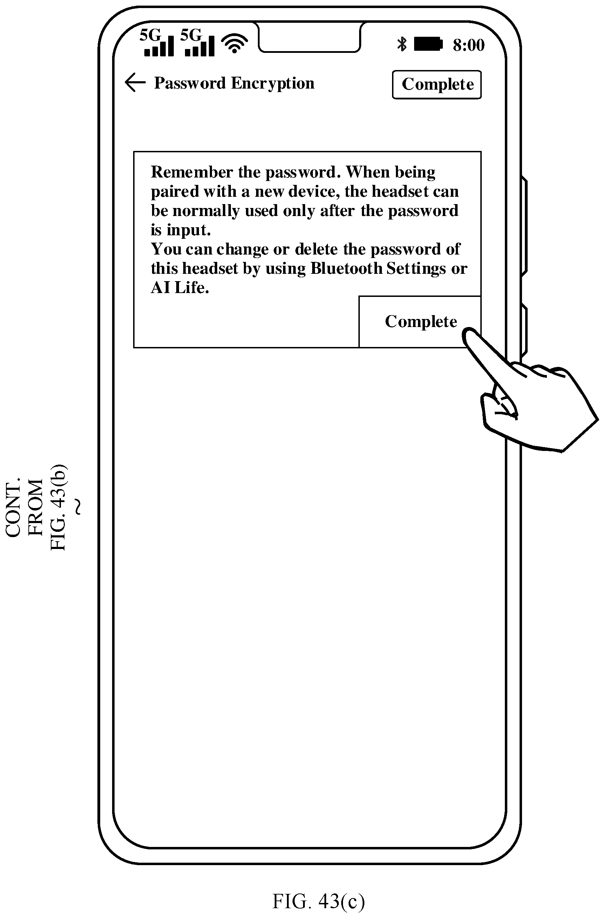

FIG. 43(a) to FIG. 43(c) are a schematic diagram of a Bluetooth device encryption process according to still another embodiment of this application, and relates to a process of setting, for the Bluetooth headset in the AI Life app, a password that is to be input on the headset side. For a specific encryption process, refer to related descriptions of FIG. 16(a) to FIG. 16(c) and FIG. 17. Details are not described herein in this embodiment again.

### 2. Changing a password

### (1) Changing a password input on the mobile phone side

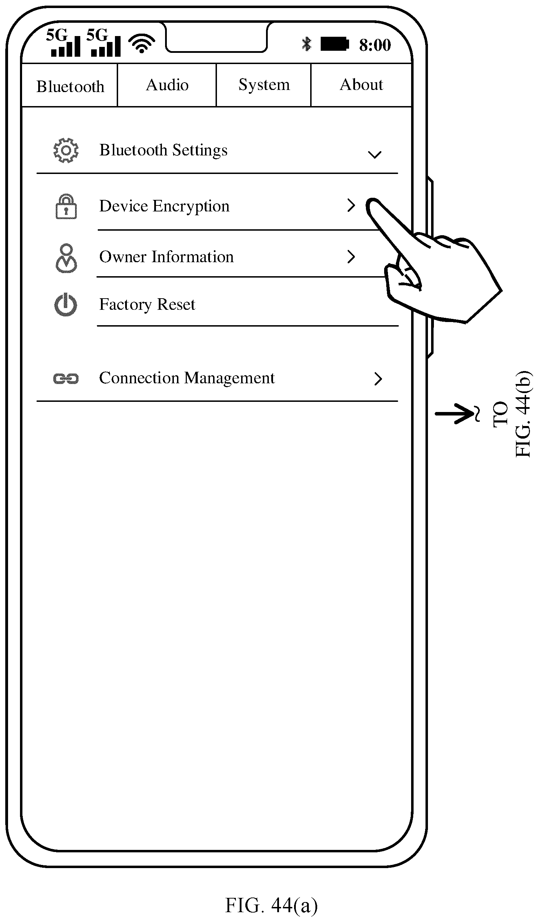

FIG. 44(a) to FIG. 44(d) are a schematic diagram of a password changing process of a Bluetooth device according to still another embodiment of this application, and relates to a process of changing, in AI Life, a password that is of the Bluetooth headset and that is input on the mobile phone side.

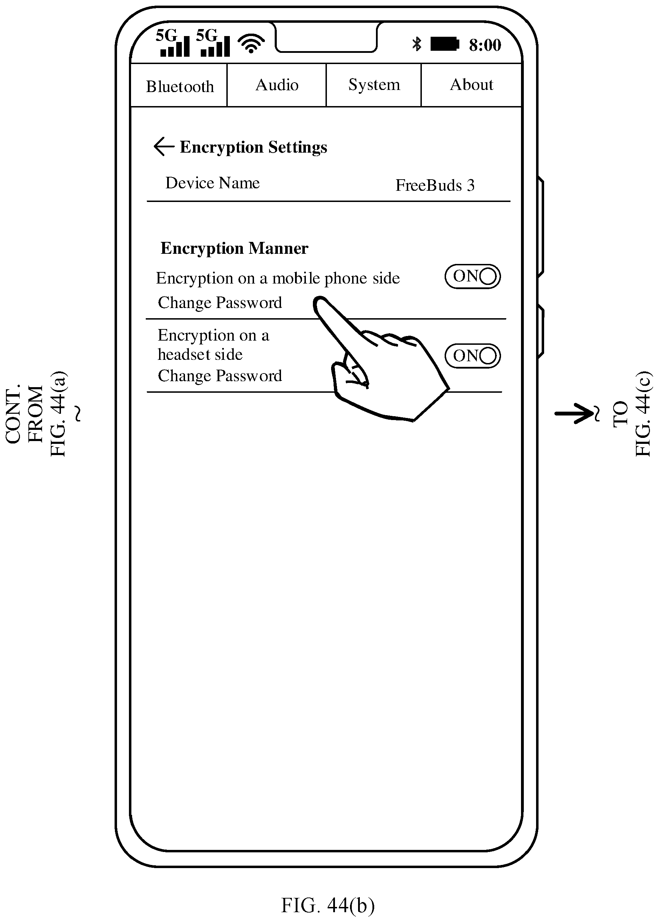

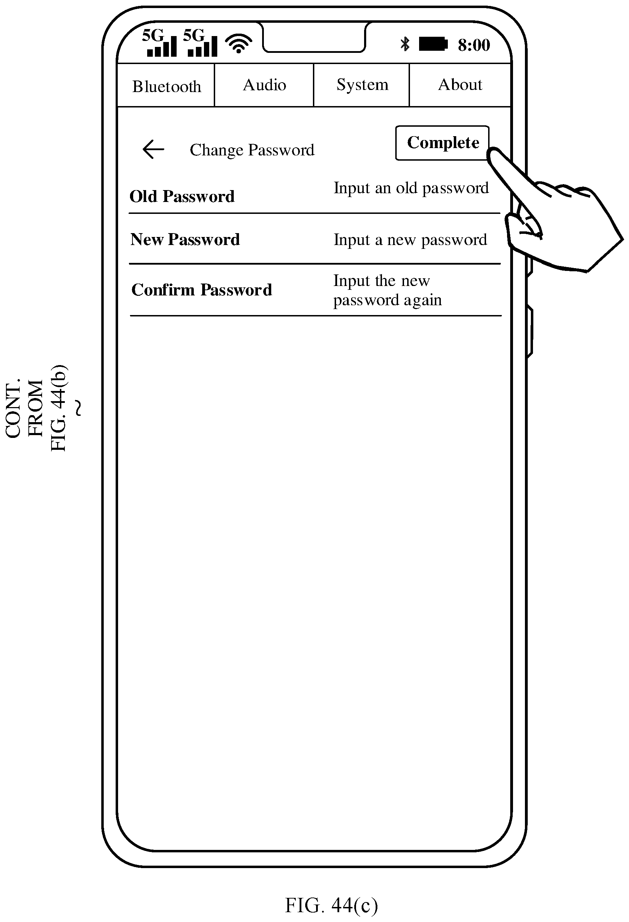

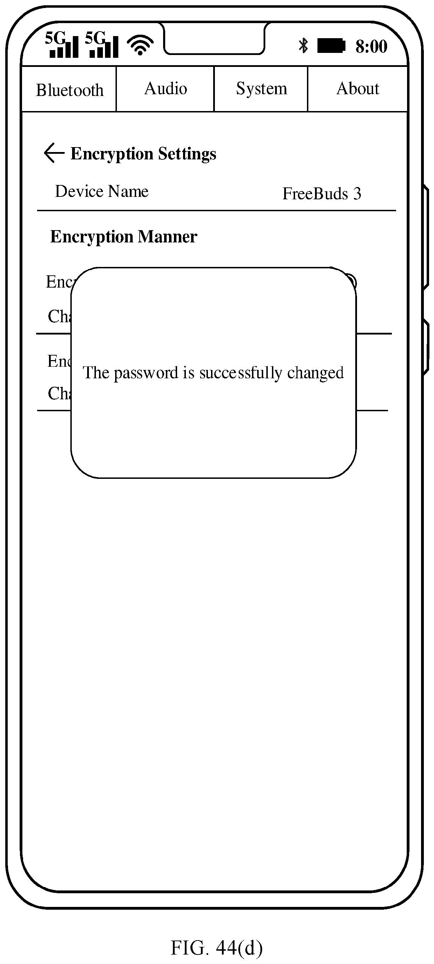

Refer to FIG. 44(a). After the mobile phone A detects that a user operates a "Device Encryption" option, the mobile phone A displays, for example, an encryption setting interface shown in FIG. 44(b). In the encryption setting interface, encryption on the mobile phone side corresponds to a "Change Password" option. After the mobile phone A detects that the user operates the "Change Password" option, the mobile phone A displays, for example, a password changing interface shown in FIG. 44(c). The password changing interface includes an old-password input area, a new-password input area, a confirmation password input area, and a "Complete" icon. When the mobile phone A detects that an old password input by the user is correct and a new password is the same as a confirmation password, password changing is completed. The mobile phone A displays, for example, prompt information "The password is successfully changed" shown in FIG. 44(d). Then, the Bluetooth device needs to use the new password to use the Bluetooth headset.

It should be noted that, in the password setting process in FIG. 44(a) to FIG. 44(d), for an interaction process between the mobile phone A and the Bluetooth headset, refer to FIG. 28. Details are not described herein in this embodiment again.

### (2) Changing a password input on the headset side

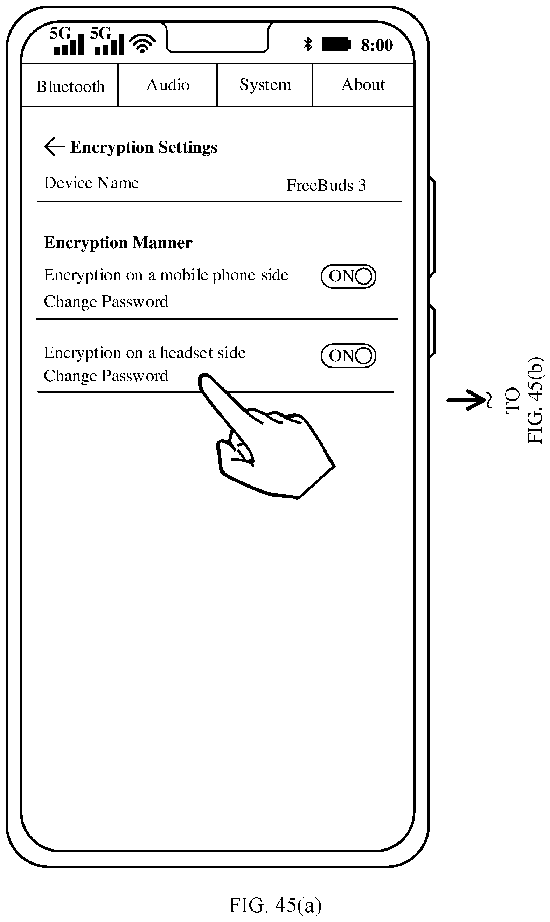

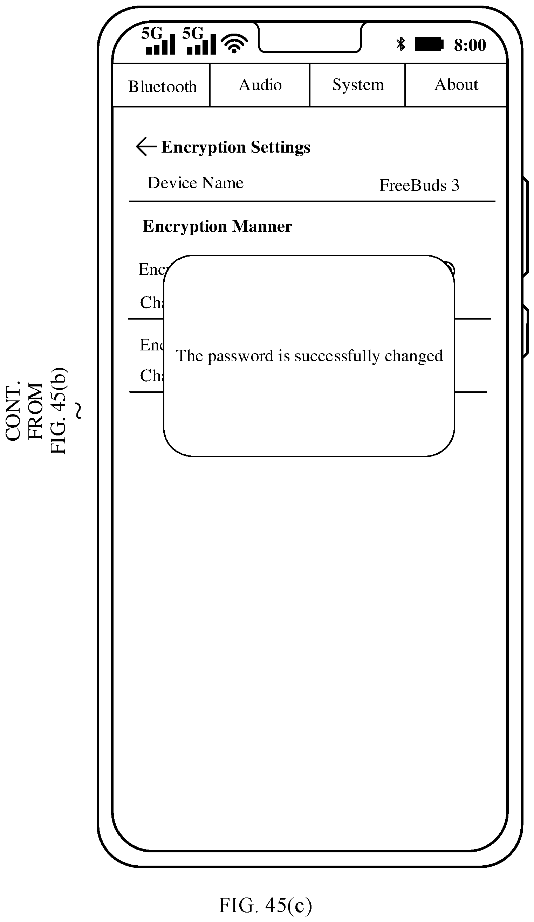

FIG. 45(a) to FIG. 45(c) are a schematic diagram of a password changing process of a Bluetooth device according to still another embodiment of this application, and relates to a process of changing, in AI Life, a password that is of the Bluetooth headset and that is input on the mobile phone side.

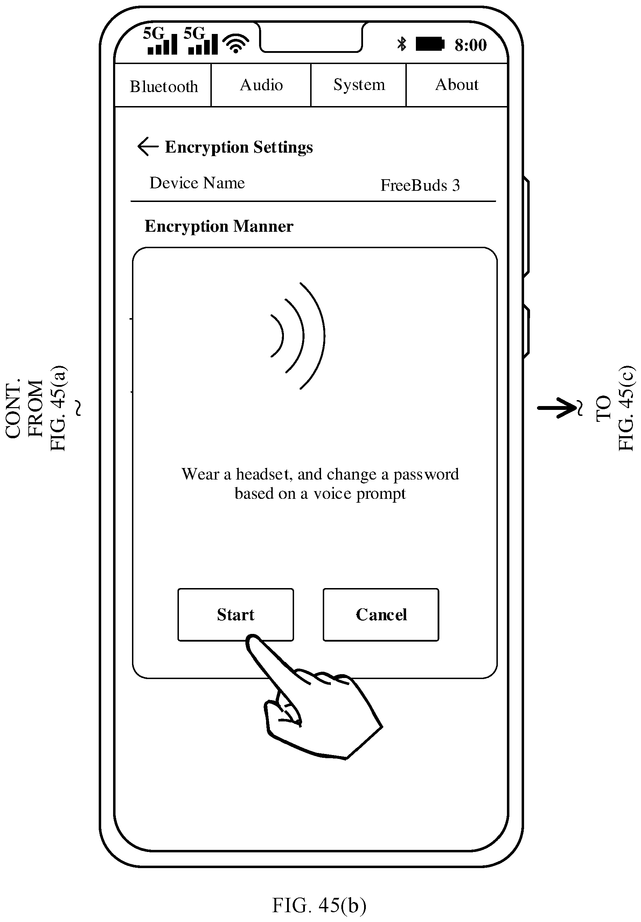

Refer to FIG. 45(a). In an encryption setting interface of the AI Life app, when detecting an operation of choosing, by a user, to change the password that is set on the headset side, the mobile phone A displays, for example, a prompt box shown in FIG. 45(b). The prompt box may include a "Start" option, a "Cancel" option, and prompt information "Wear the headset, and change the password based on a voice prompt". After detecting that the password is successfully changed, the mobile phone A displays prompt information "The password is successfully changed".

It should be noted that, in the foregoing descriptions, for a procedure in which the mobile phone A changes, by using the AI Life app, the password that is of the Bluetooth headset and that is input on the mobile phone side, refer to FIG. 30. Details are not described herein in this embodiment again.

### 3. Canceling a password

### (1) Canceling a password that is set on the headset side

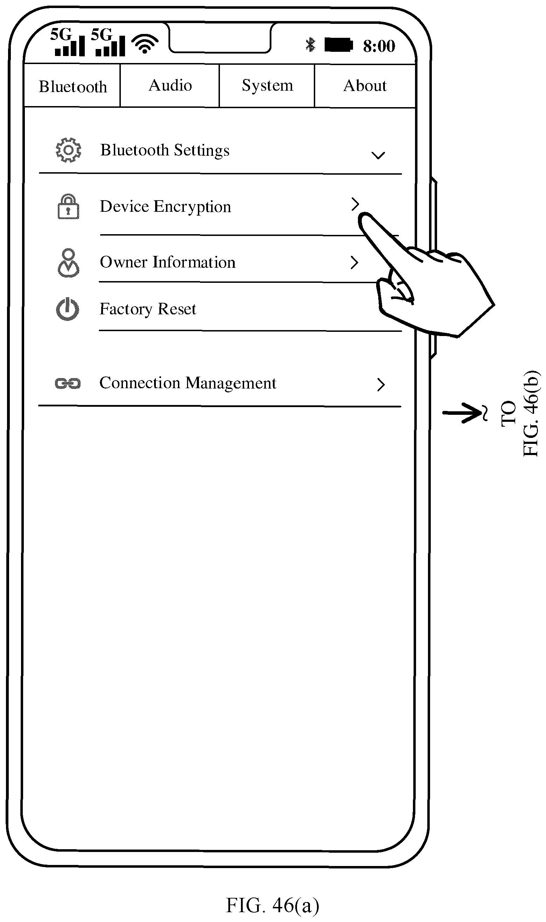

FIG. 46(a) to FIG. 46(e) are a schematic diagram of a password cancellation process of a Bluetooth device according to still another embodiment of this application, and relates to a process of canceling a password of the Bluetooth headset in the AI Life app.

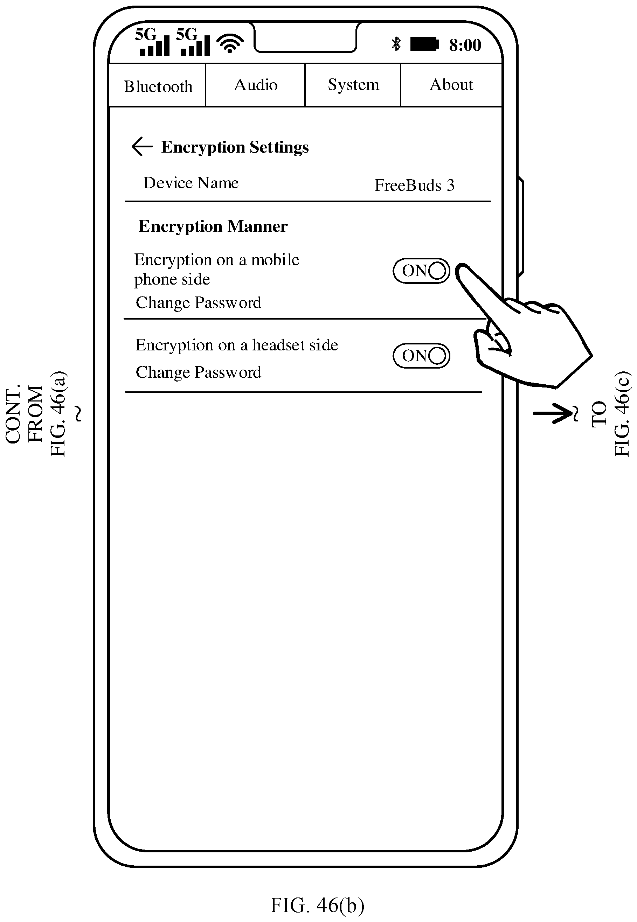

Refer to FIG. 46(a). In a Bluetooth setting interface of the AI Life app, after detecting that a user operates a "Device Encryption" option, the mobile phone side displays, for example, a display interface shown in FIG. 46(b).

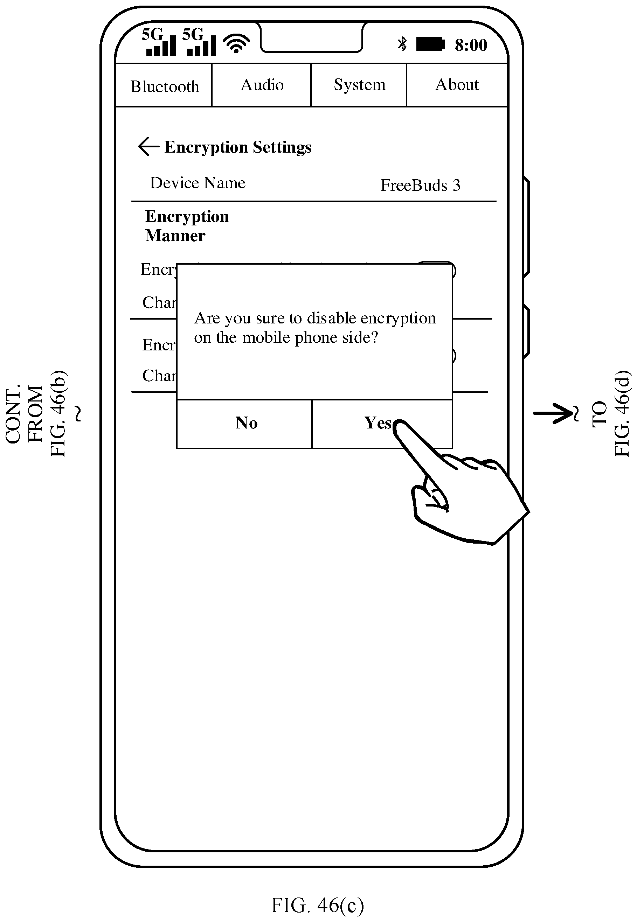

Refer to FIG. 46(b). In the display interface, after detecting an operation of disabling encryption on the mobile phone side by the user, the mobile phone A displays, for example, a display interface shown in FIG. 46(c).

Refer to FIG. 46(c). The display interface includes prompt information, a "Yes" option, and a "No" option. The prompt information may be "Are you sure to disable encryption on the mobile phone side?". If the mobile phone A detects that the user operates the "No" option, the mobile phone A does not disable encryption on the mobile phone side. If the mobile phone A detects that the user operates the "Yes" option, the mobile phone A displays a password input interface for user permission verification.

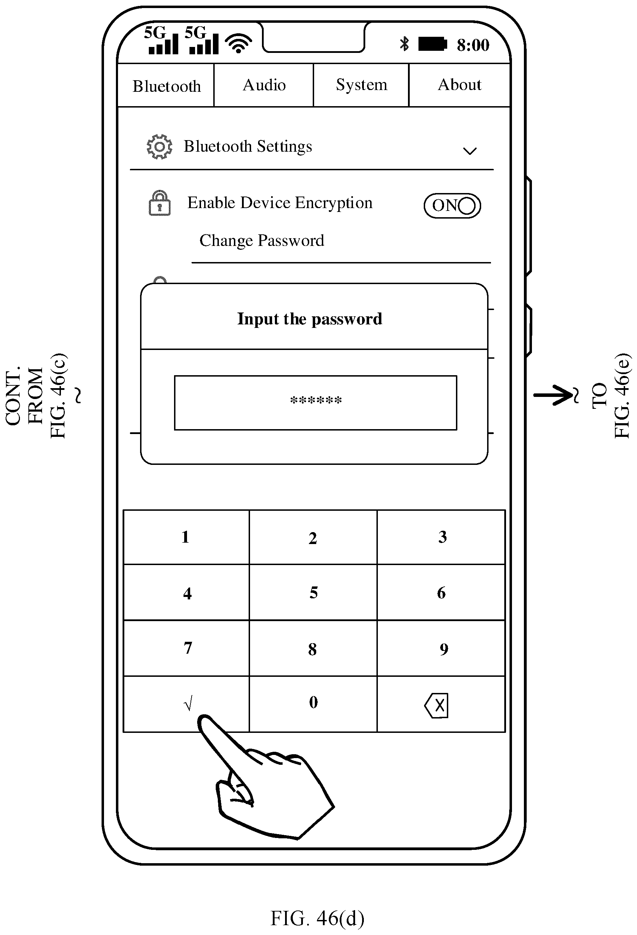

Refer to FIG. 46(d). The password input interface may include a password input box. After the mobile phone A detects that the user inputs the correct password, the password is successfully canceled.

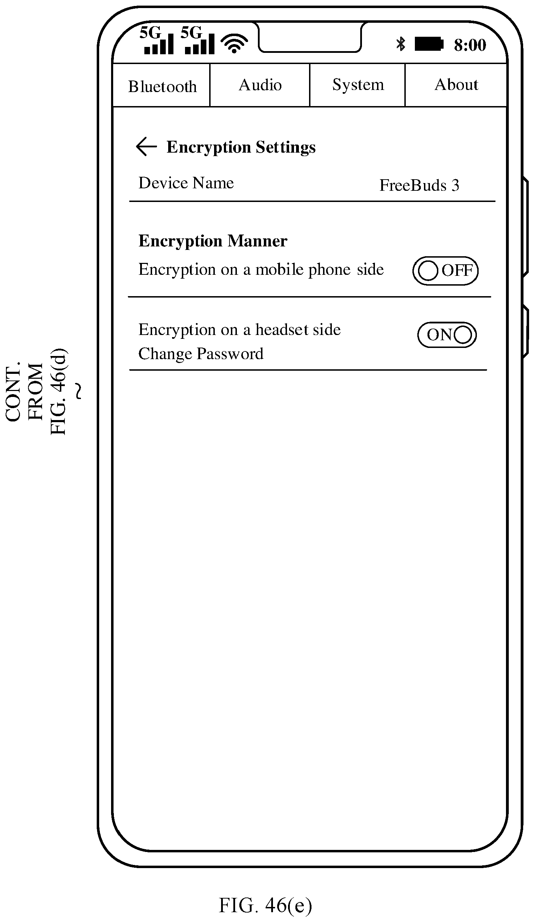

Refer to FIG. 46(e). After the password is successfully canceled, an indication icon of encryption on the mobile phone side is displayed as "OFF". Then, the user may set a password for the Bluetooth headset again based on a requirement.

It should be noted that, in the password cancellation process in FIG. 46(a) to FIG. 46(e), for an interaction process between the mobile phone A and the Bluetooth headset, refer to FIG. 32. Details are not described herein in this embodiment again.

### (2) Canceling a password that is set on the headset side

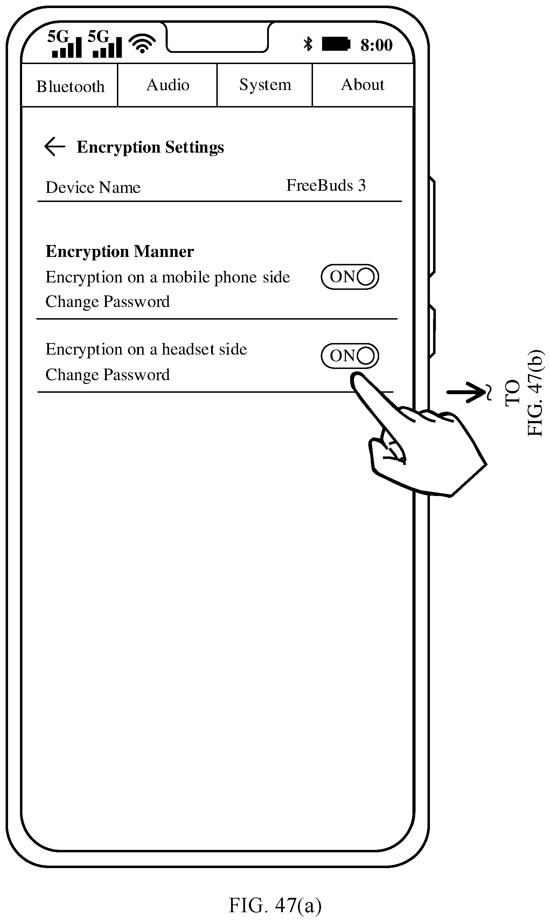

FIG. 47(a) to FIG. 47(c) are a schematic diagram of a password cancellation process of a Bluetooth device according to still another embodiment of this application, and relates to a process of canceling, in the AI Life app, a password that is of the Bluetooth headset and that is set on the headset side.

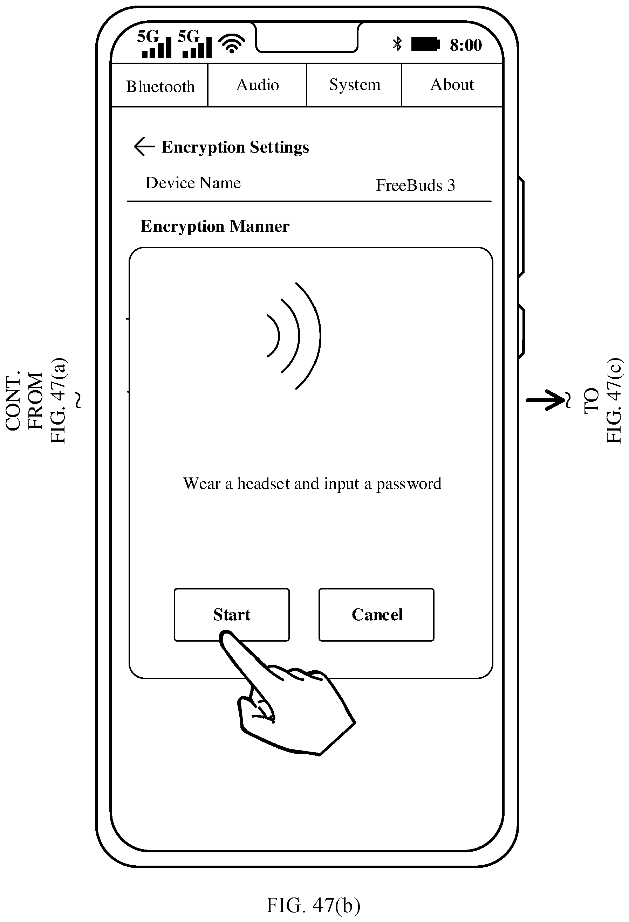

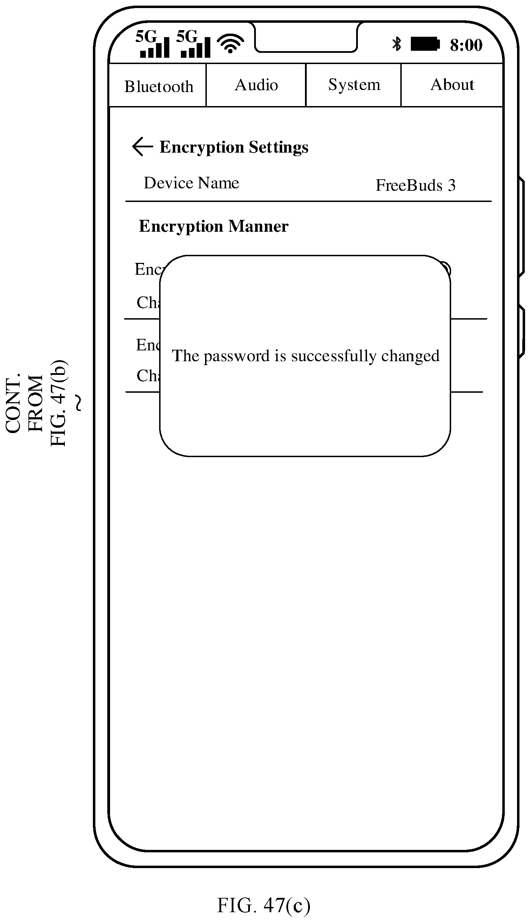

Refer to FIG. 47(a). After the mobile phone A detects an operation of disabling encryption on the headset side by a user, the mobile phone A displays, for example, a prompt box shown in FIG. 47(b). For example, the prompt box may include a "Start" option, a "Cancel" option, and prompt information "Wear a headset and input a password". After detecting that the user selects "Start", the mobile phone A controls the Bluetooth headset to obtain a verification password for user permission verification. After detecting that password verification succeeds, the mobile phone A displays, for example, prompt information "The password is successfully changed" shown in FIG. 47(c).

In the foregoing process, for details about a process in which the mobile phone A controls the Bluetooth headset to cancel the password that is set on the headset side, refer to FIG. 34. Details are not described herein in this embodiment again.

### 4. Setting owner information

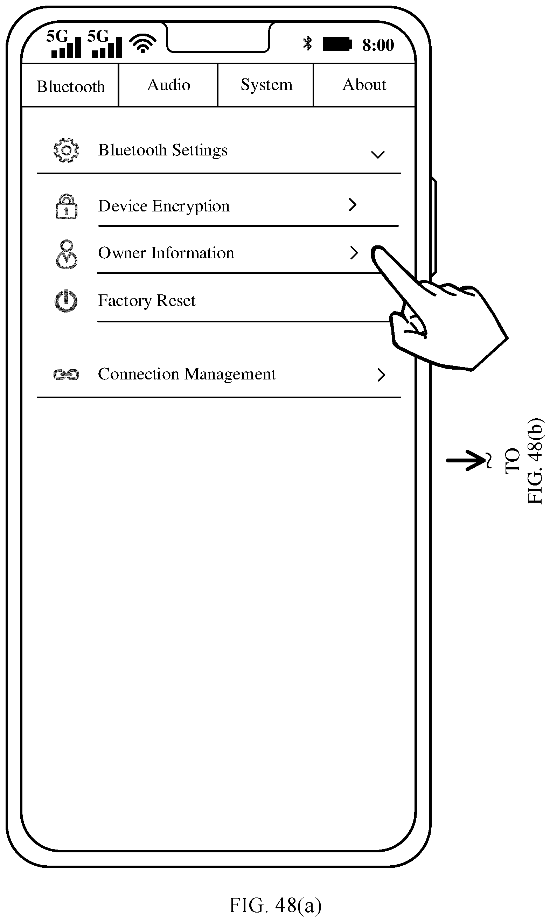

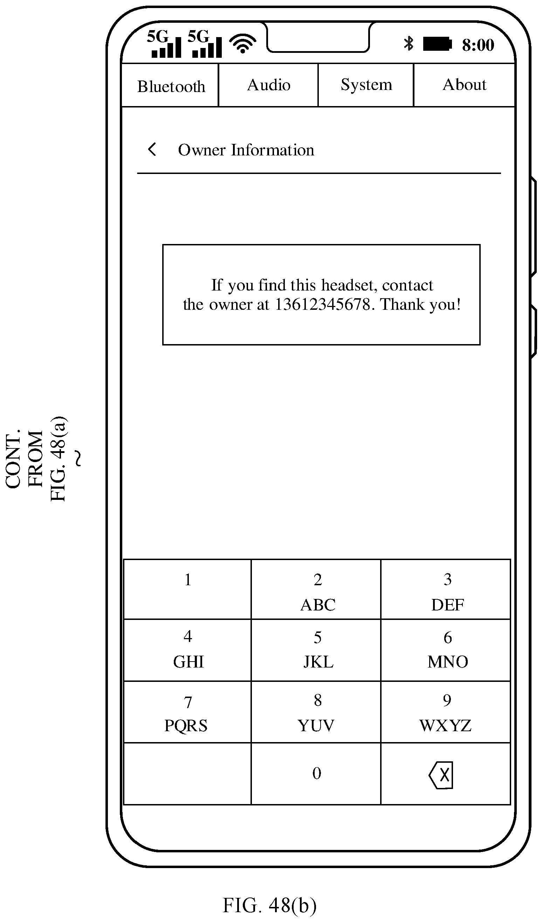

FIG. 48(a) and FIG. 48(b) are a schematic diagram of an owner information setting process according to another embodiment of this application, and relates to a process of setting owner information of the Bluetooth headset in the AI Life app.

Refer to FIG. 48(a). In a drop-down menu of a "Bluetooth Settings" option, after detecting that a user operates an "Owner Information" setting option, the mobile phone A displays, for example, a setting interface shown in FIG. 48(b). The setting interface may include an owner information input box, used to input the owner information according to a user instruction. For example, the owner information may be "If you find this headset, contact the owner at 13612345678. Thank you!". After obtaining the owner information, the mobile phone A sends the owner information to the Bluetooth headset for storage, so that the owner information is successfully set.

After the owner information is successfully set, if the encrypted Bluetooth headset receives an incorrect password for a plurality of times (for example, five times), the Bluetooth headset switches to a locked state lasting for preset duration (for example, 24 hours), and plays the owner information preset by the user, so as to prompt the user to return the Bluetooth headset to the owner, thereby improving a possibility that the Bluetooth headset is returned to the owner.

### 5. Managing a connected device

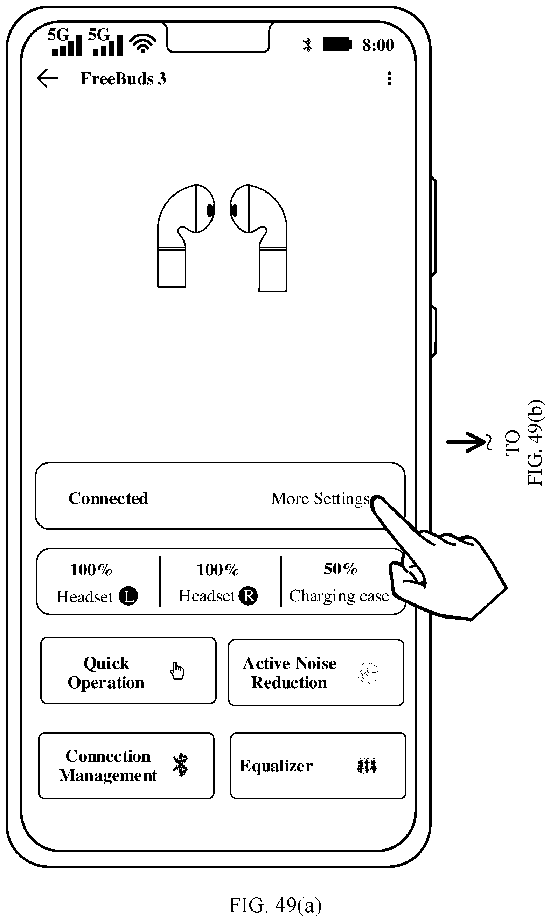

FIG. 49(a) to FIG. 49(d) are a schematic diagram of a connected device management process of a Bluetooth device according to an embodiment of this application, and relates to a process of managing a currently or historically connected device of the Bluetooth headset in the AI Life app.

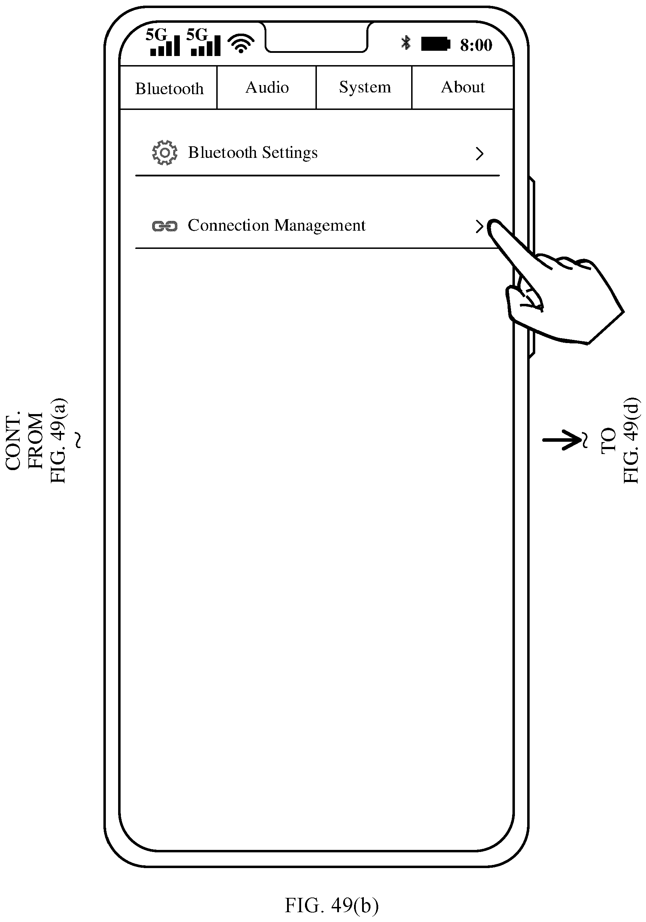

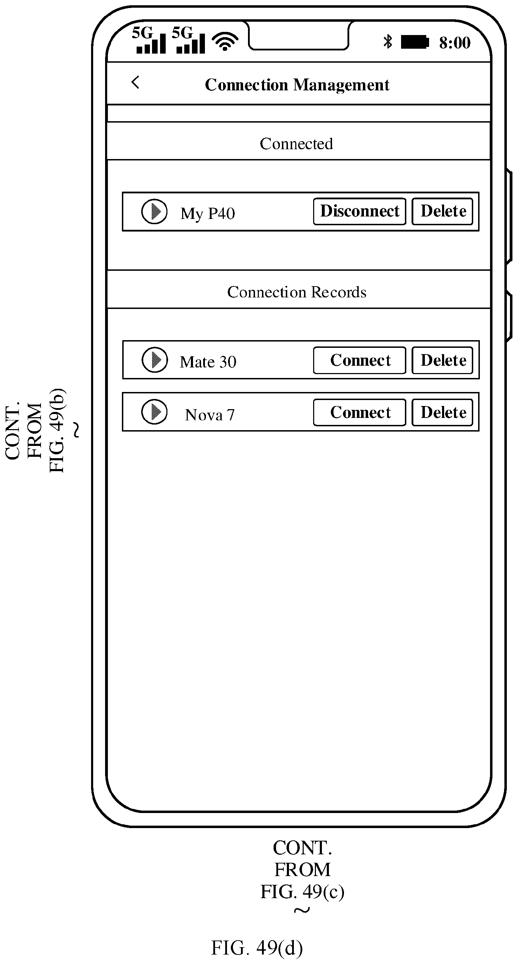

Refer to FIG. 49(a). In a setting interface of the AI Life app, after detecting that a user operates a "Connected" option, the mobile phone A displays, for example, a setting interface shown in FIG. 49(b). In the setting interface shown in FIG. 49(b), after detecting that the user operates a "Connection Management" option in a Bluetooth setting interface, the mobile phone A displays, for example, a connection management interface shown in FIG. 49(d).

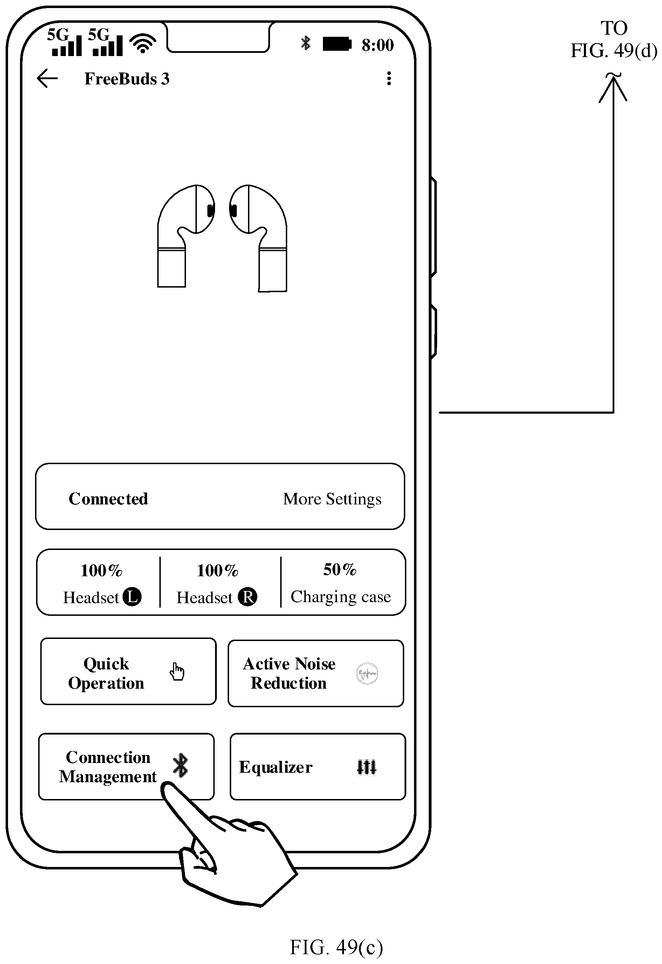

Alternatively, refer to FIG. 49(c). In a setting interface of the AI Life app, after detecting that a user operates a "Connection Management" option, the mobile phone A displays, for example, a connection management interface shown in FIG. 49(d).

Refer to FIG. 49(d). The connection management interface may include a name of a connected device (for example, My P40) and a name of a device that has a connection record (that is, a historically connected device, for example, Mate 30 or nova 7). The My P40 has a "Disconnect" icon and a "Delete" icon. If the mobile phone A detects that the user operates the "Disconnect" icon, the mobile phone A controls the Bluetooth headset to disconnect from the My P40. If the mobile phone A detects that the user operates the "Delete" icon, the mobile phone A deletes the My P40 from connected device records.

In addition, each device (such as the Mate 30 and the nova 7) in connection records also has a "Connect" icon and a "Delete" icon. The Mate 30 in the connection records is used as an example. If the mobile phone A detects that the user operates the "Connect" icon of the Mate 30, the mobile phone A controls the Bluetooth headset to connect to the Mate 30. If the mobile phone A detects that the user operates the "Delete" icon of the Mate 30, the mobile phone A deletes the Mate 30 from the connection records of the Bluetooth headset. In addition, the mobile phone A further needs to send a deletion instruction to the Bluetooth headset, to instruct the Bluetooth headset to delete related information of the Mate 30 in local connection records of the headset.

### 6. Setting a trusted device

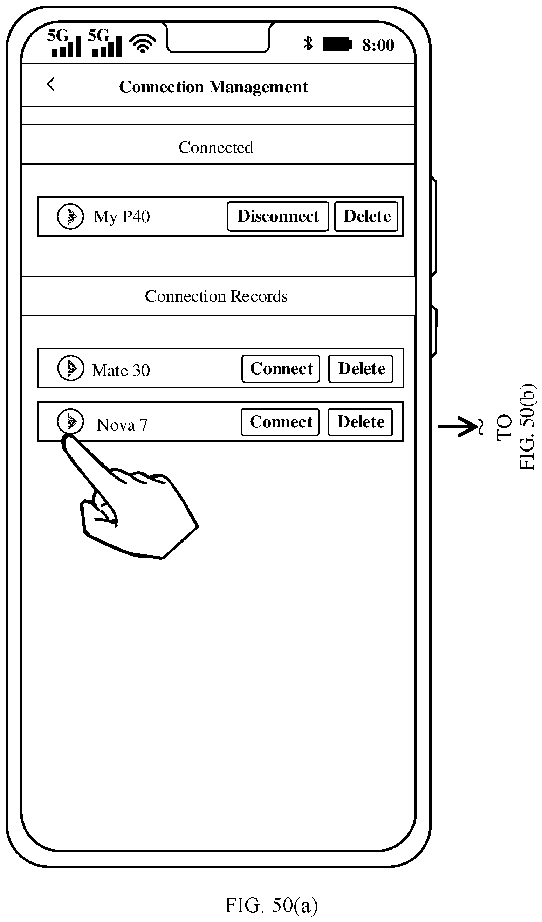

FIG. 50(a) to FIG. 50(d) are a schematic diagram of a trusted device setting process according to another embodiment of this application, and relates to a process of setting a trusted device of the Bluetooth headset in the AI Life app.

Refer to FIG. 50(a). In a connection management interface of the AI Life app, using a mobile phone nova 7 as an example, after the mobile phone A detects that a user operates a drop-down icon of the nova 7, the mobile phone A displays a "Trusted Device" setting option of the nova 7.

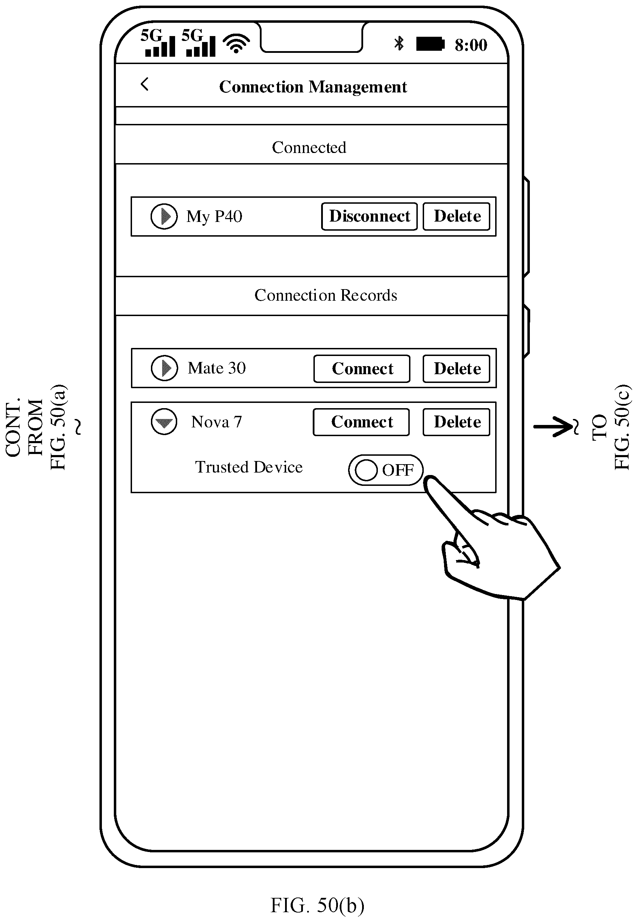

Refer to FIG. 50(b). The nova 7 is currently an untrusted device, and an icon of the "Trusted Device" setting option of the nova 7 is displayed as "OFF". After detecting that the user operates the setting option "OFF", the mobile phone A displays a password verification pop-up box for user permission verification.

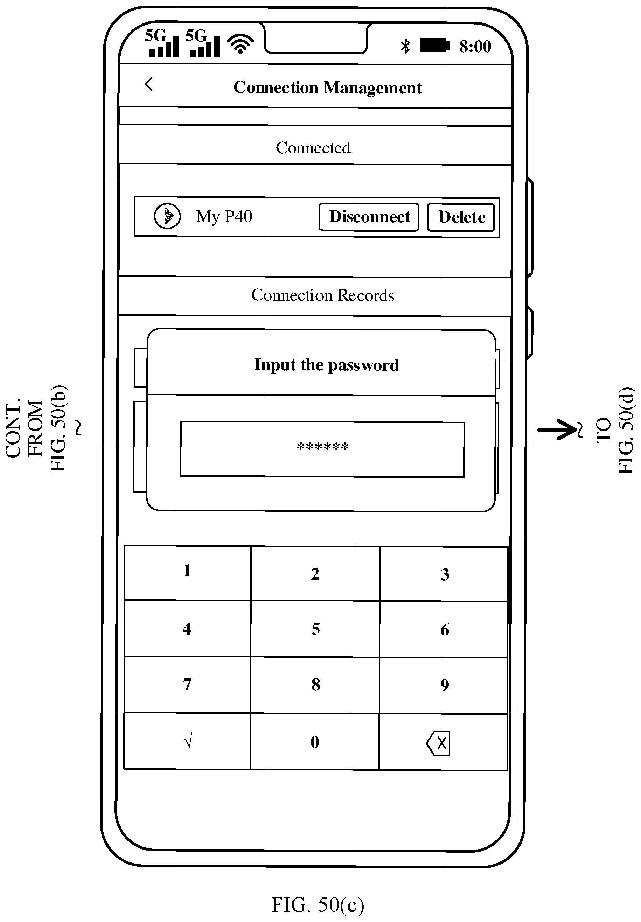

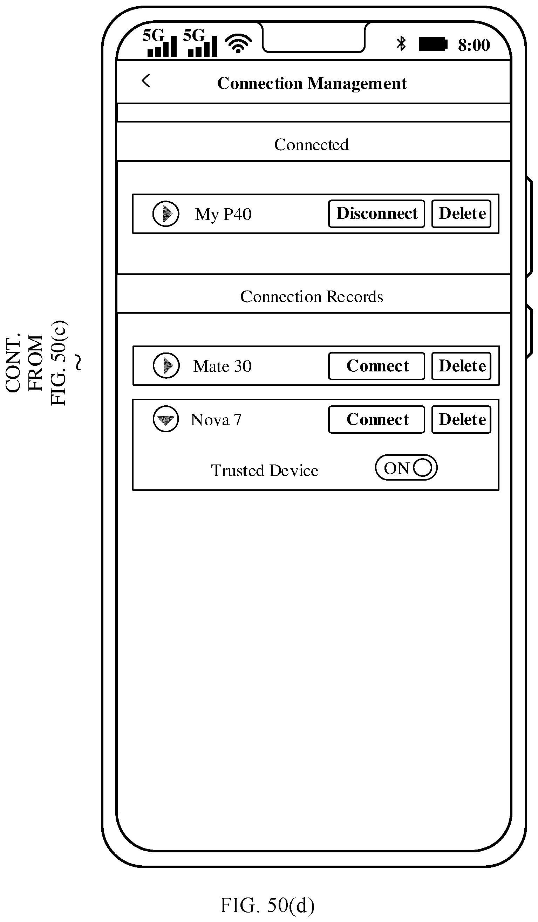

Refer to FIG. 50(c). The password verification pop-up box includes a password input area. After detecting that the user inputs a correct password, the mobile phone A sets the nova 7 as a trusted device. Refer to FIG. 50(d). After the nova 7 is set as a trusted device, the icon of the "Trusted Device" setting option of the nova 7 is displayed as "ON".

Because a Bluetooth connection has been established between the mobile phone A and the Bluetooth headset, after the mobile phone A sets related setting information (for example, a password, a trusted device, owner information, and a connected device) of the Bluetooth headset by using the AI Life app, the mobile phone A may directly send, through a Bluetooth link, the related setting information to the Bluetooth headset for storage. In addition, the mobile phone A may further upload the related setting information to the application server for storage, so that the user can obtain the related setting information of the Bluetooth headset after logging in to the AI Life app by using another Bluetooth device.

In addition, in a possible implementation, when the secondary device (for example, the Bluetooth headset) is reset to factory settings, information such as a password, owner information, and trusted device setting that are originally set for the secondary device is not deleted, to prevent another user from obtaining use permission of the secondary device through factory reset. This ensures security of the secondary device.

It should be understood that sequence numbers of the steps do not mean an execution sequence in the foregoing embodiments. The execution sequence of the processes should be determined based on functions and internal logic of the processes, and shall not constitute any limitation on the implementation processes of the embodiments of this application.

Based on content provided in the foregoing embodiments, this application further provides the following technical solutions.

A Bluetooth system is provided, including a first electronic device and a Bluetooth headset. The Bluetooth headset is configured to: receive a first operation of a user, and enable a Bluetooth function of the Bluetooth headset; and send a broadcast message, where the broadcast message includes identification information of the Bluetooth headset. The first electronic device is configured to: display a first prompt box when detecting that signal quality of the broadcast message is greater than a preset value, where the first prompt box includes a first option, and the first option is used to prompt the user to connect the Bluetooth headset; and further display a second prompt box after being connected to the Bluetooth headset, where the second prompt box includes a second option, and the second option is used to prompt the user to set a password for the Bluetooth headset.

After the first electronic device completes password setting for the Bluetooth headset, the Bluetooth headset enables a password verification function. The password verification function means that password verification needs to be performed after the Bluetooth headset establishes a Bluetooth connection to another electronic device, and all functions of the Bluetooth headset are available after verification succeeds, or some functions of the Bluetooth headset are unavailable after verification fails.

Optionally, the second option is used to prompt the user to set, for the Bluetooth headset, a password that is to be input on an electronic device side; the first electronic device is further configured to send a first encryption instruction to the Bluetooth headset in response to an operation performed by the user on the second option, where the first encryption instruction includes a password input by the user; and the Bluetooth headset is further configured to enable the password verification function in response to the first encryption instruction based on the password.

Optionally, the second option is used to prompt the user to set, for the Bluetooth headset, a password that is to be input on the Bluetooth headset side; the first electronic device is further configured to send a second encryption instruction to the Bluetooth headset in response to an operation performed by the user on the second option; and the Bluetooth headset is further configured to collect, in response to the second encryption instruction, a password input by the user, and enable the password verification function based on the password.

Optionally, the first electronic device is further configured to display a third prompt box after completing password setting for the Bluetooth headset, where the third prompt box includes a third option, and the third option is used to prompt the user to set, as a trusted device, an electronic device already paired with the Bluetooth headset. The trusted device does not need password verification after establishing a Bluetooth connection to the Bluetooth headset.

Optionally, the system further includes a second electronic device. The second electronic device is an untrusted device of the Bluetooth headset. The second electronic device is configured to display a fourth prompt box after establishing a Bluetooth connection to the Bluetooth headset, where the fourth prompt box includes a fourth option, and the fourth option is used to prompt the user to perform password verification.

Optionally, the second electronic device is further configured to display owner information when a quantity of password verification failures is greater than a preset value, where the owner information includes an owner contact method.

Optionally, the Bluetooth headset is further configured to play owner information when a quantity of password verification failures is greater than a preset value, where the owner information includes an owner contact method.

Optionally, when the second electronic device has no encryption capability, the Bluetooth headset collects a password input by the user, and performs password verification based on the password input by the user.

Optionally, the password or the verification password is characters or biometric feature information of the user, and the biometric feature information includes fingerprint information, face information, iris information, a bone voiceprint, ear canal feature information, or voice information.

Optionally, the first electronic device is a mobile phone.

This application further provides a Bluetooth system, including a first electronic device and a Bluetooth headset. The first electronic device is configured to receive a second operation of a user, and send a first setting instruction to the Bluetooth headset. The Bluetooth headset is configured to set, as a trusted device in response to the first setting instruction, another electronic device already paired with the Bluetooth headset. After the Bluetooth headset enables a password verification function, the trusted device does not need password verification after establishing a Bluetooth connection to the Bluetooth headset. The password verification function means that password verification needs to be performed after the Bluetooth headset establishes a Bluetooth connection to an electronic device, and all functions of the Bluetooth headset are available after verification succeeds, or some functions of the Bluetooth headset are unavailable after verification fails.

Optionally, the first electronic device is further configured to display a third prompt box after completing password setting for the Bluetooth headset, where the third prompt box includes a third option, and the third option is used to prompt the user to set, as trusted devices, all electronic devices already paired with the Bluetooth headset; and send the first setting instruction to the Bluetooth headset in response to an operation performed by the user on the third option, where the first setting instruction is used to instruct the Bluetooth headset to set all other paired electronic devices as trusted devices.

Optionally, the first electronic device is further configured to: display a trusted device setting interface, where the trusted device setting interface includes a setting option of a second electronic device already paired with the Bluetooth headset, and the setting option is used to set whether the second electronic device is a trusted device; and send the first setting instruction to the Bluetooth headset in response to an operation performed by the user on the setting option. The Bluetooth headset is further configured to set the second electronic device as a trusted device in response to the first setting instruction.

Optionally, the first electronic device is further configured to send a second setting instruction to the Bluetooth headset in response to an operation performed by the user on the setting option. The Bluetooth headset is further configured to set the second electronic device as an untrusted device in response to the second setting instruction. When the Bluetooth headset enables the password verification function, the untrusted device needs password verification after establishing a Bluetooth connection to the Bluetooth headset.

This application further provides a Bluetooth system. The Bluetooth headset is connected to a second electronic device by using Bluetooth. The Bluetooth headset has enabled a password verification function. The second electronic device is an untrusted device of the Bluetooth headset. The password verification function means that password verification needs to be performed after the Bluetooth headset establishes a Bluetooth connection to an untrusted electronic device, and all functions of the Bluetooth headset are available after verification succeeds, or some functions of the Bluetooth headset are unavailable after verification fails.

The Bluetooth headset is configured to: play a password verification prompt speech when the second electronic device has no function of performing password verification on the Bluetooth headset, where the password verification prompt speech is used to prompt a user to input a password on the Bluetooth headset side; collect a verification password input by the user; and when the verification password is correct, determine that password verification succeeds.

Optionally, the verification password is a speech or a bone voiceprint.

Optionally, the Bluetooth headset is further configured to play owner information when detecting that a quantity of password verification failures is greater than a preset value. The owner information includes an owner contact method.

This application further provides a password verification method, applied to a Bluetooth headset. The Bluetooth headset is connected to a second electronic device by using Bluetooth. The Bluetooth headset has enabled a password verification function. The second electronic device is an untrusted device of the Bluetooth headset. The password verification function means that password verification needs to be performed after the Bluetooth headset establishes a Bluetooth connection to an untrusted electronic device, and all functions of the Bluetooth headset are available after verification succeeds, or some functions of the Bluetooth headset are unavailable after verification fails.

The method includes: playing, by the Bluetooth headset, a password verification prompt speech when the second electronic device has no function of performing password verification on the Bluetooth headset, where the password verification prompt speech is used to prompt a user to input a password on the Bluetooth headset side; collecting a verification password input by the user; and when the verification password is correct, determining that password verification succeeds.

Optionally, the password is a speech or biometric feature information of the user, and the biometric feature information includes ear canal feature information or a bone voiceprint.

Optionally, owner information is played when it is detected that a quantity of password verification failures is greater than a preset value, and the owner information includes an owner contact method.

This application further provides a computer-readable storage medium. The computer-readable storage medium stores a computer program. When the computer program is executed by a processor, the foregoing password verification method is implemented.

It should be understood that the computer-readable medium in this embodiment may include at least any entity or apparatus that can carry computer program code to an application server/a terminal device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disc. In some jurisdictions, the computer-readable medium cannot be the electrical carrier signal or the telecommunication signal according to legislation and patent practices.

This application further provides a chip, applied to a Bluetooth headset. The chip includes a memory and a processor. The processor executes a computer program stored in the memory, to control the Bluetooth headset to perform the foregoing password verification method.

The processor mentioned in the embodiments of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general purpose processor may be a microprocessor, or the processor may be any conventional processor or the like.

It should be understood that "first", "second", "third", and various serial numbers in this specification are merely for purpose of differentiation for ease of description, but are not intended to limit the scope of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

Reference to "an embodiment", "some embodiments", or the like described in the specification of this application indicates that one or more embodiments of this application include a specific feature, structure, or characteristic described with reference to the embodiment. Therefore, statements such as "in an embodiment", "in some embodiments", "in some other embodiments", and "in some different embodiments" that appear at different places in this specification do not necessarily mean referring to a same embodiment, but mean "one or more but not all embodiments", unless otherwise specifically emphasized in another manner. The terms "include", "contain", "have", and their variants all mean "include but are not limited to", unless otherwise specifically emphasized in another manner.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A Bluetooth system, comprising a first electronic device and a Bluetooth headset, wherein
the Bluetooth headset is configured to:
receive a first operation of a user, and enable a Bluetooth function of the Bluetooth headset; and
send a broadcast message, wherein the broadcast message comprises identification information of the Bluetooth headset;
the first electronic device is configured to:
display a first prompt box when detecting that signal quality of the broadcast message is greater than a preset value, wherein the first prompt box comprises a first option, and the first option is used to prompt the user to connect the Bluetooth headset; and
further display a second prompt box after being connected to the Bluetooth headset, wherein the second prompt box comprises a second option, and the second option is used to prompt the user to set a password for the Bluetooth headset; and
after the first electronic device completes password setting for the Bluetooth headset, the Bluetooth headset enables a password verification function, the password verification function means that password verification needs to be performed after the Bluetooth headset establishes a Bluetooth connection to another electronic device, and all functions of the Bluetooth headset are available after verification succeeds, or some functions of the Bluetooth headset are unavailable after verification fails.

2. The system according to claim 1, wherein the second option is used to prompt the user to set, for the Bluetooth headset, a password that is to be input on an electronic device side;
the first electronic device is further configured to send a first encryption instruction to the Bluetooth headset in response to an operation performed by the user on the second option, wherein the first encryption instruction comprises a password input by the user; and
the Bluetooth headset is further configured to enable the password verification function in response to the first encryption instruction based on the password.

3. The system according to claim 1, wherein the second option is used to prompt the user to set, for the Bluetooth headset, a password that is to be input on the Bluetooth headset;
the first electronic device is further configured to send a second encryption instruction to the Bluetooth headset in response to an operation performed by the user on the second option; and
the Bluetooth headset is further configured to collect, in response to the second encryption instruction, a password input by the user, and enable the password verification function based on the password.

4. The system according to any one of claims 1 to 3, wherein
the first electronic device is further configured to display a third prompt box after completing password setting for the Bluetooth headset, wherein the third prompt box comprises a third option, and the third option is used to prompt the user to set, as a trusted device, an electronic device already paired with the Bluetooth headset; and
the trusted device does not need password verification after establishing a Bluetooth connection to the Bluetooth headset.

5. The system according to any one of claims 1 to 4, wherein the system further comprises a second electronic device, and the second electronic device is an untrusted device of the Bluetooth headset; and
the second electronic device is configured to display a fourth prompt box after establishing a Bluetooth connection to the Bluetooth headset, the fourth prompt box comprises a fourth option, and the fourth option is used to prompt the user to perform password verification.

6. The system according to claim 5, wherein
the second electronic device is further configured to display owner information when a quantity of password verification failures is greater than a preset value, wherein the owner information comprises an owner contact method.

7. The system according to claim 5, wherein
the Bluetooth headset is further configured to play owner information when a quantity of password verification failures is greater than a preset value, wherein the owner information comprises an owner contact method.

8. The system according to any one of claims 5 to 7, wherein
when the second electronic device has no encryption capability, the Bluetooth headset collects a verification password input by the user, and performs password verification based on the verification password.

9. The system according to claim 8, wherein the password or the verification password is characters or biometric feature information of the user, and the biometric feature information comprises fingerprint information, face information, iris information, a bone voiceprint, ear canal feature information, or voice information.

10. The system according to any one of claims 1 to 9, wherein the first electronic device is a mobile phone.

11. A Bluetooth system, comprising a first electronic device and a Bluetooth headset, wherein
the first electronic device is configured to receive a second operation of a user, and send a first setting instruction to the Bluetooth headset;
the Bluetooth headset is configured to set, as a trusted device in response to the first setting instruction, another electronic device already paired with the Bluetooth headset; and
after the Bluetooth headset enables a password verification function, the trusted device does not need password verification after establishing a Bluetooth connection to the Bluetooth headset, the password verification function means that password verification needs to be performed after the Bluetooth headset establishes a Bluetooth connection to an electronic device, and all functions of the Bluetooth headset are available after verification succeeds, or some functions of the Bluetooth headset are unavailable after verification fails.

12. The Bluetooth system according to claim 11, wherein the first electronic device is further configured to:
display a third prompt box after completing password setting for the Bluetooth headset, wherein the third prompt box comprises a third option, and the third option is used to prompt the user to set, as trusted devices, all electronic devices already paired with the Bluetooth headset; and
send the first setting instruction to the Bluetooth headset in response to an operation performed by the user on the third option, wherein the first setting instruction is used to instruct the Bluetooth headset to set all other paired electronic devices as trusted devices.

13. The Bluetooth system according to claim 11 or 12, wherein
the first electronic device is further configured to:
display a trusted device setting interface, wherein the trusted device setting interface comprises a setting option of a second electronic device already paired with the Bluetooth headset, and the setting option is used to set whether the second electronic device is a trusted device; and
send the first setting instruction to the Bluetooth headset in response to an operation performed by the user on the setting option; and
the Bluetooth headset is further configured to set the second electronic device as a trusted device in response to the first setting instruction.

14. The system according to claim 13, wherein
the first electronic device is further configured to send a second setting instruction to the Bluetooth headset in response to an operation performed by the user on the setting option; and
the Bluetooth headset is further configured to set the second electronic device as an untrusted device in response to the second setting instruction, and when the Bluetooth headset enables the password verification function, the untrusted device needs password verification after establishing a Bluetooth connection to the Bluetooth headset.

15. A Bluetooth headset, wherein the Bluetooth headset is connected to a second electronic device by using Bluetooth, the Bluetooth headset has enabled a password verification function, and the second electronic device is an untrusted device of the Bluetooth headset, the password verification function means that password verification needs to be performed after the Bluetooth headset establishes a Bluetooth connection to an untrusted electronic device, and all functions of the Bluetooth headset are available after verification succeeds, or some functions of the Bluetooth headset are unavailable after verification fails; and
the Bluetooth headset is configured to:
play a password verification prompt speech when the second electronic device has no function of performing password verification on the Bluetooth headset, wherein the password verification prompt speech is used to prompt a user to input a password on the Bluetooth headset side;
collect a verification password input by the user; and
when the verification password is correct, confirm that password verification succeeds.

16. The Bluetooth headset according to claim 15, wherein the verification password is a speech or a bone voiceprint.

17. The Bluetooth headset according to claim 15 or 16, wherein the Bluetooth headset is further configured to:
play owner information when detecting that a quantity of password verification failures is greater than a preset value, wherein the owner information comprises an owner contact method.

18. A password verification method, applied to a Bluetooth headset, wherein the Bluetooth headset is connected to a second electronic device by using Bluetooth, the Bluetooth headset has enabled a password verification function, and the second electronic device is an untrusted device of the Bluetooth headset; the password verification function means that password verification needs to be performed after the Bluetooth headset establishes a Bluetooth connection to an untrusted electronic device, and all functions of the Bluetooth headset are available after verification succeeds, or some functions of the Bluetooth headset are unavailable after verification fails; and
the method comprises:
playing, by the Bluetooth headset, a password verification prompt speech when the second electronic device has no function of performing password verification on the Bluetooth headset, wherein the password verification prompt speech is used to prompt a user to input a password on the Bluetooth headset side;
collecting a verification password input by the user; and
when the verification password is correct, confirming that password verification succeeds.

19. The method according to claim 18, wherein the verification password is a speech or biometric feature information of the user, and the biometric feature information comprises ear canal feature information or a bone voiceprint.

20. The method according to claim 18 or 19, further comprising: playing owner information when detecting that a quantity of password verification failures is greater than a preset value, wherein the owner information comprises an owner contact method.

21. A computer-readable storage medium, wherein the computer-readable storage medium stores a computer program, and when the computer program is executed by a processor, the password verification method according to any one of claims 18 to 20 is implemented.

22. A chip, applied to a Bluetooth headset, wherein the chip comprises a memory and a processor, and the processor executes a computer program stored in the memory, to control the Bluetooth headset to perform the password verification method according to any one of claims 18 to 20.
